(19) Europäisches Patentamt
European Patent Office
Office européen des brevets

(11) **EP 3 516 269 B1**

(12) **EUROPÄISCHE PATENTSCHRIFT**

(45) Veröffentlichungstag und Bekanntmachung des Hinweises auf die Patenterteilung:
**21.09.2022 Patentblatt 2022/38**

(21) Anmeldenummer: **17780052.1**

(22) Anmeldetag: **26.09.2017**

(51) Internationale Patentklassifikation (IPC):
**F16H 61/02** *(2006.01)* **F16H 61/688** *(2006.01)*
**F16H 61/00** *(2006.01)*

(52) Gemeinsame Patentklassifikation (CPC):
**F16H 61/688; F16H 61/0025; F16H 61/0206;**
F16H 2061/0037

(86) Internationale Anmeldenummer:
**PCT/EP2017/074382**

(87) Internationale Veröffentlichungsnummer:
**WO 2018/055204 (29.03.2018 Gazette 2018/13)**

(54) **HYDRAULIKSCHALTUNG EINES DOPPELKUPPLUNGSGETRIEBES, INSBESONDERE MIT EINER KUPPLUNGSSTEUERUNG, UND NOTREAKTIONSVERFAHREN**

HYDRAULIC CIRCUIT OF A DOUBLE CLUTCH TRANSMISSION, IN PARTICULAR HAVING A CLUTCH CONTROLLER, AND EMERGENCY REACTION METHOD

CIRCUIT HYDRAULIQUE D'UNE TRANSMISSION À EMBRAYAGE DOUBLE, EN PARTICULIER COMPRENANT UNE COMMANDE D'EMBRAYAGE, ET PROCÉDÉ DE RÉACTION D'URGENCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.09.2016 DE 202016105346 U**

(43) Veröffentlichungstag der Anmeldung:
**31.07.2019 Patentblatt 2019/31**

(73) Patentinhaber: **hofer powertrain innovation GmbH 72622 Nürtingen (DE)**

(72) Erfinder:
• **EBINGER, Günter**
**76684 Östringen (DE)**
• **WILD, Andreas**
**72669 Unterensingen (DE)**
• **KEHRER, Marcus**
**72622 Nürtingen (DE)**
• **UNRUH, Swen**
**72581 Dettingen (DE)**

(74) Vertreter: **Cremer & Cremer Patentanwälte St.-Barbara-Straße 16 89077 Ulm (DE)**

(56) Entgegenhaltungen:
DE-A1-102009 005 753 DE-A1-102010 037 243
DE-A1-102011 100 799 DE-A1-102013 219 386

## Beschreibung

Die vorliegende Erfindung behandelt eine Hydraulikschaltung, die Teil eines Doppelkupplungsgetriebes ist, insbesondere als Pkw-Doppelkupplungsgetriebe, durch die Kupplungsaktuatoren betätigt werden können. Weiterhin behandelt die vorliegende Erfindung ein Verfahren, wie in Notfallsituationen eines Doppelkupplungsgetriebes kontrollierte Zustände des Getriebes erreicht werden können.

Mit anderen Worten, die vorliegende Erfindung behandelt eine Hydraulikschaltung eines Doppelkupplungsgetriebes nach dem Oberbegriff des Anspruchs 1. Die vorliegende Erfindung behandelt zudem ein Verfahren nach dem Oberbegriff des Anspruchs 10.

## Technisches Gebiet

Mehrkupplungsgetriebe wie Doppelkupplungsgetriebe, insbesondere für Kraftfahrzeuge, erfreuen sich zunehmender Beliebtheit, weil sie die Möglichkeit bieten, dass mithilfe einer intelligenten Steuerung eine stets vorhandene Option des Kupplungsüberblendens bei sämtlichen Gangwechseln durchführbar ist (zugkraftunterbrechungsfreie Gangwechsel). Für die notwendigen Energien und Kräfte beim Umschalten des Kraftflusses von einer Kupplung auf die andere durch Öffnen der einen Kupplung und Schließen der anderen Kupplung können hydraulische Steuerkreise eingesetzt werden, die z. B. in Steuerplatten aufgebaut sein können. Eine Steuerplatte umfasst eine Anzahl Ventile, durch die das, ggf. unter Druck stehende, Hydraulikmittel, also unter Einstellung von Drücken und/oder Einstellung von Volumenflüssen, an Aktuatoren wie Linearzylinder als Kupplungsbetätiger weitergeleitet werden kann.

Neben einem zuverlässigen Überblenden gibt es zahlreiche weitere Aspekte und Anforderungen, die durch die Ventilanordnungen und das Arrangement der Hydraulikkreise erfüllt sein sollen, wie z. B. Wünsche nach Sicherheit vor unkontrollierten Momentenflüssen und/oder Beibehaltung von Teilfunktionalitäten, obwohl einzelne Bereiche oder Komponenten des Doppelkupplungsgetriebes nicht einwandfrei betriebsbereit sind.

In diesem Zusammenhang macht es Sinn, neben einem Regelventil für das Schließen und Öffnen wenigstens einer Kupplung wenigstens ein weiteres Ventil vorzusehen, das entweder vorgeschaltet oder nachgeschaltet weitere Aufgaben im dem Hydraulikkreis wahrnimmt, wobei zu dem Hydraulikkreis ein Aktuator für wenigstens eine Kupplung gehört.

## Stand der Technik

In vielen Dokumenten sind bisher schon hydraulische Schaltungen offenbart worden, die zur Ansteuerung von Kupplungen eines Doppelkupplungsgetriebes entworfen worden sind. Viele der Schaltungen operieren mit mehreren Ventilen in einem Strang, der mittelbar oder unmittelbar in einem Aktuator einer Kupplung ausmündet.

So zeigt z. B. die DE 101 34 115 A1 (Anmelderin: Volkswagen AG; Anmeldetag: 13.07.2001) eine Doppelkupplungshydraulik mit einem Speicher-Lade-System, bei dem jeweils der Aktuator in einem Kupplungsstrang zusammen mit dem für das dazugehörige Teilgetriebe zuständigen Multiplexerventilabschnitt von einem eigenen Vorsteuerventil aktivierbar bzw. gegen Tank entlastbar ist. D. h., mithilfe der beiden Vorsteuerventile kann das dazugehörige Teilgetriebe sowohl in Bezug auf die Kupplung als auch in Bezug auf die Schaltschienen bzw. Gangsteller totgesetzt werden.

Die DE 10 2005 015 911 A1 (Anmelderin: Volkswagen AG; Anmeldetag: 07.04.2005) wirkt noch sehr auf der konzeptionellen Ebene verhaftet, denn es werden nur Blöcke gezeigt, die anstelle von hydraulischen Normungszeichen ein Prinzip einer Doppelkupplungsschaltung zeigen sollen. In dem gezeigten Schaltungsprinzip gibt es vor einem Druckventil für eine Kupplung ein Sicherheitsventil, ein Sicherheitsvorsteuerventil und ein Vorsteuerventil.

Die DE 10 2011 100 857 A1 (Anmelderin: Audi AG; Anmeldetag: 06.05.2011) unterbreitet den Vorschlag, einem Druckregelventil zur Steuerung einer Kupplung eines Antriebsstrangs mit einem Doppelkupplungsgetriebe ein Ventil vorzuschalten, das nicht nur den Druckregler bedient, sondern noch zusätzlich eine Parksperre.

Ähnlich zu der DE 101 34 115 A1 operiert eine Schaltung gem. der Figur 1 der WO 2011/015 182 A2 (Anmelderin: Schaeffler Technologies GmbH & Co. KG; Prioritätstage: 06.08.2009, 26.11.2009) mit einem ersten Hydraulikbereich für das erste Teilgetriebe und einem zweiten Hydraulikbereich für das zweite Teilgetriebe.

Die DE 10 2007 023 072 A1 (Anmelderin: Volkswagen AG; Anmeldetag: 16.05.2007) schlägt ebenfalls vor, die hydraulische Steuerung eines gesamten Teilgetriebes über ein Ventil, in jener Schaltung der DE 10 2007 023 072 A1 über ein Teilgetriebedruckregelventil, zu führen. Ähnlich zeigt auch die DE 10 2013 224 244 A1 (Anmelderin: Volkswagen AG; Offenlegungstag: 26.06.2014) Teilgetriebehydraulikkreise, wobei aber abströmseitig zweier Vorsteuerventile eine gemeinsame Teilsystemdruckleitung beide Teilgetriebehydraulikkreise wieder zu einem verbindet. In der WO 2004/097 265 A1 (Anmelderin: Getrag Getriebe und Zahnradfabrik Hermann Hagenmeyer GmbH & CIE KG; Offenlegungstag: 11.11.2004) wird das aus den zuvor zitierten Druckschriften bekannte Teilgetriebekonzept als Anordnung hinter Sicherheitsventile deklariert.

Eine etwas andere Konfiguration im Vergleich mit der DE 10 2007 023 072 A1 schlägt die DE 10 2011 100 799 A1 (Anmelderin: Audi AG; Offenlegungstag: 08.11.2012) in ihrer Figur 1 vor. Eine Leitung führt in einen Teilgetriebehydraulikkreis, zu dem eine erste Kupplung gehört. Aus dieser Leitung wird über Abzweigungen und ein Druckregelventil eine Versorgung für Gangstellerzylinder bezogen.

Die US 7 695 388 B2 (Inhaberin: Hoerbiger Antriebstechnik GmbH; Piroritätstag: 25.04.2005) unterteilt die hydraulischen Stränge in der Steuerung einer Doppelkupplung im Vergleich mit der DE 101 34 115 A1 weitergehend und schlägt vor, jeweils ein Füllventil und ein Ablassventil in Serie vor einem Aktuator eines Kupplungspakets einer Doppelkupplung anzuordnen. In einer solchen Konstellation kann die Situation eintreten, dass das Füllventil noch arbeitet, weil das Steuergerät glaubt, über das Füllventil etwas ausrichten zu können, während das Ablassventil schon längst in die Vorzugsstellung des Ablassens gegangen ist.

EP 1 450 076 A2 (Anmelderin: BorgWarner Inc.; Prioritätstage: 21.02.2003, 26.11.2003) zeigt in Figur 2 eine Anordnung eines ersten Ventils und eines zweiten Ventils vor einer Kupplung, bei der das zweite Ventil ein Proportionaldruckregelventil sein soll, während das erste, vorgeschaltete Ventil ein pilotgesteuertes Aktivierungsventil ist.

Gewissermaßen, sofern mehrere Besonderheiten in vereinfachender Weise vernachlässigt werden, können die US 7 695 388 B2 und die EP 1 450 076 A2 als die beiden zu einander spiegelbildlichen Variationen eines Proportionalventils und eines Aktivierungs- oder Ablassventils angesehen werden.

Die DE 10 2010 032 657 A1 (Anmelderin: Schaeffler Technologies GmbH & Co. KG; Prioritätstage: 06.08.2009, 26.11.2009) wiederum dreht das aus den Druckschriften US 7 695 388 B2 und EP 1 450 076 A2 bekannte Prinzip der Anordnung zweier Ventile in Serie vor einem Aktuator dadurch um, dass die Kupplungsansteuerung vor einem Sperrschieber, über den Gangstellerbaugruppen aktiviert und - in einem zweiten Zustand - drucklos gesetzt werden können, aus dem Strang zu den Gangstellerbaugruppen abzweigt.

Die DE 10 2010 037 243 A1 (Anmelderin: hofer mechatronik GmbH; Anmeldetag: 31.08.2010) zeigt im Vergleich mit der US 7 695 388 B2 und der EP 1 450 076 A2 eine Alternative für zwei hydraulische Kupplungsstränge. Es wird in jedem Strang eine Trennebene vor dem jeweiligen Proportional-Regelventil eingezogen. Die in der DE 10 2010 037 243 A1 angesprochene Realisierung der Hydraulikkreise mit einem 4/2-Ventil als Ventil für die Schaffung einer Trennebene wird in der EP 2 410 212 B1 (Anmelderin: hofer mechatronik GmbH; Prioritätstage: 21.07.2010, 31.08.2010) als Gegenstand abgedeckt.

In der DE 10 2009 005 753 A1 (Anmelderin: Daimler AG; Offenlegungstag: 29.07.2010) wird eine hydraulische Steuerung für ein automatisiertes Kraftfahrzeug-Getriebe behandelt. Ein Schmierdruckschieber dient zur Einstellung eines Schmierdrucks im Schmier-Kühlsystem. Eine Hauptpumpe und eine steuerbare Zusatzpumpe sollen gemeinsam die Ölversorgung der hydraulischen Steuerung sicherstellen. Es ist vorgesehen, dass die Zusatzpumpe in einen Steuerkanal eines Schmierdruckschiebers fördert, um so einen Schmier-Steuerdruck aufzubauen. Durch Ansteuerung eines Kühlungsschiebers kann eine Verbindung zwischen dem Steuerkanal und der Zusatzpumpe geschaltet werden. Die Hauptpumpe liefert den Ölvolumenstrom für das Schmier-Kühlsystem. Ein zusätzlicher Ölvolumenstrom kann über einen Zusatzölkanal von der Zusatzpumpe in das Schmier-Kühlsystem fließen, wobei Zusatzölkanal und Steuerkanal zumindest teilweise einander entsprechen sollen.

Die DE 10 2013 219 386 A1 (Anmelderin: Volkswagen AG; Offenlegungstag: 26.03.2015) beschäftigt sich mit einer hydraulischen Steuerungsvorrichtung eines Doppelkupplungsgetriebes, die mindestens ein Druckregelventil mit mehreren Gangstellerventilen und mit zwei Kupplungsstellerventilen aufweist. Die Gangstellerventile sollen über das Druckregelventil versorgbar sein. Bei einem Ausfall des Druckregelventils soll eine Versorgung der Gangstellerventile und mindestens eines der Kupplungsstellerventile weiterhin gegeben sein. Hierfür sollen zwei Sicherheitsventile vorhanden sein, von denen eines in einer Überbrückungs-Ventilstellung das Druckregelventil mittels einer Überbrückungsleitung überbrückt. Beide Sicherheitsventile sowie das Druckregelventil sollen auch mit einer Systemdruckleitung, mit einem Ölsumpf sowie mit einem der beiden Kupplungsstellerventile in Verbindung stehen.

Abgewandt von den konkreten technischen Lösungen und Lösungsideen der zuvor vorgestellten Druckschriften versuchen Normen wie die ISO 26262 Ansätze und Methoden vorzugeben, wie eine funktionale Sicherheit in der Entwicklungsphase in die Kraftfahrzeugkomponente "hineinentwickelt werden kann". Eine umfängliche Diskussion der ISO 26262 lässt sich der Dissertation "Funktionale Sicherheit nach ISO 26262 in der Konzeptphase der Entwicklung von Elektrik/Elektronik Architekturen von Fahrzeugen" von Martin Hillenbrand, eingereicht am Karlsruher Institut für Technologie, entnehmen.

Die zuvor aufgeführten Druckschriften, die mit ihren Benennungen und Würdigungen als vollumfänglich in vorliegende Erfindungsbeschreibung in dem Umfang inkludiert gelten sollen, in dem sie nicht im Widerspruch zu nachfolgender Erfindungsbeschreibung stehen, um übliche Begriffe, Systemansätze und Schaltungsausgestaltungen von Kfz-(Getriebe-)Hydrauliken an Stelle einer einleitenden Definitionsbildung vorzustellen, sind also auch darauf zu untersuchen, inwieweit sie Teil eines Antriebsstrangs sein können, der ISO 26262-konform gestaltet ist.

## Aufgabenstellung

Die Forderung nach integrierter Sicherheit, in die Komponenten eines Kraftfahrzeugs hineinkonstruiert, wird immer vehementer artikuliert. Ein Abbild dieser Forderungen ist die ISO 26262, die eine funktionale Sicherheit eines, insbesondere elektrisch angetriebenen, Kraftfahrzeugsystems fordert. Hierbei sind Fehlverhalten und Ausfallwahrscheinlichkeiten schon während der Konstruktionsphase abzuschätzen. Ein Überprüfungsansatz zu den Ausfallwahrscheinlichkeiten und zu den Gefahrenpotentialen eines Fehlverhaltens kann z. B. nach dem ASIL-Konzept erfolgen. Insbesondere Doppelkupplungsgetriebe von leistungsstarken Personenkraftfahrzeugen sollten so ausgelegt sein, dass sie recht hohe ASIL-Level erfüllen können, wie z. B. ASIL C oder sogar ASIL D.

## Erfindungsbeschreibung

Die erfindungsgemäße Aufgabe wird durch eine Hydraulikschaltung eines Doppelkupplungsgetriebe nach Anspruch 1 gelöst, ein geeignetes Betriebsverfahren, insbesondere Notreaktionsverfahren, lässt sich Anspruch 10 entnehmen. Vorteilhafte Weiterbildungen lassen sich den abhängigen Ansprüchen entnehmen.

In einem Doppelkupplungsgetriebe sind u. a. seine Kupplungen anzusteuern. Mindestens eine erste und eine zweite Kupplung sind ansteuerbar ausgestaltet. Dazu kann eine Hydraulikschaltung des Doppelkupplungsgetriebes genutzt werden. Das Doppelkupplungsgetriebe ist insbesondere für den Einsatz in Pkws (Personen-Kraft-Wagen), also als Pkw-Getriebe gestaltet, z. B. aufgrund der zu übertragenden Drehmomente, des Bauraums und der Abmessungen. Die Hydraulikschaltung ist mit Aktuatoren ausgestattet, die jeweils eine an den jeweiligen Aktuator angeschlossene Kupplung betätigen können (z. B. von Kupplungen des Typs "normally open" - im unbetätigten Zustand "offen" bzw. in einer kraftflussunterbrechenden Stellung). Es gibt einen Aktuator für die erste Kupplung. Es gibt einen Aktuator für die zweite Kupplung.

Besonders vorteilhaft ist es, dass jede der Kupplungen über eine Druckregelung angesteuert werden kann. In einer solchen Ausgestaltung ist es möglich, dass der Betätigungsgrad der gesteuerten Kupplung einem Druck entspricht, der in dem Kupplungsbetätiger, dem Kupplungsaktuator vorherrscht. Wird die Kupplung über eine federartige Vorspannung in ihrem Normalzustand, z. B. im Zustand "normally open", gehalten, kann mittels der Druckregelung ein Schlupfgrad der Kupplung eingestellt werden. In diesem Fall wirkt der Druck entgegen der Feder der Vorspannung.

Für die Einstellung des ersten Kupplungsaktuators ist in dem Strang zu dem Kupplungsaktuator ein erstes proportionales Druckregelventil vorhanden. Das Proportionaldruckregelventil (bzw. Proportional-Druck-Regelventil) ist strömungsmäßig vor dem ersten Kupplungsaktuator zwischen Druckquelle und dem Verbraucher "Kupplungsaktuator" angeordnet. Mithilfe von einem proportionalen Druckregelventil, das strömungsmäßig vor dem zweiten Kupplungsaktuator angeordnet ist, ist eine Steuerung der zweiten Kupplung durchführbar.

Gem. einer Betrachtungsweise gibt es einen ersten Hydraulikzweig. Es gibt einen zweiten Hydraulikzweig. Jeder Hydraulikzweig kann im steuerungstechnischen Sinne als autark bezeichnet werden. Jedes der wenigstens zwei Druckregelventile sitzt in einem eigenständigen Hydraulikzweig, dem so genannten Kupplungszweig. Zumindest zwei der Hydraulikzweige münden in ihren jeweiligen Aktuator aus. Dieser Aktuator ist der Kupplungsaktuator.

Zu den Hydraulikzweigen gehört wenigstens eine Bypass-Leitung. Idealerweise hat der erste Hydraulikzweig eine erste Bypass-Leitung und der zweite Hydraulikzweig eine zweite Bypass-Leitung. Die jeweilige Bypass-Leitung führt abschnittsweise parallel zu einer Hauptleitung des Hydraulikzweigs. Die erste Bypass-Leitung führt um das erste Druckregelventil herum. Die zweite Bypass-Leitung führt um das zweite Druckregelventil herum. Die Bypass-Leitungen sind Parallelleitungen zu den Druckregelventilen. In einer günstigen Ausgestaltung hat jedes Druckregelventil seine eigene Bypass-Leitung.

Zu dem Hydraulikzweigen zu den Kupplungsaktuatoren gehört wenigstens ein Sperrventil. Das Sperrventil, das auch als "Cut-Off-Ventil" bezeichnet werden kann, sollte mindestens zwei (eindeutige) Zustände anbieten (Durchflussstellung, die in mehrere Varianten unterteilt sein kann, und Ablassstellung). Das Sperrventil ist in einer möglichen Ausgestaltung ein Zweizustandssperrventil. In einer weiteren Ausgestaltung ist es aber auch möglich, ein mehr als zwei Zustände umfassendes Sperrventil als "Cut-Off-Ventil" den Druckregelventilen vorzuschalten. Das Sperrventil sitzt strömungsmäßig vor den Druckregelventilen. Das wenigstens eine Sperrventil ist, von der Hydraulikquelle aus gesehen, vor dem nachfolgenden Druckregelventil. Wenigstens ein Sperrventil ist in dem Bereich der Hydraulikschaltung vorhanden, der für die Kupplungsansteuerung zuständig ist. In einer Ausgestaltung ist es möglich, ein einfaches Wegeventil, ein so genanntes Schwarz-Weiß-Ventil, als "Cut-Off-Ventil" zu verwenden.

In einer Ausgestaltung ist ein Sperrventil vor den nachfolgenden Druckregelventilen vorgesetzt. In diesem Fall gibt es ein gemeinsames Sperrventil für z. B. zwei Druckregelventile. In einer alternativen Ausgestaltung ist jedem Druckregelventil ein eigenes Sperrventil vorgeschaltet. In diesem Fall bildet sich eine Baugruppe aus Sperrventil und Druckregelventil (ebenfalls betrachtet von der Druckquelle aus kommend).

Zumindest eines der beiden Druckregelventile ist als ein Dreizustandsventil ausgestaltet. Das Druckregelventil, das ein Proportional-Druckregelventil ist, hat wenigstens drei Zustände, die durch eine Ansteuerung eingenommen werden können. Insbesondere bestimmen sich die drei Zustände aus einem Kräftegleichgewicht zwischen einer extern aufgebrachten Kolbenkraft und einem hydraulischen Druck auf den Kolben. Von den drei Zuständen, die das Druckregelventil einnehmen kann, ist ein Zustand ein hydraulischer Sperrzustand. Befindet sich der Kolben in einer Stellung, durch die das Ventil hydraulisch gesperrt wird, kann kein Hydraulikmittel von der Versorgungsseite auf die Verbraucherseite und umgekehrt gelangen.

Ein Port für den Arbeitsanschluss des Druckregelventils ist mit einem ersten Durchmesser ausgestattet. Eine Bypass-Leitung hat einen zweiten Durchmesser.

In wenigstens einer der Bypass-Leitungen ist ein Flussregelventil integriert. Das Flussregelventil kann den Fluss durch die Bypass-Leitung steuern. Z. B. ist ein Sperr- oder Rückschlagsventil ein solches Flussregelventil. Das Flussregelventil erlaubt den Fluss durch das Ventil in einem Zustand. In einem anderen, z. B. zweiten Zustand, befindet sich das Flussregelventil in einer Sperrstellung. Ob Freistellung oder Sperrstellung kann sich z. B. druckabhängig einstellen. Ein mögliches Rückschlagsventil ist ein Ventil, das im Falle einer Druckumkehr von der Verbraucherseite auf die Versorgungsseite zu einer Freigabe des Ventils führt. Bei einem Überdruck oder bei einer ausreichenden Druckdifferenz, auch Druckgefälle genannt, in einer Zuleitung ist die Bypass-Leitung in Durchflussrichtung freischaltbar. Die Bypass-Leitung ist druckdifferenzgesteuert. Liegt eine ausreichende Druckdifferenz an, so kann das Ventil, das in der Bypass-Leitung integriert ist, durchschalten. Die Zuleitung erstreckt sich vorteilhafterweise von dem Druckregelventil zu dem ihm zugeordneten Kupplungsaktuator. Bei einem Vorhandensein ausgewählter Druckverhältnisse, z. B. einem höheren Druck vor dem Kupplungsaktuator als vor der Versorgungsseite des Druckregelventils, ist das Flussregelventil in Durchflussrichtung freischaltbar.

Vorteilhaft für Antriebsstränge mit einem Doppelkupplungsgetriebe ist es, wenn die hydraulische Ansteuerschaltung für das Doppelkupplungsgetriebe, wobei die Ansteuerschaltung Teil des Doppelkupplungsgetriebe sein kann, ein inkorporiertes Verfahren anbietet, das im Fall einer ungewöhnlichen Situation oder sonstigen Notsituation abgearbeitet werden kann bzw. ablaufen kann.

Bietet die hydraulische Schaltung des Doppelkupplungsgetriebes Funktionen an, die genutzt werden können, um ein Notreaktionsverfahren abzulaufen, so ist eine weitere Ebene, neben der aus Sensoren und programmierter Steuerungslogik existierenden, darüber liegenden Ebene, geschaffen, durch die Sicherheiten im Antriebstrang eines Kraftfahrzeugs erreicht werden können. Solche Notreaktionsverfahren können in einem zuvor beschriebenen Doppelkupplungsgetriebe implementiert sein.

Der Kraftfluss über das Doppelkupplungsgetriebe sollte unterbrechbar sein. In ausgewählten Situationen ist es günstig, wenn das Getriebe keinerlei Kraftfluss mehr von der Antriebs- zur Abtriebsseite zulässt. Im Rahmen des Notreaktionsverfahrens wird eine Kraftflussunterbrechung hergestellt. Die Kraftflussunterbrechung erfolgt durch eine Entlastung eines Arbeitsraums eines Linearzylinders, der ein Kupplungsaktuator ist. Das Hydraulikmittel kann aus dem Arbeitsraum des Linearzylinders austreten und vorteilhafterweise in den Sumpf abfließen.

Ein Sperrventil kann aufgrund einer aktiven Ansteuerung in einen Zustand versetzt werden. Der Zustand ist eine Ablaufstellung. In der Ablaufstellung kann Hydraulikmittel aus dem Hydraulikzweig abgelassen werden. Das Ventil wird in die Ablaufstellung gefahren bzw. der Kolben des Ventils wird verfahren.

Durch die Einnahme der Ablaufstellung gelangt ein in einer Bypass-Leitung vorhandenes Flussregelventil ebenfalls in eine Durchflussstellung. Das Flussregelventil befindet sich in einer parallel angeordneten Bypass-Leitung. Die Bypass-Leitung führt um ein Druckregelventil herum. Unabhängig von der Stellung des Druckregelventils ist es möglich, dass das Flussregelventil in der Bypass-Leitung in Durchflussstellung gerät.

In einer besonders vorteilhaften Ausgestaltung gibt es vorzugsweise zwei Flussregelventile. Jedes der beiden Flussregelventile ist parallel zu einem ihm zugeordneten Proportional-Druckregelventil in umgekehrter Richtung (in Bezug auf die Hauptflussrichtung zu dem Verbraucher) eingebaut vorhanden. Jedes Flussregelventil hat eine eigene Bypass-Leitung. Die Bypass-Leitung führt um jeweils ein einziges Druckregelventil herum. Das Flussregelventil kann in eine Durchflussstellung gezogen werden.

Werden zusätzlich die Leitungsquerschnitte für einen Hydraulikfluss über das Ventil in der Bypass-Leitung größer und damit für eine bevorzugte Durchströmung ausgelegt, kann ein Staudruck über den Arbeitsport des Druckregelventils verringert werden. Eine schnellere Entleerung ist möglich. Ist auch ein Befüllen über diesen Weg vorgesehen, so können die Leitungen jenseits der Ventile auch schneller befüllt werden. Der Strömungsquerschnitt in der Bypass-Leitung und über das Ventil in der Bypass-Leitung ist insbesondere größer als über das Proportional-Druckregelventil, insbesondere über seine Ports.

Nachfolgend werden vorteilhafte Ausgestaltungen und Weiterbildungen dargelegt, die für sich gesehen, sowohl einzeln aus auch in Kombination, ebenfalls erfinderische Aspekte offenbaren können.

Als Kupplungsaktuatoren eignen sich insbesondere Aktuatoren mit Linearkolben, bei denen eine Kolbenstange durch einen Kolben bewegt wird. Der Kolben kann beidseitig oder - in einer alternativen Ausgestaltung - auch nur einseitig hydraulisch eingespannt sein. Besonders vorteilhaft ist es, wenn der Kolben auf einer Feder ruht bzw. an einem Federende anliegt. Reicht die Federspannung aus, so kann der Kolben des Aktuators in eine Gleichgewichtslage zwischen hydraulischem Druck auf der einen Seite und Federvorspannung auf der anderen Seite des beidseitig mit Kräften beaufschlagten Kolbens gebracht werden. Die Federvorspannung befindet sich in einem durch ein Kräftegleichgewicht definierten Verhältnis zu dem Hydraulikdruck, der z. B. in dem Aktuator herrscht. Aus Gründen der Bauteilreduktion reicht es in vielen Anwendungsfällen, wenn eine (einzige) Feder in einem Bewegungsraum des Kolbens angeordnet ist. Von einer Seite wird der (jeweilige) Kupplungsaktuator eingespannt bzw. vorgespannt. In einer Ausgestaltung gibt es einen ersten und einen zweiten Kupplungsaktuator, wobei beide Kupplungsaktuatoren in ihrer Ruhestellung eine Vorzugsstellung aufgrund einer Federkraft einnehmen. Daneben können auch noch weitere Kupplungsaktuatoren vorhanden sein, wie z. B. ein dritter Kupplungsaktuator.

Die Durchmesser der Leitungen eines Hydraulikzweigs sind auf die Öffnungen der vorhandenen Ventile abgestimmt. Es kann von einer Viskosität eines Getriebeöls ausgegangen werden, wenn ein Temperaturbereich, in dem sich das Hydraulikmittel "Getriebeöl" befindet, bekannt ist. Wird eine kinematische Viskosität bei 100 °C zwischen 4,1 $mm^2$/s und 32 $mm^2$/s angenommen, wobei vorzugsweise ein Getriebeöl verwendet wird, das eine kinematische Viskosität zwischen 5 $mm^2$/s und 20 $mm^2$/s bei 100 °C hat, so lässt sich die Ablaufzeit anhand der Querschnitte (z. B. im Bereich von 10 $mm^2$ und 20 $mm^2$) der Leitungen und der Ventilbohrungen (i. d. R. kleiner als die Querschnitte der Leitungen) bestimmen. Das hydraulische Verhalten der Leitungen und der Ventilbohrungen, insbesondere im Hinblick auf das Fließverhalten, kann mit Hilfe der
Blendengleichung

$$Q_{Blende} = \alpha_K * A_0 * \sqrt{\frac{2 * \Delta p}{\rho}},$$

wobei $\alpha_K$ eine Durchflusszahl (wie ein Proportionalitätsfaktor, z. B. 0,8), $A_0$ eine Blendenfläche in $mm^2$, $\Delta p$ eine Druckdifferenz in bar und $\rho$ eine übliche Dichte ist, und der
Drosselgleichung

$$Q_{Drossel} = \frac{\pi * r^4}{8 * \eta * l} * (p_1 - p_2),$$

wobei r ein Radius der Leitung in mm, l eine Länge der Leitung in mm und $\eta$ ein Wert für die Viskosität, gebildet aus kinematischer Viskosität und Ölviskosität, ist und ein Druckgefälle zu berechnen ist,

-    jeweils in einer ersten Näherung - festgelegt bzw. abgeschätzt werden.

Innerhalb von 200 ms, d. h., in einer Zeit, die kürzer als 200 ms ist, kann das Hydraulikmittel über die Bypass-Leitung aus dem Hydraulikzweig abströmseitig hinter dem Druckregelventil ausgebracht werden. Hierdurch geht die angesteuerte Kupplung in die geöffnete Stellung. Es findet eine Kraftflussunterbrechung statt, die insbesondere innerhalb eines Zeitraums von nicht mehr als 200 ms abgeschlossen ist. Durch eine Auslegung der Bypass-Leitung, sodass ihr Durchmesser faktormäßig, idealerweise selbst an der engsten Stelle, in einem Wertebereich von 1,5 bis 10 (für den Faktor) im Vergleich zu den Drosselstellen über das Proportionaldruckregelventil liegt, können Abflusszeiten eingestellt werden. In einer Auslegung wird die Bypass-Leitung derart dimensioniert, dass die Leitung einen Durchmesser mit einem Faktor von mehr als 5 hat (im Vergleich mit der Leitungsstrecke über das Proportional-Druckregel-Ventil). In einer für ein beschleunigtes Ausströmen noch günstigeren Ausgestaltung liegt der Faktor bei 10. Werden die Radien oder die Durchmesser zwischen der Leitung über das Proportional-Druckregelventil und der Leitung durch die Bypass-Leitung miteinander verglichen, so ist der Radius (alternativ der Durchmesser) für die Bypass-Leitung zehnmal so groß im Vergleich mit der Leitung über das Proportional-Druckregelventil. Sollten nur begrenzte Platzverhältnisse bei der Auslegung einer Steuerplatte vorhanden sein, so ist es z. B. möglich, einen Leitungsquerschnitt für die Bypass-Leitung in einer Größenordnung um 20 $mm^2$ (+/-5 $mm^2$) zu gestalten. Die Bypass-Leitung hat z. B. einen Querschnitt von 20 $mm^2$. Die Ports eines Steuerventils wie einem Druckregelventil haben an ihren schmalsten Stellen Durchmesser, die weniger als 10 $mm^2$ betragen. Somit ergibt sich ein Faktor von ungefähr 2.

Dank des Ventils in der Bypass-Leitung, das ein Rückschlagsventilverhalten hat, ist eine Entleerung der hydraulischen Leitung(en), die zu dem Kupplungsaktuator führen, besonders zügig möglich. Nach einer automatisiert erfolgten Entleerung können in einer Ausgestaltung die Leitungen hydraulikmittelfrei sein. In einer anderen Ausgestaltung ist das Ventil mit Rückschlagverhalten mit einem Vordruck eingestellt, sodass ein Mindestdruck in der Leitung zu dem Kupplungsaktuator verbleibt.

Die Hydraulikschaltung arbeitet besonders zuverlässig, insbesondere im Notfall, wenn jede Bypass-Leitung ein eigenes Flussregelventil aufweist. Das Flussregelventil kann z. B. als mechanisch arbeitendes Rückschlagsventil realisiert sein. Ein mechanisch arbeitendes Rückschlagsventil reagiert auf Druckunterschiede, ohne dass z. B. eine aktive Komponente wie ein Magnet notwendig ist.

Eines der Druckregelventile, in einer besonders günstigen Ausgestaltung beide Druckregelventile, ist ein (sind) federvorgespannte(s) 3/3-Elektromagnetventil(e). Hierbei kann das Druckregelventil mit einer hydraulischen Rückkopplung ausgestattet sein. Die Rückkopplung erfolgt auf den Kolben. Die Rückkopplungsleitung kann auf die Verbraucherseite des jeweiligen Ventils führen. Je nach Ausgestaltung des Ventils wird die Verbraucherseite auch gerne von Hydraulikern als A-Seite, gelegentlich auch als B-Seite bezeichnet. Die Verbraucherseite ist die Abstromseite bei einem regulären Betrieb eines Schaltungsteils des Ventils. Die Verwendung eines 3/3-Elektromagnetventils ist ein Beitrag gegen ein unkontrolliertes Öffnen des Rückschlagsventils aufgrund von dynamischen Wechselwirkungen zwischen proportionalem Druckregelventil und dem Rückschlagsventil, insbesondere in den Fällen, in denen es als Kugelsitzrückschlagsventil ausgeführt ist.

Als Sperrventil in der Hydraulikschaltung eignet sich ein mehrere Zustände aufweisendes Ventil, z. B. ein 3/2-federvorgespanntes Elektromagnetventil. Im Falle eines 3/2-Ventils, führen an das Ventil 3 Leitungen. Das Ventil kann zwischen wenigstens zwei Zuständen hin- und hergeschaltet werden. Eine Feder sorgt für die Einnahme einer Vorzugsstellung des Kolbens, insbesondere in dem Fall, in dem der Elektromagnet keine Kraft auf den Kolben ausübt. Mithilfe der Feder kann sichergestellt werden, dass das Ventil in Durchlassstellung schaltet. Die Anschlüsse des Sperrventils können in einer Ausgestaltung ein Tankanschluss, ein Anschluss an eine Systemdruckleitung und ein Arbeitsanschluss sein. Das Elektromagnet-Ventil, das Sperrventil ist an einer zentralen Systemdruckleitung auf einer Versorgungsseite angeschlossen.

Die Hydraulikschaltung des Doppelkupplungsgetriebes arrangiert sich um eine zentrale Systemdruckleitung herum. Die Hydraulikschaltung kann in einem Gehäuse vorliegen, der sogenannten Steuerplatte (siehe einleitende Erläuterungen). Die Steuerplatte hat ein plattenartiges Aussehen, auf deren Oberfläche Ventilmagneten angeordnet sind. Innerhalb der Steuerplatte gibt es eine Systemdruckleitung, die die Steuerplatte durchsetzt. Die Systemdruckleitung funktioniert als eine zentrale, leitungsgeführte Druckquelle für Aktuatoren des Doppelkupplungsgetriebes. Die Leitung mit dem höchsten Druckniveau ist die Systemdruckleitung.

Der Druck des Hydraulikmediums in der Hydraulikschaltung wird von zwei Pumpen erzeugt. Die Pumpen liefern das unter Druck stehende Hydraulikmedium in die Systemdruckleitung. Die Systemdruckleitung ist eine von wenigstens zwei Pumpen mit Hydraulikmedium versorgbare Ausgangsdruckleitung. Von dieser Druckleitung gehen die weiteren Leitungen ab. Von dieser Druckleitung geht die Versorgung der übrigen Komponenten der Hydraulikschaltung, der Verbraucher der Hydraulikschaltung aus.

Die Pumpen fördern das Hydraulikmedium in die Systemdruckleitung. Die Pumpen können jedoch, vorzugsweise jede für sich, ausgeschaltet werden bzw. still gesetzt werden. Als Maßnahme zum Abkoppeln der Pumpen von der Systemdruckleitung sind Sperrventile vorgesehen. Geeignete Sperrventile sind hydraulische Ventile, die insbesondere durch Federn federvorgespannt sind. Mittels Sperrventile können die Pumpen von der Systemdruckleitung hydraulisch getrennt werden.

Der Kolben des Druckregelventils ist zunächst einmal frei gestaltbar. Besonders günstig ist es jedoch, wenn der Kolben so gestaltet ist, dass er in seinen Extrempositionen hydraulische Wege freigibt. Ein solcher Kolben kann in eines der Druckregelventile eingebaut werden. Wenigstens eines der Druckregelventile weist einen Kolben auf, der in seinen Extrempositionen hydraulische Durchflussstellungen aufweist. In einer Stellung, die sich im mittleren Bereich des Kolbenweges befindet, in einer Mittenstellung des Kolbens, weist dieser eine Trennstellung auf. Ein solcher Kolben kann in einem proportionalen Druckregelventil so betrieben werden, dass er in eine Zufluss- oder Abflussstellung gelangt, wenn die Ansteuerung des Elektromagneten verändert wird. In einer Mittenstellung verbleibt der Kolben, wenn sich ein Kräftegleichgewicht eingestellt hat. Hierbei wirkt günstiger Weise ein Stößel auf den Kolben und sorgt für die Bewegung des Kolbens. Somit können die Stellungen, erste Durchflußstellung, Sperrstellung und zweite Durchflussstellung auch auf die Stößelpositionen übertragen werden. Kolben und Stößel weisen zwei Durchflußstellungen in den Extrempositionen auf, und in einer mittleren Position eine Sperrstellung.

Mithilfe einer elektrischen Taktung an dem Elektromagneten eines der Druckregelventile ist der Druck an der Verbraucherseite des Druckregelventils einstellbar. Jedes der Druckregelventile hat seinen eigenen Elektromagneten. In oder an jedem Ventil gibt es eine Feder. Die Feder erzeugt eine Federvorspannung, die auf den Kolben wirkt. Mit einem mittleren Tastverhältnis kann eine Mittenstellung aktiv eingenommen werden. Die Position ergibt sich aus einem Kräfteverhältnis zwischen der Kraft aus dem Magneten und der Kraft aus der Federvorspannung. Die Position, insbesondere die Mittenposition wird eingenommen, wenn sich das Kräftegleichgewicht einstellt.

Das Schaltverhalten in einem Kupplungszweig kann noch weitergehend verbessert werden, wenn in dem Kupplungszweig ein Dämpfer vorgesehen ist. In der Hydraulikschaltung gibt es wenigstens einen Dämpfer. Idealerweise ist der Dämpfer ein Dämpfer, dessen Volumensplatte mit einer Feder unterstützt ist. Der Dämpfer bietet einen Volumensraum, der je nach Druck auf dem Hydraulikmittel bzw. des Hydraulikmittels erweiterbar ist. Bei Druckabsenkung befördert die Feder Hydraulikmittel aus dem Dämpfer in die Leitung, an der der Dämpfer angeschlossen ist. Der Dämpfer kann in einem Abschnitt angeordnet werden, der zu mindestens einem der Kupplungsaktuatoren hinführt. Der Dämpfer drückt, wenn er ein federvorgespannter Dämpfer ist, Hydraulikmedium in den Kupplungsstrang aus. Schwingungen auf einer Leitung zu einem Arbeitsraum des Kupplungsaktuators sind mittels Dämpfer verringerbar, je nach Ausgestaltung auch unterdrückbar. Als Dämpfer können sowohl kleinhubige Dämpfer als auch hoch- oder langhubige Dämpfer eingesetzt werden.

Aus der Hydraulikschaltung führen mehrere Leitungen in den Sumpf, der als Rücklaufraum für das Hydraulikmedium zur Verfügung steht. In einer Ausgestaltung ist sowohl wenigstens eines der Druckregelventile als auch wenigstens eines der Sperrventile mit einer Hydraulikmittelrückflussleitung ausgestattet. Jedes der Ventile hat eine eigenständige Sumpfrückflussleitung. Sind in einer Ausgestaltung zwei Druckregelventile vorhanden und wenigstens ein Sperrventil, so gibt es drei Leitungen, die Sumpfrückflussleitungen sind. Die Hydraulikschaltung weist mehrere Leitungen auf, die aus dem Sumpf Hydraulikmittel anziehen können, und auch mehrere Leitungen, die Hydraulikmittel in den Sumpf ablassen können.

Zu der Hydraulikschaltung können Drucksensoren gehören. Eine geeignete Stelle für den Einbau eines Drucksensors kann eine erste Zuleitung zu dem ersten Kupplungsaktuator sein. In der Zuleitung zu dem ersten Kupplungsaktuator sitzt ein erster Drucksensor. Dieser erste Drucksensor ist dazu bestimmt, den Druck in diesem Kupplungsaktuator dadurch zu messen, dass der Druck in der Zuleitung gemessen wird, der nahezu oder tatsächlich identisch zu dem Druck im Kupplungsaktuator, zumindest im eingeschwungenen Zustand, ist.

In einer zweiten Zuleitung zu dem zweiten Kupplungsaktuator kann ein zweiter Drucksensor vorhanden sein. In dem Fall hat jeder Kupplungsaktuator einen eigenen Drucksensor. Die Drucksensoren sind aber nicht in den Kupplungsaktuatoren eingebaut, sondern sie befinden sich in den Zuleitungen zu den Kupplungsaktuatoren, also in den Hydraulikzweigen "Kupplungssträngen". Jeder der Drucksensoren in den Hydraulikzweigen zu den Kupplungsaktuatoren erlaubt es, einen Druck in Relation zu seinem Kupplungsaktuator zu messen.

Vorzugsweise sind die Hydraulikzweige zu den Kupplungsaktuatoren zumindest stromabwärts ab dem Sperrventil gleich, eventuell sogar identisch aufgebaut. In diesem Fall bedeutet es, dass gleichartige Bauteile in jedem Hydraulikzweig, der zu einem Kupplungsaktuator führt, vorhanden sind (Gleichteilkonzept). Gleiche Teile in Bezug auf solche Komponenten wie Druckregelventil, Dämpfer, Rückschlagsventil, Hydraulikleitungen sind bei einem Doppelkupplungsgetriebe wenigstens zwei Mal vorhanden.

Zudem kann in der Systemdruckleitung ein dritter Drucksensor vorhanden sein. Mit diesem Drucksensor ist der Druck in der Systemdruckleitung messbar, ermittelbar oder bestimmbar.

Sind mehrere Drucksensoren in der Hydraulikschaltung verbaut, so können Druckdifferenzen bestimmt werden. Diese Druckdifferenzen können als Regelgrößen von einer die Elektromagneten der Ventile ansteuernden Steuereinheit verarbeitet werden. Außerdem kann jeder Drucksensor alleine stehend schon als Sicherheitssensor ausgewertet werden. Ist der angezeigte Druck mit dem Solldruck nicht identisch und nähert sich der gemessene Druck, also der Druck, der von dem Drucksensor gemessen wird, auch nicht an den Solldruck innerhalb eines akzeptablen Zeitfensters, z. B. innerhalb von 1 Sekunde, in einem alternativen Zeitfenster innerhalb von 0,5 Sekunden, an, so ist von einem Fehler auszugehen. Zudem kann der Druck in der Zuleitung zu einem Kupplungsaktuator oder auch die Druckdifferenz zwischen einem Druck in der zentralen Systemdruckleitung, der Druckversorgungsleitung und dem Druck in dem Kupplungsaktuator dazu genutzt werden, das Steuerverhalten des ProportionalDruckregelventils entweder zu überwachen oder sogar zu steuern.

Durch die Modularisierung der Getriebehydraulik in ihre einzelnen funktionalen Gruppen lässt sich eine Aufrechterhaltung der Funktionalität in weiten Teilen des Getriebes realisieren. Im Fehlverhaltensfall wird nicht ein gesamtes Teilgetriebe, wie dies in vielen Ständen der Technik vorgesehen ist, sondern nur die das Fehlverhalten auslösende Baugruppe abgekoppelt. Trotzdem ist es möglich, auch das gesamte Getriebe innerhalb kürzester Zeiten lastlos zu schalten.

Die zuvor erläuterten Hydraulikkomponenten und Schaltungsprinzipien spielen ihre Vorteile insbesondere bei heckgetriebenen Kraftfahrzeugen aus. Ein entsprechender Kupplungsstrang kann unabhängig von der Kraftflusssituation in dem Fahrzeug innerhalb von nur 200 ms lastlos geschaltet werden. Der Kraftfluss über ein Räderumlaufgetriebe kann unterbrochen werden. Das Fahrzeug ist innerhalb von weniger als 200 ms lastlos schaltbar. Selbst elektrische Fehler, wie z. B. Fehlverhalten eines Steuergeräts, beispielsweise eine Fehlfunktion in einem Gangsteller, können innerhalb kürzester Zeit durch eine Kraftflussunterbrechung wirkungslos geschaltet werden. Ein Ausbrechen eines heckgetriebenen Kraftfahrzeugs kann vermieden werden. Blockierende Hinterachsen eines Kraftfahrzeugs lassen sich wieder lösen.

Die zuvor dargestellten Kombinationen und Ausführungsbeispiele lassen sich auch in zahlreichen weiteren Verbindungen und Kombinationen betrachten.

So kann es in Ausgestaltungen opportun sein, dass eines der Druckregelventile ein unmittelbar gesteuertes Proportional-Druckregelventil ist, während das andere Druckregelventil ein pilotgesteuertes Ventil ist.

Hat einer der Hydraulikzweige eine Neigung zur Schwingung, so kann es ausreichen, wenn nur ein Dämpfer vor einem Kupplungsaktuator vorhanden ist.

In zwei Bypass-Leitungen können unterschiedliche Flussregelventile verbaut werden. So kann es vorteilhaft sein, wenn eines der Flussregelventile ein möglichst einfaches Rückschlagsventil ist, das andere Flussregelventil aber ein Rückschlagsventil ist, das erst bei Überschreitung eines Mindestdruckunterschieds öffnet.

Durch solche Maßnahmen der Differenzierung zwischen den Hydraulikzweigen lassen sich einzelne Gänge oder Zustände des Getriebes bevorzugt, z. B. schneller einnehmen, wie zum Beispiel ein erster, niedrigster Gang.

Die Hydraulikschaltung ist grundsätzlich in der Lage, sowohl in Doppelkupplungsgetrieben mit Vorwärts- und Rückwärtsgängen als auch in Doppelkupplungsgetrieben mit nur einer Art von Gängen, wie nur Vorwärtsgängen, eingebaut zu werden.

**Figurenkurzbeschreibung**

Die vorliegende Erfindung kann noch besser verstanden werden, wenn Bezug auf die beiliegenden Figuren genommen wird, die beispielhaft besonders vorteilhafte Ausgestaltungsmöglichkeiten darlegen, ohne die vorliegende Erfindung auf diese einzuschränken, wobei

Figur 1 einen Antriebstrang, insbesondere einbaubar in einem Kraftfahrzeug wie einem heckgetriebenen Personenkraftwagen, mit einem Doppelkupplungsgetriebe zeigt,

Figur 2 eine erste Variante einer Hydraulikschaltung, dargestellt durch Hydrauliksymbole, zeigt, die als Getriebesteuerung verwendbar ist,

Figur 3 eine zweite Variante einer Hydraulikschaltung zeigt, die als Getriebesteuerung verwendbar ist,

Figur 4 eine dritte Variante einer Hydraulikschaltung zeigt, die als Getriebesteuerung verwendbar ist,

Figur 5 eine vierte Variante einer Hydraulikschaltung zeigt, die als Getriebesteuerung verwendbar ist,

Figur 6 einen Ausschnitt aus der oberen, linken Ecke des Schaltplans nach Figur 2 zeigt,

Figur 7 eine Kupplungssteuerung zeigt, die aber nicht zur Erfindung gehört,

Figur 8 eine Kupplungssteuerung zeigt, die an Stelle einer Kupplungssteuerung nach Figur 6 treten kann,

Figur 9 eine Kupplungssteuerung zeigt, die aber nicht zur Erfindung gehört,

Figur 10 eine Kupplungssteuerung zeigt, die aber nicht zur Erfindung gehört,

Figur 11 eine Kupplungssteuerung zeigt, die an Stelle einer Kupplungssteuerung nach den Figuren 6, 7, 8, 9 oder 10 treten kann,

Figur 12 eine Kupplungssteuerung zeigt, die an Stelle einer Kupplungssteuerung nach den Figuren 6, 7, 8, 9, 10 oder 11 treten kann,

Figur 13 eine Kupplungs- bzw. Differentialsteuerung zeigt, die in Ergänzung zu einer Kupplungssteuerung nach den Figuren 6, 7, 8, 9, 10, 11 oder 12 oder alternativ an Stelle einer Kupplungssteuerung nach den Figuren 6, 7, 8, 9, 10, 11 und 12 vorhanden sein kann,

Figur 14 eine Gangeinlegestufe zeigt,

Figur 15 eine weitere Variante einer Gangeinlegestufe zeigt und

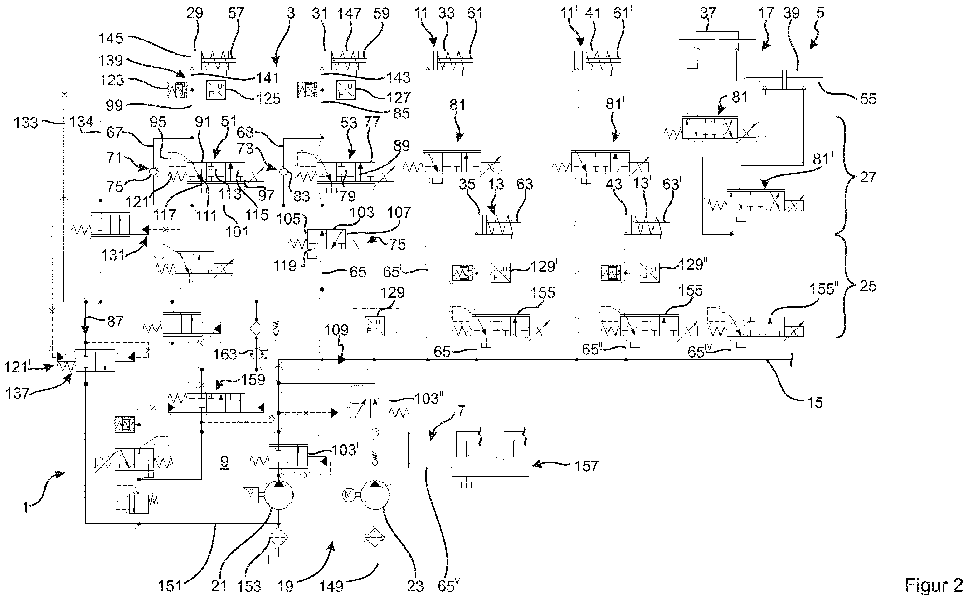

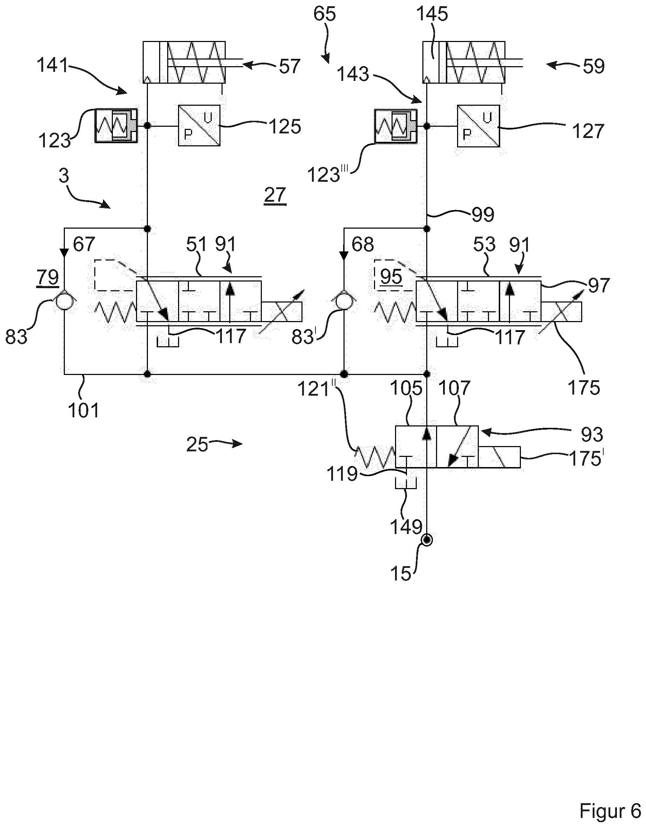

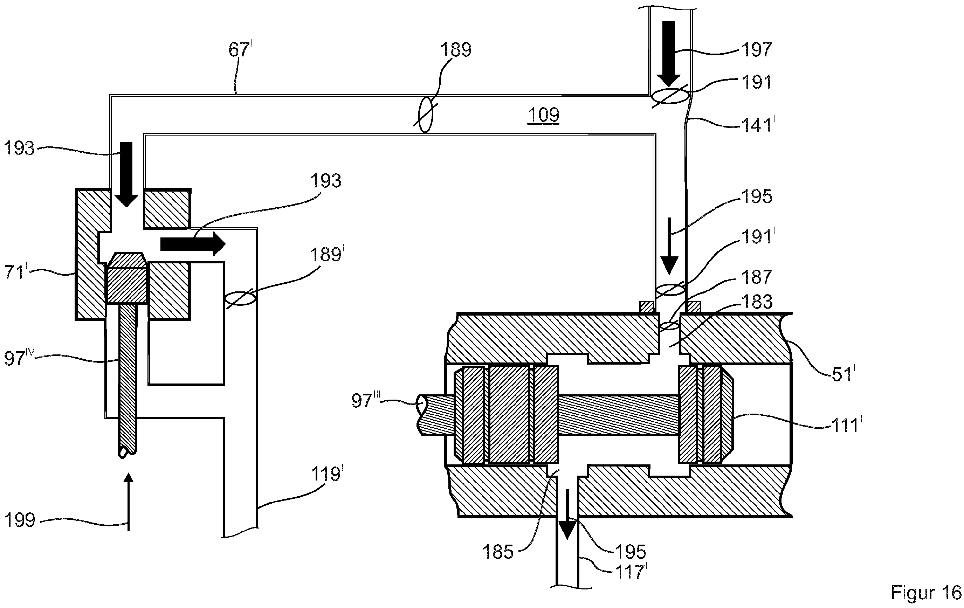

Figur 16 die Durchmessergestaltung von Bypass-Leitung und Kupplungszuleitung zeigt,

wobei die Schaltungsausschnitte nach den Figuren 6 bis 15 in Schaltungen nach den Figuren 2 bis 5 integrierbar sind bzw. entsprechende Teile der Schaltungen nach den Figuren 2 bis 5 substituieren können und

wobei das in Figur 16 gezeigte Schaltungs- bzw. Auslegungsprinzip in allen Schaltungen 2 bis 15 einbaubar ist.

**Figurenbeschreibung**

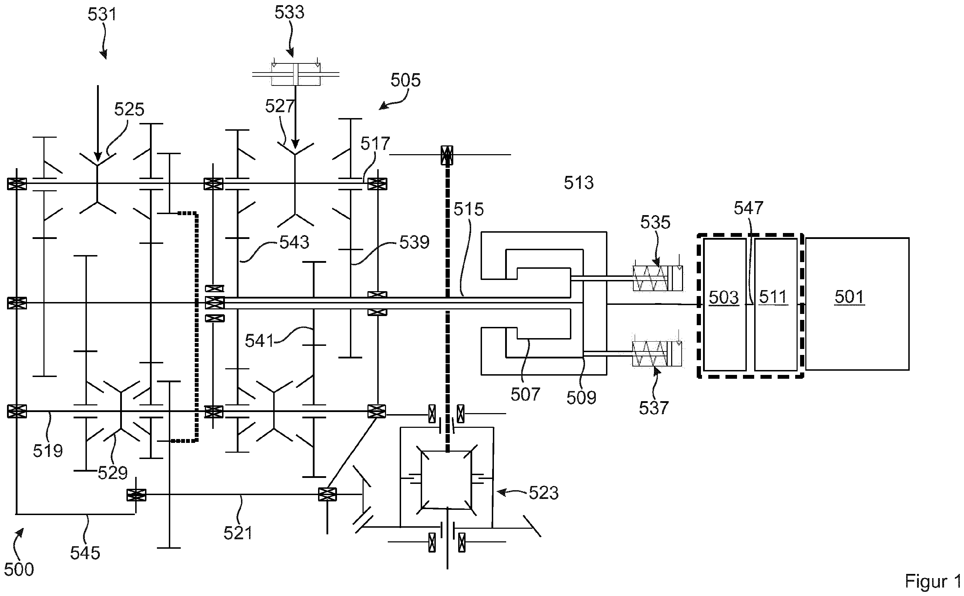

Figur 1 zeigt einen Antriebsstrang 500, für den eine Hydraulikschaltung 1, 1$^I$, 1$^{II}$, 1$^{III}$ mit ihren Ansteuerungen 3, 3$^I$, 3$^{II}$, 3$^{III}$, 3$^{IV}$, 3$^V$, 3$^{VI}$, 3$^{VII}$, 3$^{VIII}$, 5, 5$^I$, 5$^{II}$, 5$^{III}$, 5$^{IV}$, 7, 7$^I$, 7$^{II}$, 11, 11$^I$, 13 (nach den Figuren 2 bis 15) Betätigungs- und Eingriffsaufgaben übernehmen kann.

Der in Figur 1 gezeigte Antriebstrang 500 umfasst eine Verbremskraftmaschine 501, eine Elektromaschine 503, mehrere Kupplungen 507, 509, 511, von denen zumindest zwei Kupplungen 507, 509 Teil des Doppelkupplungsgetriebes 505 sind.

Zu dem Doppelkupplungsgetriebe 505 gehören die erste Kupplung 507, die zweite Kupplung 509, eine Eingangswelle 515, Vorgelegewellen 517, 519 und eine Ausgangswelle 521. Weitere Komponenten wie das Getriebegehäuse 545 und Zahnradpaare 539, 541, 543 gehören ebenfalls zu dem Doppelkupplungsgetriebe 505. Teil des Doppelkupplungsgetriebes 505 sind die Schaltmuffen 525, 527, 529.

Der aktuatorische Übergang zwischen den Hydraulikschaltungen 1, 1$^I$, 1$^{II}$, 1$^{III}$ (nach den Figuren 2 bis 5) und den zu stellenden Elementen des Doppelkupplungsgetriebes 505, wie den Schaltmuffen 525, 527, 529 oder wie den Kupplungen 507, 509, werden durch Gangstellzylinder 531, 533 und Kupplungszylindern 535, 537 gebildet.

Aus der Verbrennungskraftmaschine 501 führt die Kurbelwelle 547 heraus. Die Kurbelwelle 547 ist eine mehrteilige, zum Teil außerhalb der Verbrennungskraftmaschine 501 verlaufende Kurbelwelle, auf der weitere Komponenten des Antriebsstrangs 500 angeordnet sind. Die Elektromaschine 503 kann antreibend auf die Kurbelwelle 547 wirken. Genauso kann die Elektromaschine 503 in einem generatorischen Betrieb betrieben werden, wenn die Verbrennungskraftmaschine 501 über die Kurbelwelle 547 die Elektromaschine 503 antreibt. Mit Hilfe der Kupplungen 507, 509, 511 kann der Drehmomentenfluss aus den Antriebsmaschinen wie der Verbrennungskraftmaschine 501 und der Elektromaschine 503 in das Doppelkupplungsgetriebe 505 gesteuert werden. Mit Hilfe der Kupplungen 507, 509, 511 sind Kraftflussunterbrechungen 513 realisierbar. Das in das Doppelkupplungsgetriebe 505 eingeleitete Drehmoment entsprechend der Einstellung der Kupplungen 507, 509, 511 und der dadurch einhergehenden Kraftflussunterbrechung 513 gelangt über die Übersetzung der Zahnradpaare 539, 541, 543 auf das Differential 523, um so auf die (nicht dargestellten) Straßenräder geleitet zu werden.

Mittels hydraulischer Schaltungen, wie z. B. in den Schaltplänen der Figuren 2 bis 15 gezeigt, können die Gangstellzylinder 531, 533 und die Kupplungszylinder 535, 537 betätigt werden. Hierdurch gelangen die Kupplungen 507, 509, 511 in wenigstens einem Schaltzustand in eine Kraftflussverbindung. Mit Hilfe der Schaltmuffen 525, 527, 529 können die Gangstellzylinger 531, 533 Kraftflussverbindungen durch das Doppelkupplungsgetriebe 505 auf eine der Vorgelegewellen 517, 519 herstellen.

In den nachfolgenden Figuren werden Schaltungsvarianten gezeigt, wie Antriebstränge, die dem Antriebsstrang 500 nach Figur 1 entsprechen oder ähneln können, in ihren Schaltstellungen und Kraftflussstrecken variiert werden können.

Figur 2 zeigt eine Hydraulikschaltung 1. Die Hydraulikschaltung 1 setzt sich aus einer Anzahl von Untergruppen zusammen, genauer aus mindestens sechs Untergruppen. Die Untergruppen sind hydraulisch betriebene Baugruppen, durch die Teile eines Getriebes und/oder Teile eines Kraftfahrzeugs gesteuert werden können, wie z. B. Getriebekomponenten, wie z. B. Karosserie-oder wie z. B. Fahrwerksteile.

Die Hydraulikschaltung 1 hat einen Teil, der eine Ansteuerung 3 für Kupplungen ist, die z. B. als Doppelkupplungen, wie in Figur 1 gezeigt, ausgebildet sind. Über die Ansteuerung 3 für Kupplungen können wechselweise oder auch gleichzeitig zwei Kupplungen in Eingriff und außer Eingriff gebracht werden.

Ein weiterer Teil der Hydraulikschaltung 1 ist eine Ansteuerung 5 zur Wahl von Muffen. Die (in Figur 2 nicht gezeigten) Muffen sind Gangeinlegeelemente eines Gangwechselgetriebes (vgl. Figur 1). Zur Versorgung zumindest einer weiteren Untergruppe, insbesondere über den Hydraulikzweig $65^V$, hat die hydraulische Schaltung 1 ein sechstes Steuerventil 157, das seinen Steuerdruck von einer Zentraldruckleitung 15 (ähnlich zu den Steuerelementen der übrigen Hydraulikzweige 65, $65^I$, $65^{II}$, $65^{III}$, $65^{IV}$) erhält. Eine weitere Untergruppe kann z. B. ein hydraulischer Betätigungsmechanismus einer Kfz Komponente, wie für einen Kofferraumdeckel oder für eine Fahrwerksnivellierung sein.

Zu der Hydraulikschaltung 1 gehört ein Schaltungsteil, der für die Aufbereitung eines Hydraulikmittels 109 zuständig ist. Diese Schaltung, die eine Hydraulikmittelaufbereitung 9 ist, sorgt für die Einhaltung eines Drucks in einem Druckband (zwischen einem Minimaldruck und einem Maximaldruck). In Abhängigkeit des Drucks in der Zentraldruckleitung 15 reagiert ein Vorranghydraulikkreisventil 159. Das Vorranghydraulikkreisventil 159 bestimmt, in welchen Hydraulikkreis vorrangig Hydraulikmittel 109 strömt und welche Hydraulikkreise erst bei ausreichender Versorgung der Vorranghydraulikkreise mit Hydraulikmittel versorgt werden. Das Vorranghydraulikkreisventil 159 ist ein hydraulisch eingespanntes 3/3-Ventil, das eine erste Ablassleitung 133 und eine zweite Ablassleitung 134 verzögert freischaltet. Ist der Druck des Hydraulikmittels 109 in den Ablassleitungen 133, 134 ebenfalls oberhalb einer Druckschwelle, wird eine Rücklaufleitung 151 freigeschaltet.

Die Hydraulikmittelaufbereitung 9 umfasst einen Kühler 163, durch den das Hydraulikmittel 109 in Abhängigkeit der Stellung eines Kolbens eines der Sperrventile 103" geleitet wird. Hierdurch kann wahlweise das Hydraulikmittel 109 gekühlt werden.

Ein weiterer Teil der Hydraulikschaltung 1 ist eine (zweite) Kupplungssteuerungsschaltung 11. Auch gibt es eine Differenzialansteuerung 13.

Außerdem weist die Hydraulikschaltung 1 eine weitere (dritte) Kupplungsansteuerung $11^I$ auf, mit der optional ein Kompressor oder eine Klimaanlage (nicht dargestellt) auf einen Antrieb zuschaltbar ist. Zur Steuerung dient ein Flussregelventil $81^I$.

Eine, insbesondere zweite, elektrische Maschine, ist an einen Antriebsstrang (nicht dargestellt) über eine weitere (vierte) Kupplungsansteuerung 13 ankoppelbar. Hierzu dient ein viertes Steuerventil $155^I$. Mit Hilfe eines fünften Drucksensors 129" lässt sich ein Grad der Ankopplung und damit eine Bremswirkung der elektrischen Maschine, z. B. in einem regenerativen Betrieb, genau einstellen.

Alle diese Teilschaltungen und Baugruppen gehen stichleitungsartig von der Zentraldruckleitung 15 ab. Die Zentraldruckleitung 15 ist durch die gesamte Hydraulikschaltung 1 als zentrale Versorgungsleitung geführt. Eine Pumpengruppe 19 versorgt die Zentraldruckleitung 15 mit Hydraulikmittel bzw. Hydraulikmedium 109. Die Pumpengruppe 19 setzt sich aus einer ersten Pumpe 21 und einer zweiten Pumpe 23 zusammen. Die erste Pumpe 21 ist eine verbrennungsmotorisch angetriebene Pumpe. Die zweite Pumpe 23 ist eine elektromotorisch angetriebene Pumpe, die auch als Elektro-Pumpe bezeichnet werden kann.

Die einzelnen Baugruppen und Teilhydraulikschaltungskomponenten können in weitere Untergruppen aufgeteilt werden. Die Ansteuerung 5 für die Auswahl einer Muffe aus einer Gruppe von Muffen weist zumindest eine Teilgetriebesteuerungen 17 zur Ansteuerung von zwei Stellorganen 37, 39, wie ein fünftes Stellorgan 37 und ein sechstes Stellorgan 39 auf. Ein fünftes Steuerventil 155" ist der Teilgetriebesteuerung 17 vorgeschaltet.

Die diversen Ansteuerungen 3, 5, 7, 11, 11$^I$, 13, 13$^I$ münden, anders gesagt, jeweils in Stellorgane 29, 31, 33, 35, 37, 39, 41, 43. Die einzelnen Hydraulikzweige 65, 65$^I$, 65$^{II}$, 65$^{III}$, 65$^{IV}$, 65$^V$ gehen von der Zentraldruckleitung 15 stichleitungsartig ab. Mehrere der Hydraulikzweige 65, 65$^I$, 65$^{II}$, 65$^{III}$, 65$^{IV}$, 65$^V$ sind auf Grund einer zwischengeschalteten Cut-Off-Ebene 25 von den anderen Hydraulikzweigen 65$^I$, 65$^{II}$, 65$^{III}$, 65$^{IV}$, 65 entkoppelt. Strömungsmäßig nachgeschaltet nach der Cut-Off-Ebene 25 folgt die Steuerebene 27. Über die Steuerebene 27 können die Stellorgane 29, 31, 33, 35, 37, 39, 41, 43 eingestellt werden. Stellorgane, wie das fünfte Stellorgan 37 und das sechste Stellorgan 39, können mehrere Positionen einnehmen, z. B. drei ausgewählte Positionen, um eine Muffe zwischen drei Stellungen wie "links", "neutral" und "rechts" hin- und herzuschalten.

Die Stellorgane 29, 31, 33, 35, 37, 39, 41, 43 dienen dazu, Aktuatoren zu bewegen, wie einen Aktuator 55 für die Bewegung einer Schaltmuffe. Solche Aktuatoren 55 sind z. B. ein erster Kupplungsaktuator 57 und ein zweiter Kupplungsaktuator 59. Als Aktuator können z. B. Stößel verwendet werden. Auf Grund der Druckregelventile 51, 53 in der Steuerebene 27 kann der Kupplungsaktuator 57, 59 in eine ausgewählte Position gefahren werden, wie z. B. in die Position "geschlossen" oder "geöffnet". Aufgrund der Druckregelung sind beliebige Zwischenpositionen von dem Kupplungsaktuator 57, 59 einnehmbar. Das erste Stellorgan 29 und das zweite Stellorgan 31 sind federvorgespannte Differentialzylinder, sodass die Kupplungsaktuatoren 57, 59 in einer Vorzugsstellung gehalten werden, der "normally open" - Stellung. Findet keine aktive Bedruckung statt, so werden die angeschlossenen Kupplungen (vgl. mit Figur 1) in der geöffneten Stellung gehalten.

Darüber hinaus gibt es einen dritten Kupplungsaktuator 61 und einen fünften Kupplungsaktuator 63. Der erste Kupplungsaktuator 57 und der zweite Kupplungsaktuator 59 sind auf Kupplungen einer Doppelkupplungsgruppe geführt. Der dritte Kupplungsaktuator 61 steuert eine Trennkupplung eines Hybridantriebsstrangs (vgl. Figur 1). Der fünfte Kupplungsaktuator 63 steuert ein steuerbares Differentialgetriebe. Dazu hat der hydraulische Strang, der Hydraulikzweig 65$^{II}$, der ebenfalls schwingungsgedämpft ausgeführt ist, ein Steuerventil 155. Die Kupplungsaktuatoren 57, 59, 61, 63 sind als lineare Zylinder gestaltet. Auch ein vorhandener vierter Kupplungsaktuator 61$^I$ und ein sechste Kupplungsaktuator 63$^I$ sind als lineare Zylinder gestaltet.

Um die Druckregelventile 51, 53 sind Bypass-Leitungen 67, 68 herumgeführt. In einer ersten Bypass-Leitung 67 ist ein erstes Steuerventil 71 eingebaut. In einer zweiten Bypass-Leitung 68 ist ein zweites Steuerventil 73 eingebaut. Die Sperrventile 71, 73 sind Zweizustandssperrventile 75. Das bedeutet, die Sperrventile 71, 73 können zwischen einem ersten Zustand und einem zweiten Zustand wechseln.

Wie in Figur 2 zu sehen ist, sind den beiden Druckregelventilen 51, 53 für die Kupplungsaktuatoren 57, 59 ein gemeinsames Sperrventil 103 vorgeschaltet. Dieses federvorgespannte Sperrventil 103 schaltet bei fehlender Bestromung bzw. bei einem zu geringen Taktverhältnis in eine Durchlassstellung 105. In dieser Durchflussstellung 105 schaltet das Sperrventil 103 den an das Sperrventil 103 heranführenden Hydraulikzweig 65 durch. Das Hydraulikmedium 109, das in der Zentraldruckleitung 15 vorhanden ist, kann an die Druckregelventile 51, 53 strömen. Das Sperrventil 103 ist ein weiteres Zweizustandssperrventil 75$^I$.

Das Hydraulikmedium 109 steht - im Falle eines Normalbetriebs - unter einem solchen Druck, dass die einzelnen Hydraulikzweige 65, 65$^I$, 65$^{II}$, 65$^{III}$, 65$^{IV}$, 65$^V$ stets ausreichend mit Hydraulikmittel versorgt werden können. Die Zentraldruckleitung 15 bietet das höchste Druckniveau, insbesondere jenseits der Pumpengruppe 19. Das Sperrventil 103 erzeugt (nur) ein Druckgefälle im mbar-Bereich. Eine wesentliche Beeinflussung des Drucks erfolgt durch die Druckregelventile 51, 53. In Abhängigkeit des Drucks nach den Druckregelventilen 51, 53 stellt sich die Position des ersten Stellorgans 29 und des zweiten Stellorgans 31 ein. Durch die Druckregelung kann ein Überblenden von einer Kupplung auf die andere Kupplung erfolgen.

Geht das Sperrventil 103 in eine Ablassstellung 107 für das Hydraulikmittel bzw. Hydraulikmedium 109, kann der Zustand eintreten, dass das Druckniveau hinter den Druckregelventilen 51, 53 höher ist als vor den Druckregelventilen 51, 53 (in Bezug auf die Arbeitsrichtung betrachtet). In einer solchen Situation wirken sich die Bypass-Leitungen 67, 68 aus. Das Sperrventil 71, 73, in dessen Bypass-Leitung 67, 68 das höhere Druckniveau hinter dem Sperrventil 71, 73 ist als vor dem Sperrventil 71, 73, schaltet durch. Das Hydraulikmedium 109 kann aus dem Stellorgan 29, 31 ausströmen. Die Sperrventile 71, 73 in den Bypass-Leitungen 67, 68 sind antiparallel zu den Druckregelventilen 51, 53 angeordnet. Die Druckregelventile 51, 53 haben eine Durchflussrichtung 89. Die Durchflussrichtung 89 ergibt sich aus einer regulär vorgesehenen Strömungsrichtung von einer Versorgungsseite 101 zur B-Seite 99 des jeweiligen Druckregelventils 51, 53. Die Druckregelventile 51, 53 sind dafür ausgelegt, zumindest in einer Stellung ein Strömen des Hydraulikmediums 109 von der Versorgungsseite 101 zu der B-Seite 99 zuzulassen. Die Sperrventile 71, 73 lassen im durchgeschalteten Zustand ein Durchströmen entgegengesetzt zur Hauptströmungsrichtung zu und sperren ein Strömen in umgekehrter Richtung. Das jeweilige Sperrventil 71, 73 ist antiparallel zur Durchflussrichtung 89 des Druckregelventils 51, 53 in der Bypass-Leitung 67, 68 eingebaut.

Wie anhand der Schaltbildsymbole zu erkennen ist, ist das Druckregelventil 53 ein Dreizustandsventil 77. Einer der Schaltzustände des Druckregelventils 53 ist ein Sperrzustand 79. In dieser Stellung eines Kolbens (vgl. auch einen Kolben 97 des Druckregelventils 51) des Druckregelventils 53 hat das Druckregelventil 53 einen Sperrzustand 79 eingenommen. Hierdurch kann eine Zuleitung 85 zu dem zweiten Stellorgan 31 abgekoppelt werden. In diesem Zustand wird die Zuleitung 85 nur noch über ein Rückschlagsventil 83 gesteuert. Ein Druckabbau in der Zuleitung 85 kann in dem Fall, in dem das Druckregelventil 53 sich in dem Sperrzustand 79 befindet, über die Drehdurchführungen des Kupplungsaktuators 59 und über das Rückschlagsventil 83 erfolgen. Das Rückschlagsventil 83 sorgt für eine schnellere Druckreduzierung in Richtung auf die Versorgungseite 101. Aufgrund eines Druckunterschieds gelangt das Rückschlagsventil 83 in eine Durchflussrichtung entgegen der üblichen Duchflussrichtung 89.

Aus dem Schaltbild gem. Figur 2 ist zu entnehmen, dass das erste Druckregelventil 51 ein elektromagnetisch ansteuerbares Dreistellungsdruckregelventil ist. Mit anderen Worten, das Druckregelventil ist ein 3/3-federvorgespanntes Elektromagnetventil 91. Das 3/3-Elektromagnetventil 91 bietet eine erste Stellung, eine zweite Stellung und eine dritte Stellung. Eine der Stellungen des 3/3-Elektromagnetventils 91 ist eine Durchflussstellung 115. Eine der Stellungen des Elektromagnetventils 91 ist eine Ablaufstellung 111. Des Weiteren hat das 3/3-Druckregelventil 91 eine Mittenstellung 113. In Abhängigkeit einer Taktungsansteuerung des Magneten des Elektromagnetventils 91 nimmt das Ventil eine der Stellungen wie die Ablaufstellung 111, wie die Mittenstellung 113 oder wie die Durchflussstellung 115 ein. Mithilfe des Elektromagneten kann der Kolben 97 des 3/3-Druckregelventils 91 bewegt werden. Darüber hinaus hat das 3/3-Elektromagnetventil 91 eine Rückkopplung 95, die eine hydraulische Rückkopplung ist. Das 3/3-Druckregelventil 91 hat eine Feder 121, die ebenfalls den Kolben 97 bewegen kann. Befindet sich der Kolben 97 bzw. das 3/3-federvorgespannte Elektromagnetventil 91 in der Ablaufstellung 111, kann das Hydraulikmedium 109 über eine erste Sumpfrückflussleitung 117 ausströmen, das sich in jenem Abschnitt 139 der Hydraulikschaltung 1 befindet, der über die erste Zuleitung 141 in den Arbeitsraum 145 des Linearzylinders führt, der ein solcher ist wie der Linearzylinder 147. Die Linearzylinder wie der Linearzylinder 147 haben jeweils eine Zuleitung 141, 143. An den Zuleitungen 141, 143 ist ein Drucksensor 125, 127 angeschlossen. An jeder Zuleitung 141, 143 ist ein Dämpfer 123 angeschlossen. Der Dämpfer 123 ist ein federvorgespannter Dämpfer. Befindet sich das 3/3-federvorgespannte Elektromagnetventil 91 ausreichend lange in der Ablaufstellung 111, gelangt nicht nur das Hydraulikmedium 109 aus der Zuleitung 141, sondern auch das Hydraulikmedium 109 aus dem Dämpfer 123 zu der Sumpfrückflussleitung 117. Das zweite Druckregelventil 53 ist ähnlich zu dem ersten Druckregelventil 51 realisiert, sodass die Erklärungen zu dem ersten Druckregelventil 51 auch auf das zweite Druckregelventil 53 übertragbar sind.

Nicht nur das 3/3-Elektromagnetventil 91, sondern auch weitere Ventile haben Sumpfrückflussleitungen. Das Sperrventil 103 hat eine Sumpfrückflussleitung 119.

Je nach Stellung der Kolben wie des Kolbens 97 kann Hydraulikmedium 109 von der jeweiligen B-Seite 99 über die Sumpfrückflussleitung 117, 119 in einen Tank 149 gelangen. In einer anderen Stellung des Kolbens 97 kann Hydraulikmedium 109 zu einem Verbraucher wie dem ersten Stellorgan 29 oder dem zweiten Stellorgan 31 gelangen. Das Sperrventil 103 hat somit zumindest eine Durchflussstellung 105 und eine Ablassstellung 107. Dementsprechend hat das 3/3-Elektromagnetventil 91 eine entsprechende Ablaufstellung 111 und eine Durchflussstellung 115.

Die Hydraulikschaltung 1 hat in drei Hydraulikzweigen $65^I$, $65^{III}$, $65^{IV}$ Flussregelventile 81, $81^I$, $81^{II}$, $81^{III}$.

Den Pumpen 21, 23 nachgeschaltet sind Sperrventile $103^I$, $103^{II}$. Die Sperrventile $103^I$, $103^{II}$ sind hydraulisch eingespannte und durch Federn vorgespannte Sperrventile. Diese Sperrventile $103^I$, $103^{II}$ geraten nur dann in eine (bestimmte) Durchflussstellung, wenn in der Zentraldruckleitung 15 entweder ein ausreichender Druck vorhanden ist oder wenn das von der Pumpe 21 erzeugte Druckniveau des Hydraulikmittels 109 ausreichend hoch ist, um kein den Betriebsdruckbereich verlassendes Druckgefälle von der Zentraldruckleitung 15 zu erzeugen.

Übersteigt ein Druck in der Zentraldruckleitung 15 ein eingestelltes Druckniveau, indem ein Überdruck 87 in einem Bereich der Hydraulikschaltung 1 auftritt, so reagiert ein Druckwaagenventil 137. Die Hydraulikschaltung 1 hat Ablassleitungen 133, 134. Die erste Ablassleitung 133 ist eine gedrosselte Ablassleitung, in der ein Überdruck 87 entstehen kann. Die zweite Ablassleitung 134 ist eine mit einem Ablassventil 131 gesteuerte Ablassleitung.

Die Hydraulikschaltung 1 hat wenigstens fünf Drucksensoren 125, 127, 129, $129^I$, $129^{II}$. Anhand der Drucksensoren 125, 127, 129, $129^I$, $129^{II}$ und der Möglichkeit, Druckdifferenzen zwischen den durch die Drucksensoren 125, 127, 129, $129^I$ gemessenen Werten zu berechnen, können Druckniveaus und Druckbänder auf der Versorgungsseite 101 der Ventile wie dem Druckregelventil 51, 53 und den Flussregelventilen $81^I$, $81^{II}$, $81^{III}$, $81^{IV}$ eingestellt werden.

Durch eine Feder $121^I$ wird das Druckwaagenventil 137 auf einem Niveau bzw. in einer Sperrstellung gehalten, bis der Überdruck 87 den Kolben des Druckwaagenventils 137 in Durchlassstellung schaltet, damit ein Rücklauf Richtung Tank 149 freigegeben wird. Zwischen dem Tank 149 und dem Druckwaagenventil 137 ist in der Rücklaufleitung 151 ein Filter 153 eingebaut, der Schmutz des Tanks 149 bzw. des Hydraulikmediums 109 im Tank 149 herausfiltern kann, jedoch im Falle des Überdrucks 87 des Hydraulikmediums 109 das Hydraulikmedium 109 über die Rücklaufleitung 151 in Richtung Tank 149 abströmen lassen kann.

Stellt einer der Drucksensoren 125, 127 einen Überdruck in einer Zuleitung 141, 143 fest oder muss z. B. aufgrund einer sicherheitskritischen Situation eine Kraftflusstrennung über eine Kupplung kurzfristig bewirkt werden, kann Hydraulikmedium 109 über die Sumpfrückflussleitung 117, 119 in dem bzw. aus dem entsprechenden Hydraulikzweig 65 ausgebracht werden. Ein schnelleres Abströmen wird durch die Sperrventile 71, 73, insbesondere als Umgehungspfade (Bypass-Leitung 67, 68) um die Druckregelventile 51, 53, sichergestellt. Die Sperrventile 71, 73 sind als Rückschlagsventile 83 realisiert. Eine kurzfristige Trennung der Kupplungen unter Nutzung der federvorgespannten Kupplungsaktuatoren 57, 59 ist möglich.

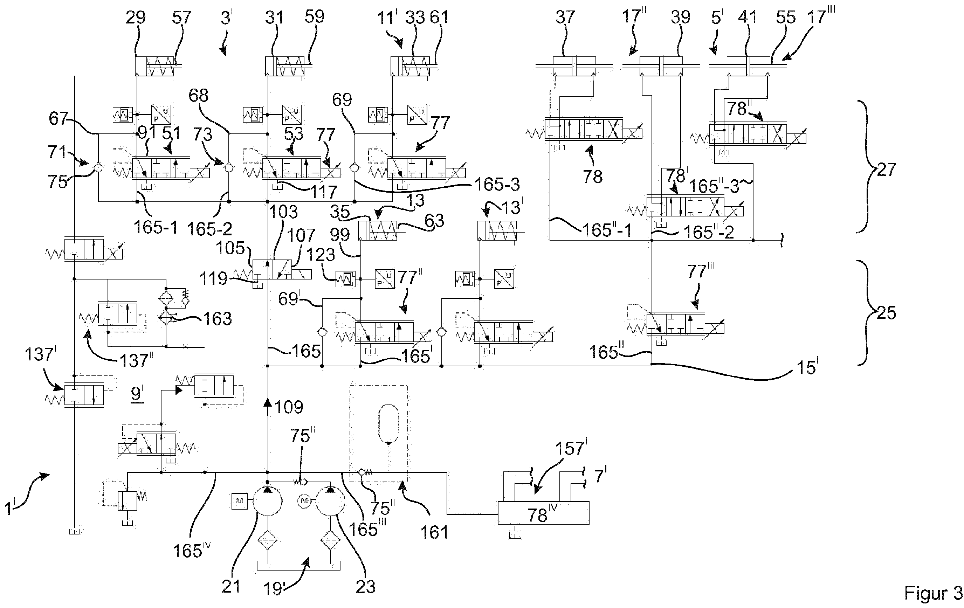

Figur 3 zeigt eine weitere Ausführungsform einer Hydraulikschaltung 1$^I$, die Getriebekomponenten und Fahrzeugkomponenten steuern und regeln kann. In vielen Teilen ist die Hydraulikschaltung 1$^I$ ähnlich oder sogar identisch zu der Hydraulikschaltung 1 (nach Figur 2), zumindest in funktioneller Hinsicht. Aus diesem Grund ist die Figurenbeschreibung zu Figur 2 (in adaptierter Form) auch für Figur 3 zu übertragen. Mit anderen Worten, die Figurenbeschreibung zu Figur 2 gilt in weiten Teilen ebenfalls zu Figur 3, sodass ein Schwerpunkt auf die Abweichungen zwischen den Ausführungsbeispielen gelegt werden kann.

Für das Steuern der Getriebekomponenten bzw. der Fahrzeugkomponenten, wie z. B. aerodynamische Komponenten zusätzlich zu den Getriebekomponenten, hat die Hydraulikschaltung 1$^I$ eine Mehrzahl von Hydraulikzweigen 165, 165$^I$, 165$^{II}$, 165$^{III}$, 165$^{IV}$. Einzelne der Hydraulikzweige 165, 165$^I$, 165$^{II}$, 165$^{III}$, 165$^{IV}$ fächern sich in hydraulische Teilzweige 165-1, 165-2, 165-3, 165''-1, 165''-2, 165$^{II}$-3 auf, die auch als hydraulische Stränge 165-1, 165-2, 165-3, 165''-1, 165''-2, 165''-3 bezeichnet werden können. Ein Hydraulikzweig 165, 165$^I$, 165$^{II}$, 165$^{III}$, 165$^{IV}$, wie der erste Hydraulikzweig 165, teilt sich in drei hydraulische Stränge 165-1, 165-2, 165-3 auf. Auch gibt es einen Hydraulikzweig 165'', der sich in mehr als drei hydraulische Stränge 165''-1, 165''-2, 165''-3 auftrennt. Die Hydraulikzweige 165, 165$^I$, 165'', 165$^{III}$, 165$^{IV}$ sind entweder einsträngig, zweisträngig, dreisträngig, viersträngig oder mehrsträngig. Die Hydraulikzweige 165, 165$^I$, 165$^{II}$, 165$^{III}$, 165$^{IV}$ und die hydraulischen Stränge 165-1, 165-2, 165-3, 165''-1, 165''-2, 165''-3 sind so gestaltet, dass jeweils nur ein einziges Stellorgan 29, 31, 33, 35, 37, 39, 41 in einem hydraulischen Strang 165-1, 165-2, 165-3, 165$^{II}$-1, 165''-2, 165''-3 oder in einem hydraulischen Zweig 165, 165$^I$, 165$^{II}$, 165$^{III}$, 165$^{IV}$ als ausmündendes Element vorhanden ist.

Aufgrund einer zwischengeschalteten Cut-Off-Ebene 25 kann mittels Sperrventil, wie dem Sperrventil 103, ein kompletter Hydraulikzweig 165 mit seinen hydraulischen Teilzweigen 165-1, 165-2, 165-3 abgekoppelt werden. Neben den Hydraulikzweigen 165, 165$^I$, 165$^{II}$, 165$^{III}$ für die Ansteuerung von Verbrauchern, wie den Stellorganen 29, 31, 33, 35, 37, 39, 41, gibt es einen Hydraulikzweig 165$^{IV}$, der ein Hydraulikmittel 109 in eine Hydraulikmittelaufbereitung 9$^I$ leitet.

Die Hydraulikzweige 165, 165$^I$, 165$^{II}$, 165$^{III}$, 165$^{IV}$ erhalten ihr bedrucktes Hydraulikmittel 109 zunächst bzw. anfänglich aus einer der oder aus beiden Pumpen 21, 23. Zur Hydraulikmittelversorgung mit dem Hydraulikmittel 109 bilden die Pumpen 21, 23 eine Pumpengruppe 19$^I$. In Hydraulikzweigen 165, 165$^I$, 165$^{II}$, 165$^{III}$, die ein längerphasiges Funktionieren sicherstellen sollen, insbesondere unabhängig von dem Betrieb der Pumpengruppe 19$^I$, ist eine Druckspeicherbarriere 161 integriert, aus der Hydraulikmittel 109 in die Ansteuerung 3$^I$, 5$^I$, 7$^I$ geleitet werden kann. Gem. diesem Designentwurf ist eine Druckspeicherbarriere 161 als Puffer zwischen einem Vierzustandsventil 78$^{IV}$ und der Pumpengruppe 19$^I$ in dem vierten Hydraulikzweig 165$^{III}$ integriert. Gegen einen unerwünschten Rückfluss bzw. gegen einen unkontrollierten Abfluss des Hydraulikmittels 109 aus der Druckspeicherbarriere 161 weist die Druckspeicherbarriere 161 ein Zweizustandssperrventil 75'' auf, das ein federvorgespanntes Zweizustandssperrventil 75'' ist.

Darüber hinaus hat die Hydraulikschaltung 1$^I$ Zweizustandssperrventile 75, die einfache, federfreie Kugelsitz-Rückschlags-Ventile sind. Die Hydraulikschaltung 1$^I$ hat unterschiedliche Typen von Zweizustandssperrventilen 75, 75''. Zur Wahrung von Druckniveaus sind Zweizustandssperrventile 75'' mit Federn vorgespannt.

Die Hydraulikschaltung 1$^I$ lässt sich in Abschnitte bzw. Komponenten gruppieren, insbesondere nach funktionellen Aspekten, von denen ein zentrales Element die Zentraldruckleitung 15$^I$ ist. Von der Zentraldruckleitung 15$^I$ gehen die Hydraulikzweige 165, 165$^I$, 165$^{II}$, 165$^{III}$, 165$^{IV}$ ab, die jeweils in ihre Baugruppen und Schaltungsbereiche münden. Das Hydraulikmittel 109 erhält seinen Druck aus wenigstens einer der beiden Pumpen 21, 23 der Pumpengruppe 19$^I$. Zur Zentraldruckleitung 15$^I$ kann die Druckspeicherbarriere 161 hinzugezählt werden. Wie aus dem Schaltplan der Figur 3 zu entnehmen ist, ist die Druckspeicherbarriere 161 nur für einen Teil der Hydraulikzweige 165, 165$^I$, 165$^{II}$, 165$^{III}$, 165$^{IV}$ als hydraulischer Puffer ausgestaltet. Hydraulikzweige 165, 165$^I$, 165$^{II}$, 165$^{III}$, 165$^{IV}$, wie der fünfte Hydraulikzweig 165$^{IV}$, die nachrangige Baugruppen wie die Hydraulikmittelaufbereitung 9$^I$ versorgen, und daher eine geringere funktionelle Wichtigkeit haben, werden durch die Druckspeicherbarriere 161 nicht abgepuffert. Auf solche Hydraulikzweige 165, 165$^I$, 165$^{II}$, 165$^{IV}$ wirkt der Druck aus der Pumpengruppe 19$^I$ unmittelbar.

Der erste Hydraulikzweig 165 führt über das Sperrventil 103 auf das erste Stellorgan 29, auf das zweite Stellorgan 31 und auf das dritte Stellorgan 33.

Das erste Stellorgan 29 ist ein erster Kupplungsaktuator 57. Das zweite Stellorgan 31 arbeitet als zweiter Kupplungsaktuator 59. Das dritte Stellorgan 33 übernimmt die Aufgabe des dritten Kupplungsaktuators 61.

Der Hydraulikzweig 165 fasst die Ansteuerung 3$^I$ für Kupplungen des Doppelkupplungsgetriebes (s. Figur 1) und die Kupplungssteuerungsschaltung 11$^I$ zusammen. In jedem der hydraulischen Stränge 165-1, 165-2, 165-3 sitzt ein Druckregelventil wie das erste Druckregelventil 51 und wie das zweite Druckregelventil 53. Die Druckregelventile zu den Strängen 165-1, 165-2, 165-3 des ersten Hydraulikzweigs 165 sind Dreizustandsventile 77, 77$^I$. Um die Dreizustandsventile 77, 77$^I$ führt jeweils eine Bypass-Leitung 67, 68, 69 herum. In jeder der Bypass-Leitungen 67, 68, 69 ist ein Sperrventil 71, 73 eingebaut. Das Sperrventil 71, 73 ist als Zweizustandssperrventil 75 dadurch realisiert, dass ein federfreies Kugelsitzventil den Fluss des Hydraulikmittels 109 in eine Richtung in Abhängigkeit der Druckverhältnisse vor und nach dem Sperrventil 71, 73 sperrt oder freigibt. Wie aus dem Schaltsymbol zu erkennen ist, ist das Druckregelventil 53 ein Dreizustandsventil 77. Im regulären Betrieb arbeiten die Druckregelventile 51, 53 druckregelnd. Ein Druckregelventil 51, 53 bewirkt eine Einstellung des Schließgrades des federvorgespannten Stellorgans 29, 31, 33. Druckabhängig können beliebige Kiss-Punkte von den Kupplungsaktuatoren 57, 59, 61 angesteuert werden. Eine Überprüfung erfolgt mittels Drucksensoren, wie in Figur 3 dargestellt. In dem Ausführungsbeispiel nach Figur 3 werden die Druckregelventile 51, 53 durch 3/3-federvorgespannte Elektromagnetventile 91 realisiert. Das den 3/3-federvorgespannten Elektromagnetventil 91 vorgeschaltete Sperrventil 103 mit einem ersten Zustand, der Durchflussstellung 105 und einem zweiten Zustand, der Ablassstellung 107 lässt je nach Steuerstellung Hydraulikmittel 109 an die 3/3-federvorgespannten Elektromagnetventile 91.

Ein weiterer Zweig, der dritte Hydraulikzweig 165" ist, wie der erste Hydraulikzweig 165, mit einem Dreizustandsventil 77$^{III}$ in der Cut-Off-Ebene 25 absperrbar. Die Steuerung und damit Einstellung der Stellorgane 37, 39, 41 der Teilgetriebesteuerungen 17$^{II}$, 17$^{III}$ erfolgt in einer Steuerebene 27 durch die Vierzustandsventile 78, 78$^{I}$, 78$^{II}$.

Entsprechend sind die Druckregelventile 51, 53 ebenfalls in der (virtuell zu sehenden) Steuerebene 27 der Hydraulikschaltung 1$^{I}$ angeordnet.

In Bezug auf die Differentialansteuerung 13 mit dem vierten Stellorgan 35, das als Kupplungsaktuator 63 arbeitet, ist nur die Cut-Off-Ebene 25 durch ein Dreizustandsventil 77" besetzt. Der fünfte Kupplungsaktuator 63 ist unmittelbar von dem Dreizustandsventil 77" ansteuerbar. Das Dreizustandsventil 77" im zweiten Hydraulikzweig 165$^{I}$ übernimmt (tatsächlich) eine Zwitterstellung in funktionaler Hinsicht. Das Dreizustandsventil 77" des zweiten Hydraulikzweigs 165$^{I}$ der Differentialansteuerung 13 kann eine Druckregelung übernehmen. Das Dreizustandsventil 77" im zweiten Hydraulikzweig 165$^{I}$ hat eine Cut-Off-Stellung. In seinen anderen Stellungen kann es Druckregelungen für den fünften Kupplungsaktuator 63 übernehmen. Das Dreizustandsventil 77" wird von einer Bypass-Leitung 69$^{I}$ eingeschlossen, die in einem Betriebszustand die Arbeitsseite (Verbraucherseite 99) mit der Zentraldruckleitung 15$^{I}$ kurzschließen kann, sofern auf der Arbeitsseite des zweiten hydraulischen Zweigs 165$^{I}$ ein höherer Druck herrscht als in dem Hydraulikmittel 109 der Zentraldruckleitung 15$^{I}$. Gleichartig funktionieren die übrigen Bypass-Leitungen 67, 68, 69, die jedoch einen Kurzschluss von der Arbeitsseite zu dem Sperrventil 103 herstellen können. Als Arbeitsseite wird auch im Fachgebiet der Hydraulik die Bezeichnung "Verbraucherseite" verwendet. Auf der Verbraucherseite 99 ist ein Dämpfer 123 in dem Hydraulikzweig 165$^{I}$ zu dem fünften Kupplungsaktuator 63.

Ähnlich zur Differentialansteuerung 13 kann die Hydraulikschaltung 1$^{I}$ noch einen weitere Steuerung 13$^{I}$ aufweisen, die ebenfalls eine einstufige Ventilsteuerung ist, z. B. für das Öffnen von Klappen eines Fahrzeugs wie der Motorhaube, eines Kofferraumdeckels oder eines Handschuhfachdeckels.

Die Stellorgane 37, 39, 41 der Teilgetriebesteuerungen 17$^{II}$, 17$^{III}$ sind Aktuatoren 55 für Getriebemuffen. Die Teilgetriebesteuerungen 17$^{II}$, 17$^{III}$ als Teil der Ansteuerung 5$^{I}$ für Muffen entsprechen in ihren anzusteuernden bzw. aufgrund der ansteuerbaren Elemente den über die Kupplungsaktuatoren 57, 59 adressierbaren Teilgetriebesträngen und ihren Komponenten bzw. Elementen (vgl. Figur 1).

Erst wenn die Pumpengruppe 19$^{I}$ ausreichend die Zentraldruckleitung 15$^{I}$ mit Hydraulikmittel 109 ausgestattet hat, reagiert die Hydraulikmittelaufbereitung 9$^{I}$ der Hydraulikschaltung 1$^{I}$, um Hydraulikmittel 109 durch den Kühler 163 durchzuleiten. Bei Überdrücken in Leitungen der Hydraulikmittelaufbereitung 9$^{I}$ sprechen Druckwaagenventile 137$^{I}$, 137$^{II}$ aufgrund des Drucks in der Hydraulikleitung an und schließen den Kühler 163 und/oder eine Überdruckablassleitung zum Tank kurz.

Eine der Pumpen 21, 23 der Pumpengruppe 19$^{I}$ ist eine elektromotorisch angetriebene Pumpe 23, die nur dann über das Zweizustandssperrventil 75", das ein federvorgespanntes Kugelsitzventil ist, Hydraulikmedium 109 in die Zentraldruckleitung 15$^{I}$ leitet, wenn der von der elektromotorisch angetriebenen Pumpe 23 aufgebaute Druck den von der verbrennungsmotorisch angetriebenen Pumpe ausgeübten Druck übersteigt.

Ein weiteres Vierzustandsventil 78$^{IV}$ arbeitet als Steuerventil 157$^{I}$ in der Ansteuerung 7$^{I}$ für aerodynamische Kfz-Komponenten. Das Steuerventil 157$^{I}$ ist ein direkt gesteuertes Elektromagnetventil. Dank der Druckspeicherbarriere 161 können die aerodynamischen Kfz-Komponenten selbst noch nach einem Ende des Betriebs der Pumpen 21, 23, d. h. nach einem Ende des Betriebs der Pumpengruppe 19$^{I}$ betrieben werden.

Folglich ist die Hydraulikschaltung 1$^{I}$ eine priorisierende Hydraulikschaltung, die in der Lage ist, einzelne hydraulische Stränge 165-1, 165-2, 165-3, 165"-1, 165"-2, 165$^{II}$-3 abzukoppeln, während andere Ansteuerungen 5$^{I}$, 7$^{I}$, 13 zumindest noch Nachlaufzeiten erhalten. Erst wenn alle wichtigen Komponenten des Antriebsstrangs hydraulisch ansteuerbar sind, fängt die Hydraulikmittelaufbereitung 9$^{I}$ mit der Kühlung über den Kühler 163 und ggf. mit der Druckregelung über die Druckwaagenventile 137$^{I}$, 137" an.

Hydraulikzweige 165, 165$^{I}$, 165$^{II}$, 165$^{III}$, 165$^{IV}$, die besonders schnell zu entleeren sind oder die keine Überdrücke in ihren Leitungen erfahren sollen, wie der erste Hydraulikzweig 165 und der zweite Hydraulikzweig 165$^{I}$, sind mit Bypass-Leitungen 67, 68, 69, 69$^{I}$, in denen Sperrventile 71, 73 eingebaut sind, ausgestattet. Dadurch, dass mehrere Rückflussleitungen 117, 119 in den Sumpf von den Druckregelventilen 51, 53 und den Sperrventilen wie dem Sperrventil 103 vorhanden sind, ist eine hydraulische Entlastung der Aktuatoren wie der Kupplungsaktuatoren 57, 59, 61, 63 und der dazugehörigen hydraulischen Zweige wie dem ersten hydraulischen Zweig 165 möglich.

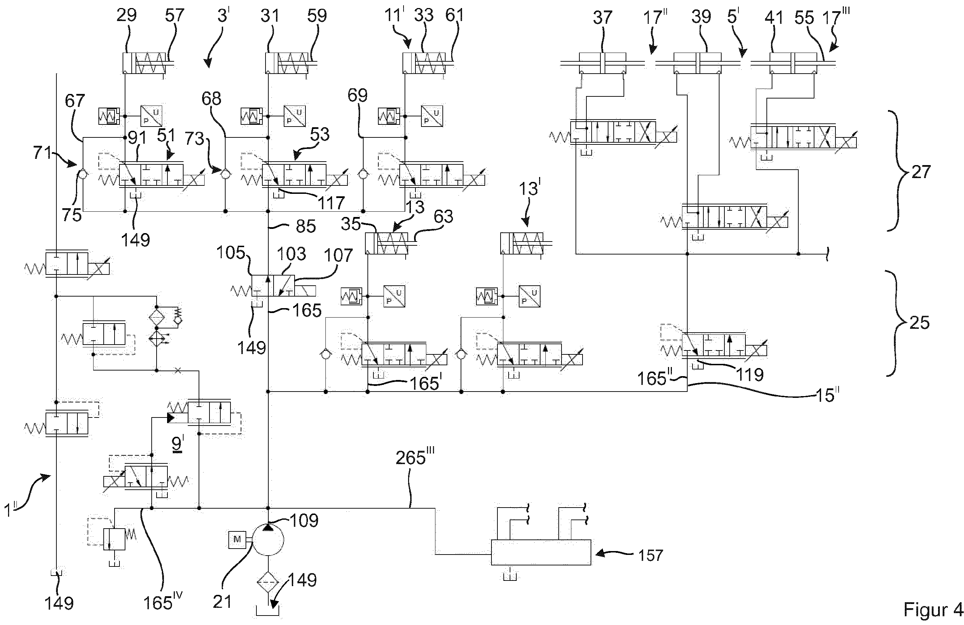

Figur 4 zeigt eine weitere Ausführungsform einer Hydraulikschaltung $1^{II}$, die komponenten- bzw. baugruppenweise zu der Hydraulikschaltung $1^{I}$ (nach Figur 3) identisch realisiert ist. In vielen Teilen ist also die Hydraulikschaltung 1" ähnlich oder sogar identisch zu den Hydraulikschaltungen 1, $1^{I}$ (nach den Figuren 2 und 3), zumindest in funktioneller Hinsicht. Aus diesem Grund sind die Figurenbeschreibungen zu Figur 2 und zu Figur 3 (in adaptierter Form) auch auf Figur 4 zu übertragen. Mit anderen Worten, die Figurenbeschreibungen zu Figur 2 und zu Figur 3 gelten in weiten Teilen ebenfalls zu Figur 4, sodass ein Schwerpunkt auf die Abweichungen zwischen den Ausführungsbeispielen gelegt werden kann.

Die Hydraulikschaltung $1^{II}$ bezieht ihr Hydraulikmedium 109, das durch eine Pumpe 21 gefördert wird, aus einem Tank 149. Der Tank 149 ist ein Auffangbecken für sämtliche Sumpfrückflussleitungen 117, 119. So kann Hydraulikmedium 109 aus dem Druckregelventil 51 genauso in den Tank 149 gelangen wie es auch aus dem Sperrventil 103 abfließen kann. Generell ein Zuviel an Hydraulikmedium 109 wird in der Hydraulikmittelaufbereitung $9^{I}$ verarbeitet und gelangt über die Hydraulikmittelaufbereitung $9^{I}$ im Bedarfsfall auch in den Tank 149. Die zentrale, verbrennungsmotorisch angetriebene Pumpe 21 ist die Druckquelle für das Hydraulikmedium 109, das von der Pumpe 21 in die hydraulischen Zweige 165, $165^{I}$, 165", $265^{III}$, $165^{IV}$ gelangen kann. Die Pumpe 21 beschickt die Zentraldruckleitung 15". Die Zentraldruckleitung 15", die für alle hydraulischen Zweige 165, $165^{I}$, $165^{II}$, $265^{III}$, $165^{IV}$ ungepuffert ausgelegt ist, stellt die Quelle des Hydraulikmittels 109 für die Hydraulikzweige 165, $165^{I}$, $165^{II}$, $265^{III}$, $165^{IV}$ dar. Jeder hydraulische Zweig 165, $165^{I}$, $165^{II}$, $265^{III}$, $165^{IV}$ hat eine ganz eigene, ihm zugewiesene Aufgabe für das Fahrzeug, in dem die Hydraulikschaltung $1^{II}$ realisiert ist.

Die hydraulische Schaltung 1", die aufgrund ihrer Ebenen Cut-Off-Ebene 25 und Steuerebene 27 eine zweigestufte Hydraulikschaltung ist, hat eine Ansteuerung $3^{I}$ für Kupplungen, eine Ansteuerung $11^{I}$ als eine weitere Kupplungssteuerungsschaltung, eine Ansteuerung $5^{I}$ zur Einlegung von Gängen, eine Ansteuerung als Differentialansteuerung 13 und eine Ansteuerung $7^{I}$ für Karosseriekomponenten, die aerodynamische Fahrwirkungen entfalten können.

In einer Durchflussstellung 105 des Sperrventils 103 lässt das Sperrventil 103 Hydraulikmedium 109 von der Pumpe 21 zu den Proportional-Druckregelventilen 51, 53 gelangen. Die Proportional-Druckregelventile 51, 53 sind parallel zu jeweils einer dem jeweiligen Druckregelventil 51, 53 zugehörigen Bypass-Leitung 67, 68, 69 in dem ersten Hydraulikzweig 165 so angeordnet, dass jedes Stellorgan 29, 31, 33 in einem eigenständigen, nur durch das Stellorgan abgeschlossenen Strang das hydraulische Schlusselement darstellt. Die Stellorgane 29, 31, 33 sind erste, zweite und dritte, einseitig federvorgespannte Kupplungsaktuatoren 57, 59, 61. Ein Abströmen von Hydraulikmittel 109 aus den Kupplungsaktuatoren 57, 59, 61 kann bei Überschreiten eines Druckgefälles in Richtung auf das Sperrventil 103 durch die Sperrventile 71, 73 der Bypass-Leitungen 67, 68, 69 beschleunigt erfolgen. Die Sperrventile 71, 73 sind als Zweizustandsperrventile 75 vorhanden. Die Sperrventile 71, 73 arbeiten als aufgrund von Druckunterschieden freischaltbare Ableitungskanäle um 3/3-federvorgespannte Elektromagnetventile 91 herum. Jedes Proportional-Druckregelventil 51, 53 ist als 3/3-Elektromagentventil 91 realisiert.

In dem zweiten hydraulischen Zweig $165^{I}$ ist die Differentialansteuerung 13. Die Differentialansteuerung 13 hat ebenfalls ein einziges Stellorgan 35. Das Stellorgan 35 kann als fünfter Kupplungsaktuator 63 operieren.

Ist aus den Zuleitungen wie der Zuleitung 85 das Hydraulikmedium 109 beschleunigt abzuleiten, das bedeutet, z. B. soll das Hydraulikmedium 109 innerhalb von Zeiten von weniger als 10 ms in den Tank 149 entschwinden, so kann das Sperrventil 103 in seine Ablassstellung 107 gebracht werden.

Der dritte Hydraulikzweig 165", der über die Sumpfrückflussleitung 119 entlastet werden kann, umfasst ebenfalls eine Cut-Off-Ebene 25 und eine Steuerebene 27. Zur Steuerebene 27 des dritten Hydraulikzweigs $165^{II}$ gehören wenigstens drei Stellorgane 37, 39, 41. Die Stellorgane 37, 39, 41 sind Aktuatoren 55, von denen zwei in einem eigenen Zweig einer Teilgetriebesteuerung $17^{II}$, $17^{III}$ stecken können. Zusammen bilden die Teilgetriebesteuerungen $17^{II}$, $17^{III}$ die Ansteuerung $5^{I}$ für die Gangwahl.

In direkter Abhängigkeit von der Pumpe 21 sind die Hydraulikzweige 165, $165^{I}$, $165^{II}$, $265^{III}$, $165^{IV}$ hydraulisch befüllbar. Dank der in den Hydraulikzweigen 165, $165^{I}$, $165^{II}$, $265^{III}$, $165^{IV}$ vorhandenen Sumpfrückflussleitungen 117, 119 sperren die Sperrventile wie das Sperrventil 103 vor den Kupplungsstrecken nicht nur den Zulauf zu den Stellorganen 29, 31, 33, 37, 39, 41, sondern entlasten die hinter dem jeweiligen Ventil vorhandenen Leitungsabschnitte.

Das Steuerventil 157 steuert weitere, hydraulisch zu betätigende Komponenten, wie z. B. eine Parksperre.

Die Steuerung $13^{I}$ kann zur Steuerung eines Vierradantriebs bzw. als Sperrglied eines Vierradantriebs genutzt werden.

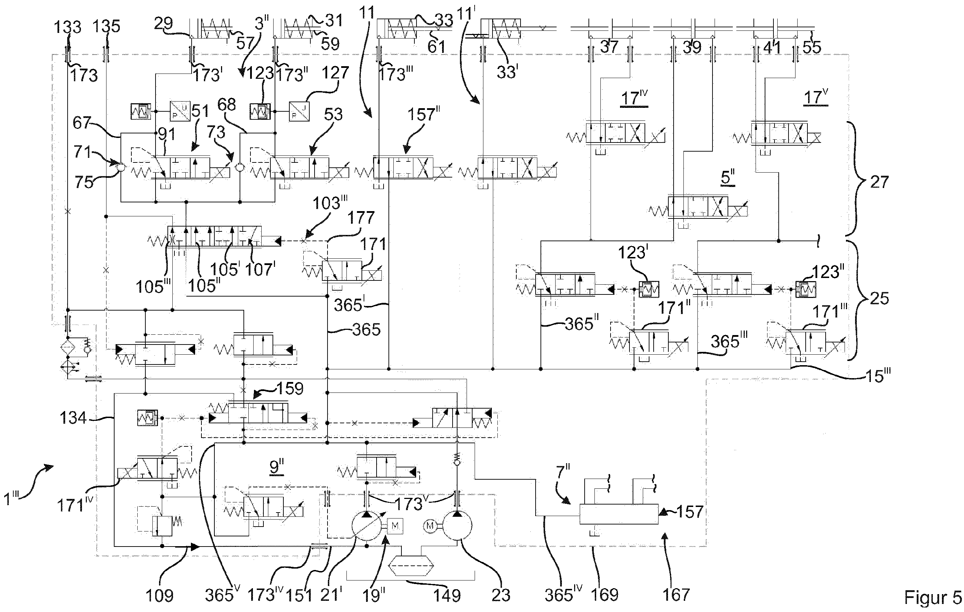

Figur 5 zeigt eine weitere Ausführungsform einer Hydraulikschaltung $1^{III}$. In vielen Teilen ist die Hydraulikschaltung $1^{III}$ ähnlich oder sogar identisch zu den Hydraulikschaltungen 1, $1^{I}$, 1" (nach den Figuren 2, 3 und 4), zumindest in funktioneller Hinsicht. Aus diesem Grund sind die Figurenbeschreibungen zu den Figuren 2, 3 und 4 (in adaptierter Form) auch für Figur 5 zu übertragen. Mit anderen Worten, die Figurenbeschreibungen zu den Figuren 2, 3 und 4 gelten in weiten Teilen ebenfalls zu Figur 5, sodass ein Schwerpunkt auf die Abweichungen zwischen den Ausführungsbeispielen gelegt werden kann.

Die Hydraulikschaltung $1^{III}$, die in Figur 5 gezeigt ist, ist eine in einer Steuerplatte 167 integrierte Hydraulikschaltung 1$^{III}$, die jenseits der Steuerplatte 167, d. h. außerhalb eines Randes 169 der Steuerplatte 167, die größervolumigen Bauteile und Baugruppen sowie jene Komponenten aufweist, die andernorts zu platzieren sind. Stellorgane wie ein erstes Stellorgan 29, ein zweites Stellorgan 31, ein drittes Stellorgan 33, ein fünftes Stellorgan 37, ein sechstes Stellorgan 39 und ein siebtes Stellorgan 41 sind als Aktuatoren wie der Aktuator 55 unmittelbar auf das von ihnen zu steuernde Glied wie eine Kupplung anzuordnen. Pumpen 21$^I$, 23 einer Pumpengruppe 19" müssen mit einem Hydraulikmittelreservoir wie einem Tank 149 in unmittelbarer Verbindung stehen, sodass die Pumpen 21$^I$, 23 außerhalb der Steuerplatte 167 unmittelbar im Bereich des Tanks 149 angeordnet sind. Für das Ein- und Austreten des Hydraulikmittels 109 weist die Steuerplatte 167, z. B. im Bereich des Steuerplattenrandes 169, Verbindungselemente 173, 173$^I$, 173$^{II}$, 173$^{III}$, 173$^{IV}$, 173$^V$ für Leitungen bzw. für die Hydraulikplatte (Steuerplatte 167) auf. Für einen Fachmann verständlich ist, dass der als Steuerplatte 167 zusammengefasste Teil des Schaltplans, wie z. B. nach Figur 5, auch auf mehrere Steuerplatten aufgeteilt werden kann, z. B. wenn die räumlichen Verhältnisse des Gehäuses 545 des Getriebes wie dem Doppelkupplungsgetriebe 505 oder Gewichtserfordernisse oder Gewichtsverteilungen des Getriebes es erforderlich machen. Dementsprechend sind die Verbindungselemente wie die Verbindungselemente 173, 173$^I$, 173$^{II}$, 173$^{III}$, 173$^{IV}$, 173$^V$ zwischen den Teilbereichen wie z. B. den Hydraulikzweigen 365, 365$^I$, 365$^{II}$, 365$^{III}$, 365$^{IV}$, 365$^V$ anzuordnen.

So können an die ersten Verbindungselemente 173$^I$, 173$^{II}$, 173$^{III}$ die ersten Stellorgane 29, 31, 33 angeschlossen werden, die Kupplungsaktuatoren 57, 59, 61 sind. Genauso können Verbindungselemente, zum Beispiel der dritten Ablassleitung 135, genutzt werden, um Hydraulikmittel 109 zur Kühlung der an die Kupplungsaktuatoren 57, 59, 61 angeschlossenen Kupplungen über jene zu leiten.

Zur Betätigung einseitig einzustellender Kfz-Komponenten gibt es das weitere Stellorgan 33$^I$, dessen Strang 11$^I$ dem Strang 11 zu dem dritten Stellorgan 33 entspricht.

Die Steuerplatte 167 dient als Gehäuse und Schutzelement für Leitungsverbindungen zwischen Ventilen wie einem ersten Druckregelventil 51, einem zweiten Druckregelventil 53, einem Sperrventil 103$^{III}$ oder einem Steuerventil 157, insbesondere für eine Steuerung sonstiger Kfz-Komponenten. Die Steuerplatte 167, die auch als Steuergehäuse bezeichnet werden kann, stellt die Basis für Dämpfer 123, 123$^I$, 123". Eine der durch die Steuerplatte 167 zur Verfügung gestellten Leitungen ist eine Zentraldruckleitung 15$^{III}$, die auch als Systemdruckleitung bezeichnet werden kann. Die Steuerplatte 167 ist der Träger für Drucksensoren wie für den Drucksensor 127.

Hierbei sei angesprochen, dass solche Ventile wie das Sperrventil 103$^{III}$ eines ersten Hydraulikzweigs 365 in der Steuerplatte als zweigeteiltes Ventil realisierbar sind, von denen ein erstes Ventil ein Vorsteuerventil 171 ist und ein zweites Ventil die Schaltstellungen wie Durchflussstellungen 105$^I$, 105$^{II}$, 105$^{III}$ und zumindest eine Ablassstellung 107' bietet. Mit anderen Worten, das zweite Ventil bzw. der zweite Teil des Sperrventils 103$^{III}$ ist das eigentliche Steuerventil, wobei die Ansteuerung hydraulisch über das Vorsteuerventil 171 erfolgt. Hierfür ist zwischen dem Vorsteuerventil 171 und dem eigentlichen Steuerkolben eine Steuerleitung 177 ausgebildet. Über die Steuerleitung 177 wird der hydraulisch zu betätigende Hauptkolben des Ventils betätigt.

Das Sperrventil 103$^{III}$ ist ein durch das Vorsteuerventil 171 pilotgesteuertes Ventil, über das die gesamte Doppelkupplungsbaugruppe, bestehend aus zwei Kupplungen, hydraulisch versorgt und auch betätigt werden kann. Das Sperrventil 103$^{III}$ kann in Abhängigkeit des hydraulischen Drucks in der Zentraldruckleitung 15$^{III}$ unterschiedliche Strömungspfade zu den Kupplungen freigeben, sodass in einem ersten Schaltzustand 105$^I$ die Kupplungen betätigbar bleiben, während bei weiteren Schaltzuständen 105$^{II}$, 105$^{III}$ z. B. noch eine mögliche Kühlung, eventuell sogar ein Rezirkulation hinzukommt.

Weitere in der Steuerplatte 167 integrierte Bauteile sind Bypass-Leitungen wie die erste Bypass-Leitung 67 und die zweite Bypass-Leitung 68. In diesen Bypass-Leitungen 67, 68 sind, insbesondere von dem Rand 169 der Steuerplatte 167 nicht sichtbare, Sperrventile 71, 73, z. B. in der Form von Zweizustandssperrventilen 75 integriert. Durch das Konzept der Steuerplatte 167 als Gehäuse für wesentliche Teile der Hydraulikschaltung 1$^{III}$ bietet sich die Möglichkeit, selbst 3/3-federvorgespannte Elektromagnetventile 91 in die Steuerplatte (zumindest teilweise) zu integrieren.

Die Steuerplatte 167 bietet neben ihrer Zentraldruckleitung 15$^{III}$ komplette Hydraulikzweige 365, 365$^I$, 365$^{II}$, 365$^{III}$, 365$^{IV}$, 365$^V$, von denen maximal nur die Stellorgane 29, 31, 33, 37, 39, 41 außerhalb der Steuerplatte 167 angeordnet sind. Selbst die Steuerung einer Hydraulikmittelaufbereitung 9" kann (zumindest mit ihren wesentlichen Teilen) wie einem Vorranghydraulikkreisventil 159 in der Hydraulikplatte bzw. Steuerplatte 167 integriert sein.

Wie sich aus den hydraulischen Symbolen der Figur 5 erschließt, hat die Hydraulikschaltung 1$^{III}$ fünf stichleitungsartig abgehende Hydraulikzweige 365, 365$^I$, 365$^{II}$, 365$^{III}$, 365$^{IV}$, die Schaltkreise zur Ansteuerung 3", 5", 7", 11 darstellen. Einige Hydraulikzweige 365$^{II}$, 365$^{III}$ sind Teilgetriebesteuerungen 17$^{IV}$, 17$^V$. Ein erster Hydraulikzweig 365 stellt die Ansteuerung 3" für die Kupplungsaktuatoren 57, 59 und somit für die Kupplungen (vgl. Figur 1).

Die Hydraulikschaltung 1$^{III}$ in ihrer Steuerplatte 167 bietet ausreichende Robustheit, um auch als Lkw-Getriebesteuerung eines Doppelkupplungsgetriebes mit acht Gängen (1. Alternative: nur Vorwärtsgänge; 2. Alternative: Vorwärts- und Rückwärtsgänge) eingesetzt zu werden. Aufgrund der größeren Volumenströme des Hydraulikmittels 109 für die Stellorgane 29, 31, 37, 39, 41 sind viele Steuerventile und insbesondere Ventile einer Cut-Off-Ebene 25 als pilotgesteuerte Ventile, d. h. mit Vorsteuerventilen 171, 171$^{II}$, 171$^{III}$, 171$^{IV}$ ausgestaltet.

Mit anderen Worten, die Steuerplatte 167 kann - in funktioneller Hinsicht - von Anschlüssen 173$^V$ aus startend als Gehäuse für eine Zentraldruckleitung 15$^{III}$ betrachtet werden, von der Hydraulikzweige 365, 365$^I$, 365$^{II}$, 365$^{III}$ abgehen, die Ventile 103$^{III}$, 171, 171$^{II}$, 171$^{III}$ in einer Cut-Off-Ebene 25 und Ventile 51, 53 in einer nachgeschalteten Steuerebene 27 aufweisen. Zur Zurückführung von Hydraulikmittel 109, das z. B. durch die Pumpengruppe 19" zu viel gefördert ist, bietet die Steuerplatte 167 wenigstens drei Ablassleitungen 133, 134, 135, wodurch Hydraulikmittel 109 in den Tank 149 über wenigstens eine sog. Rücklaufleitung 151 zurückgebracht werden kann. Hierbei kann eine Leckage eines Verbindungselements 173 der Ablassleitung 133 als Druckabbaumittel des Hydraulikmittels 109 bewusst gestaltet sein. Hierdurch bieten ausgewählte Verbindungselemente 173 weitere Sicherheitsfunktionen für die Steuerplatte 167.

Einzelne Verbindungselemente 173$^{III}$ können nicht nur als Steckverbinder gestaltet sein, sondern darüber hinaus als Drosseln für das Hydraulikmittel 109. Soll ein verzögertes An-und/oder Abströmen aus Linearzylindern, z.B. bei der Ansteuerung 11 für Kfz-Komponenten, sichergestellt werden, so können drosselnde Verbindungselemente 173$^{III}$ eine Entkopplung von einem Systemdruck in der Zentraldruckleitung 15$^{III}$ oder von dem Druck der Pumpengruppe 19$^{II}$ herbeiführen.

Die aus dem Tank 149 das Hydraulikmittel 109 ansaugenden Pumpen 21$^I$, 23, die zusammen die Pumpengruppe 19" bilden, sind außerhalb der Steuerplatte 167 an den Verbindungselementen 173$^V$ für die Pumpen 21$^I$, 23 angeschlossen. Der Hydraulikzweig 365$^V$, der als Hydraulikzweig 365$^V$ für die Hydraulikmittelaufbereitung 9" anzusehen ist, umfasst Sperrventile (vgl. auch Figurenbeschreibung zu Figur 2), wodurch eine Druckstabilisierung in der Zentraldruckleitung 15$^{III}$ herstellbar ist.

Von der Zentraldruckleitung 15$^{III}$ führen die Hydraulikzweige 365, 365$^I$, 365$^{II}$, 365$^{III}$, 365$^{IV}$, 365$^V$ weg. In dem Hydraulikzweig 365$^V$ für die Hydraulikmittelaufbereitung 9" ist ein über das Vorsteuerventil 171$^{IV}$ anzusteuerndes Vorranghydraulikkreisventil 159 dafür da, ausgewählten Hydraulikzweigen, wie dem ersten Hydraulikzweig 365 für Kupplungsansteuerungen und Kupplungskühlung einen Vorrang vor weniger wichtigen Hydraulikkreisen wie der Ansteuerung 7$^{II}$ für Karosseriekomponenten zu gewähren. Das Vorranghydraulikkreisventil 159 ist ein hydraulisches Druckwaagenventil mit drei Schaltzuständen. Es schaltet erst bei ausreichendem Druck und einer Ansteuerung durch das Vorsteuerventil 171$^{IV}$ die Rücklaufleitung 151. In einem eher einzunehmenden Schaltzustand wird die Ablassleitung 135, die für die Kühlung der Kupplungen zuständig ist, freigeschaltet. Reicht der über Drucksensoren wie der über den Drucksensor 127 gemessene Druck in dem Hydraulikmittel 109 nicht aus, so verharrt aufgrund der gedämpften Ablassstellung des Vorsteuerventils 171$^{IV}$ das Vorranghydraulikkreisventil 159 in einer Sperrstellung. Das von den Pumpen 21$^I$, 23 geförderte Hydraulikmittel 109 gelangt in diesem Fall über das Sperrventil 103$^{III}$ zu den Druckregelventilen 51, 53 und somit zu den Kupplungsaktuatoren 57, 59. Stellt der Drucksensor 127 eine ausreichende Versorgung und den eingestellten Betrieb durch das Druckregelventil 53 zugunsten des Kupplungsaktuators 59 fest, so schaltet das Vorsteuerventil 171 einen Kolben des Steuerteils des Sperrventils 103$^{III}$ von einer ersten Durchflussstellung 105$^I$ in eine zweite Durchflussstellung 105$^{II}$ oder in eine dritte Durchflussstellung 105$^{III}$. Die dritte Durchflussstellung 105$^{III}$ bietet eine gedrosselte Durchleitung für das Hydraulikmittel 109 zu der Ablassleitung 135. In dem zweiten Schaltzustand, in der Durchflussstellung 105$^{II}$ gelangt das Hydraulikmittel 109 drosselfrei, d. h. ungedrosselt bis zu dem Verbindungselement im Rand 169 der Steuerplatte 167 der Ablassleitung 135. In der ersten Durchflussstellung 105$^I$ gelangt Hydraulikmittel 109 ausschließlich in den Teil des Hydraulikzweigs 365, der für die Steuerung und Regelung der Kupplungsaktuatoren 57, 59 zuständig ist. Mit Hilfe der 3/3-Elektromagnetventile 91 können beliebige Schließgerade der Kupplungsaktuatoren 57, 59 eingestellt werden. Schwingungen auf Leitungen zu den Kupplungsaktuatoren 57, 59 lassen sich durch den Dämpfer 123 verhindern, zumindest aber abmildern. Gelangen unkontrollierte Rückschläge auf die Kupplungsaktuatoren 57, 59, können sich daraus ergebende Überdrücke über die Bypass-Leitung 67, 68 und den darin enthaltenen Sperrventilen 71, 73 in Richtung auf das Sperrventil 103$^{III}$ abgeleitet werden, Soll, z. B. aufgrund eines Messergebnisses des Drucksensors 127, ein Schnelldruckabbau in den Leitungen zu den Kupplungsaktuatoren 57, 59 hergestellt werden, kann das jeweilige Druckregelventil 51, 53 in eine erste, das Hydraulikmedium 109 ableitende Stellung gebracht werden. Zugleich kann über die Bypass-Leitung 67, 68 Hydraulikmittel ausgebracht werden. Hierdurch ist eine Schnellentladung bzw. ein Schnellablass in Richtung auf den Tank 149 möglich.

Dank des Sperrventils 103$^{III}$ können unerwünschte oder unkontrollierte Betriebszustände des Kraftfahrzeuges in Bezug auf seine Kupplungen durch Abkoppeln der Kupplungsaktuatoren 57, 59 von dem übrigen Hydraulikkreis der Hydraulikschaltung 1$^{III}$ abgekoppelt werden. Gleichermaßen können die einzelnen Teilgetriebesteuerungen 17$^{IV}$, 17$^V$ mit Hilfe der Vorsteuerventile 171$^{II}$, 171$^{III}$ totgesetzt werden. Die Cut-Off-Ventile der Cut-Off-Ebene 25 sind pilotgesteuerte Ventile, die in den hydraulischen Ansteuerstrecken Dämpfer 123$^I$, 123$^{II}$ im jenen Hydraulikzweigen 365", 365$^{III}$ aufweisen, in denen hydraulische Schwingungen befürchtet werden können. Die für ein Gangeinlegen zuständigen Stellorgane 37, 39, 41, die z. B. Synchronisierungen ansteuern können, können bei Gangwechseln und Drehzahlanpassungen Rückkopplungen oder Schwingungen in das Hydraulikmittel 109 der Hydraulikschaltung 1$^{III}$ bewirken. Für solche Fälle dämpfen die Dämpfer 123$^I$, 123" und stabilisieren die Lage der jeweiligen Kolben der Cut-Off-Ebenen-Ventile in der Cut-Off-Ebene 25. Eine weitere, aus dem Schaltplan zu entnehmende Stabilisierungsmaßnahme ist der Einbau von Blenden in den Steuerleitungen zwischen den Vorsteuerventilen 171, 171$^{II}$, 171$^{III}$, 171$^{IV}$ und dem jeweils steuernden Ventil. Nachdem Untersuchungen an Versuchsaufbauten des Schaltplans der Hydraulikschaltung 1$^{III}$ zeigten, wo mit Schwingungen zu rechnen ist, wird ggf. zur Schwingungsunterdrückung jeweils eine Blende in Leitungen wie den Steuerleitungen eingebaut, die von den Vorsteuerventilen 171, 171$^{II}$, 171$^{III}$, 171$^{IV}$ kommen.

Aufgrund der Drosseln in den Verbindungselementen 173$^{III}$ der Ansteuerung 11 für Kfz-Komponenten sind keine schwingenden Rückkopplungen aus den Stellorganen für die Kfz-Komponenten zu erwarten, sodass das Steuerventil 157" für die Ansteuerung 11 für Kfz-Komponenten mit einer direkten Pilotansteuerung durch ein Vorsteuerventil (nicht eingezeichnet) des Steuerventils 157" operieren kann (ungedämpfte Pilotansteuerung). Für die Kupplungsaktuatoren 57, 59 wiederum macht es den meisten Sinn, den Dämpfer 123 im Nahbereich des Drucksensors 127 unmittelbar in der Zuleitung zu dem jeweiligen Kupplungsaktuator 57, 59 zu platzieren. Schwingungen in der Zuleitung zu dem jeweiligen Kupplungsaktuator 57, 59 wird über den Dämpferinhalt 123 gedämpft. Zur Stabilisierung der Kolbenlage des Kolbens des jeweiligen Druckregelventils 51, 53 trägt die hydraulische Rückkopplung auf den Kolben noch zusätzlich bei. Eine weitere mögliche Maßnahme liegt in der Auslegung der Durchmesser und dem Anschlussverhalten der Verbindungselemente 173$^{I}$, 173" zu den Kupplungsaktuatoren 57, 59. Die Druckregelung über die Druckregelventile 51, 53 des ersten Hydraulikzweigs 365 der Ansteuerung 3" für Kupplungen hat mehrere Maßnahmen der Stabilisierung. Zusätzlich kann mit Hilfe des Drucksensors 127 eine elektronische Stabilisierung hydraulischer Umladevorgänge und Schwingungen erfolgen.

Eine der beiden Pumpen 21$^{I}$, 23 ist eine hydraulisch geregelte, variable Pumpe 21$^{I}$. Stellt der Drucksensor 127 fest, dass sämtliche Komponenten der Hydraulikschaltung 1$^{III}$ zuverlässig betreibbar sind, kann Energie durch eine hydraulische Reduktion der Förderleistung der verbrennungsmotorisch angetriebenen Pumpe 21$^{I}$ herbeigeführt werden. Aufgrund der über Sperrventile abgekoppelten und daher ausreichend stabilisierten Zentraldruckleitung 15$^{III}$ kann eine phasenweise zuverlässige Kupplungsdruckregelung des Hydraulikzweigs 365 sichergestellt werden, selbst wenn die hydraulisch geregelte Pumpe 21$^{I}$ verzögerte Anlaufphasen hat.

Tritt einmal ein Problem mit der Pumpengruppe 19" auf, so können Ventile wie das Vorranghydraulikkreisventil 159 oder das Sperrventil 103$^{III}$ nach und nach Hydraulikzweige abschalten, die aus Sicherheitsaspekten heraus geringere Bedeutungen für das Kraftfahrzeug haben. Somit bleibt Hydraulikmittel 109 für ein weiteres Schalten der Kupplungsaktuatoren 57, 59 in Abhängigkeit des Reservoirs der Zentraldruckleitung 15$^{III}$ erhalten.

Wie anhand der geringen Anzahl an elektrischen Messaufnehmern, z. B. des Drucksensors 127, zu erkennen ist, ist die Hydraulikschaltung 1$^{III}$ auf der hydraulischen Entwurfsebene bereits mit zahlreichen Sicherheitsfunktionen ausgestattet, sodass eine Entlastung des Steuergeräts der Hydraulikschaltung 1$^{IIII}$ erfolgt.

Die Steuerplatte 167 ist im Zusammenhang mit der Hydraulikschaltung 1$^{III}$ der Figur 5 intensiver vorgestellt worden. Es ist verständlich, dass die in den Figuren 2 bis 4 gezeigten Hydraulikschaltungen 1, 1$^{I}$, 1", jede für sich, ggf. auch in Kombination, auch zumindest in Teilen durch eine gleichartige Steuerplatte wie die Steuerplatte 167 gebildet werden können.

Figur 6 zeigt einen Bereich aus der Figur 2 in vergrößerter und vereinfachter Darstellung, der die Kupplungsansteuerung für die erste und für die zweite Kupplung Doppelkupplungsgetriebes ist.

Figur 6 zeigt die Ansteuerung 3, durch die Kupplungen eines Doppelkupplungsgetriebes betätigt werden können (siehe auch Figur 1). Die Ansteuerung 3 ist in einem eigenständigen Hydraulikzweig 65 realisiert. Der Ausschnitt aus Figur 2, der in Figur 6 dargestellt ist, beginnt ausschnittsweise an der Zentraldruckleitung 15.

Von der Zentraldruckleitung 15 bezieht die Ansteuerung 3 die Arbeitsenergie zur Betätigung der Kupplungsaktuatoren 57, 59. Zur Betätigung der Kupplungsaktuatoren 57, 59 ist jeweils eine B-Seite 99 von dem steuernden Ventil 51, 53 über die Zuleitung 141, 143 zu einem Arbeitsraum 145 des jeweiligen Kupplungsaktuators 57, 59 geführt. Zur Betätigung des ersten Kupplungsaktuators 57 gibt es ein erstes Proportionaldruckregelventil 51. Für die Betätigung des zweiten Kupplungsaktuators 57 gibt es ein zweites Druckregelventil 53, das ein Proportionaldruckregelventil ist. An der Zuleitung 141 ist stichleitungsartig ein Dämpfer 123 angebracht. An der zweiten Zuleitung 143 ist ein Dämpfer 123$^{III}$ angebracht. Die jeweilige Zuleitung 143, 145 wird über einen Drucksensor 125, 127 überwacht. Der Druck in der Zuleitung 141, 143 kann über einen mit der Zuleitung 141, 143 verbundenen Drucksensor 125, 127 gemessen werden. Die Zuleitung 141, 143 fächert sich in eine Bypass-Leitung 67, 68 auf. Wird die Zuleitung 141, 143 von dem Druckregelventil 51, 53 ab betrachtet, so gibt es einen Abzweig, der als Bypass-Leitung 67, 68 ausgestaltet ist. Die Bypass-Leitung 67, 68 führt um das Druckregelventil 51, 53 herum. Die Bypass-Leitung 67, 68 umfasst ein Rückschlagventil 83, 83$^{I}$. Im regulären Betrieb ist das Rückschlagventil 83, 83$^{I}$, das z. B. ein Kugelsitzventil sein kann, in dem dargestellten Sperrzustand 79. Als Druckregelventile 51, 53 eignet sich das dargestellte 3/3-federvorgespannte Magnetventil 91, das variabel über einen Magneten 175 einstellbar ist. Der Magnet 175 bestimmt die Stellung des Kolbens 97, wodurch Durchfluss- und Sperrstellungen variabel einstellbar sind. In einer Stellung gelangt ein Rückfluss, das Hydraulikmittel über die erste Sumpfrückflussleitung 117 in den Tank 149. Eine weitere Sumpfrückflussleitung 119 an einem 3/2-federvorgespannten Elektromagnetventil 93 führt ebenfalls zum Tank 149. Somit kann an mehreren Stellen Hydraulikmittel Richtung Tank 149 abgeführt werden, sofern eine Ablassstellung 107 von dem jeweiligen Ventil wie dem 3/2-federvorgespannten 93 eingenommen ist.

Die Ventile 51, 53, 93 sind über Elektromagneten 175, 175$^{I}$ zu betätigende Kolben bzw. Schieberventile. Die Ventile 51, 53, 93 sind federvorgespannte, mittels der Feder 121" in einer Vorzugsstellung verharrende Ventile. Das 3/2-federvorgespannte Elektromagnetventil 93 verharrt aufgrund der Feder 121" im unbestromten Zustand in der Durchflussstellung 105. Die proportionalen Druckregelventile 51, 53 verharren in einer solchen Stellung, dass Hydraulikmittel, z. B. aus den Bypass-Leitungen 67, 68, über die Sumpfrückflussleitung 117 ausgebracht werden kann.

Die 3/3-federvorgespannten Elektromagnetventile 91 erfahren auf ihrem Kolben 97 eine hydraulische Rückkopplung 95 zur Stabilisierung des über dem Magneten 175 eingestellten Betriebspunkts. Die 3/3-federvorgespannte Elektromagnetventile 91 befinden sich in der Steuerebene 27 bzw. schaffen die Steuerebene 27. Das 3/2-federvorgespannte Elektromagnetventil 93 ist Teil der Cut-Off-Ebene 25.

Der Druck für die Betätigung der Kupplungsaktuatoren 57, 59 kommt von der Zentraldruckleitung 15 und wird wahlweise über das 3/2-federvorgespannte Elektromagnetventil 93 zur Versorgungsseite 101 der Druckregelventile 51, 53 weitergeführt. Von der Versorgungsseite 101 gelangt der hydraulische Druck über die Proportionaldruckregelventile 51, 53 in die Zuleitung 141, 143. Hierdurch kann das Volumen des Arbeitsraumes 145 des Kupplungsaktuators 59 eingestellt werden.

Messwerte der Drucksensoren 125, 127 können sowohl einzeln als auch in Kombination untereinander abgeglichen werden, um den Betrieb der Proportionaldruckregelventile 51, 53 permanent zu überwachen.

Tritt eine unerwartete bzw. unerwünschte Druckschwankung oder ein Überdruck in einer Zuleitung 141, 143 auf, so kann das jeweilige Rückschlagsventil 83, 83ᴵ in der Bypass-Leitung 67, 68 in die Durchflussstellung gehen und Hydraulikmittel auf die Versorgungsseite 101 bzw. auf die Versorgungsleitung bringen.

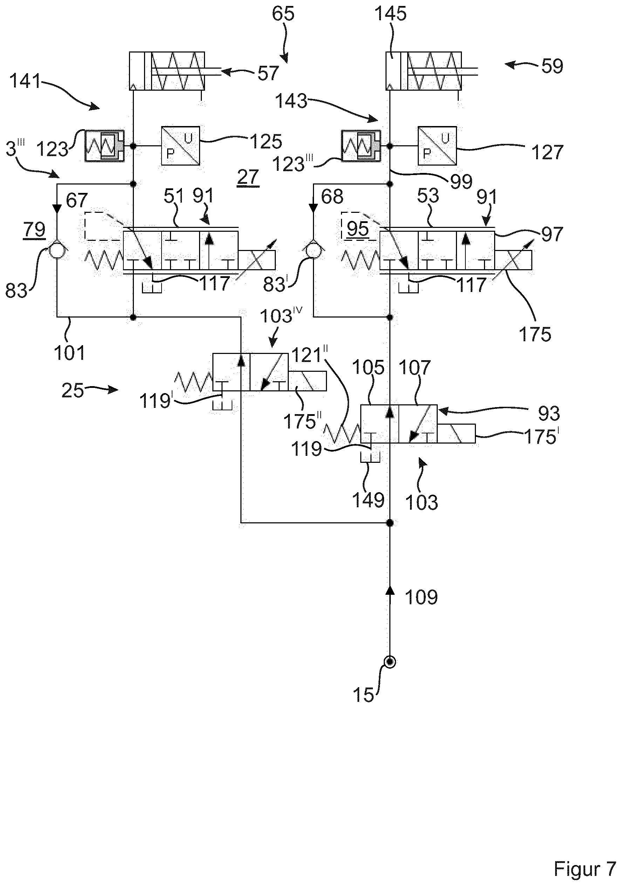

Figur 7 zeigt eine Ansteuerung 3ᴵᴵᴵ, die in weiten Teilen zu der Ansteuerung 3 nach Figur 6 ähnlich, wenn nicht sogar identisch ist. Genauer zeigt Figur 7 eine Ansteuerung 3ᴵᴵᴵ zur Ansteuerung der Kupplungsaktuatoren 57, 59, die in weiten Teilen ähnlich, wenn nicht sogar identisch zu der Ansteuerung 3 nach Figur 6 ist, zumindest in funktioneller Hinsicht. Aus diesem Grund kann die Beschreibung zur Figur 6 (in adaptierter Form) ebenfalls im Zusammenhang mit der Figur 7 betrachtet werden.

Die Ansteuerung 3ᴵᴵᴵ gemäß Figur 7 kann in den Hydraulikschaltungen 1, 1ᴵ, 1ᴵᴵ, 1ᴵᴵᴵ anstelle der dort gezeigten Ansteuerungen 3, 3ᴵ, 3" verbaut sein. Ausgehend von der Druckquelle der Zentraldruckleitung 15 gelangt das Hydraulikmittel 109 über eine Cut-Off-Ebene 25 und eine Steuerebene 27 zu den jeweiligen Arbeitsräumen 145 der Kupplungsaktuatoren 57, 59 des ersten Hydraulikzweigs 65 in Abhängigkeit der Stellung der Kolben 97 der Druckregelventile 51, 53.

Jedem Druckregelventil 51, 53 ist ein eigenes Sperrventil 103, 103ᴵⱽ als Ventil der Cut-Off-Ebene 25 vorgeschaltet. Jedes der Sperrventile 103, 103ᴵⱽ ist als 3/2-federvorgespanntes Elektromagnetventil 93 realisiert. Jedes der Sperrventile 103, 103ᴵⱽ hat somit einen eigenen Magneten 175ᴵ, 175". In Abhängigkeit der Steuerspannung bzw. des Steuerstroms an den jeweiligen Magneten 175ᴵ, 175", der jeweils gegen die Feder 121ᴵᴵ des jeweiligen Sperrventils 103, 103ᴵⱽ entgegen wirkt, können wechselweise eine Durchflussstellung 105 und eine Ablassstellung 107 vom 3/2-federvorgespannten Elektromagnetventil 93 eingenommen werden. In der Ablassstellung 107 ist an dem jeweiligen Sperrventil 103, 103ᴵⱽ eine eigene Sumpfrückflussleitung 119, 119ᴵ durchgeschaltet. Die Sumpfrückflussleitung 119, 119ᴵ führt das Hydraulikmittel 109 gegen den Tank 149 ab.

Die Füllung des Arbeitsraums 145 des Kupplungsaktuators 59 mit Hydraulikmittel 109 erfolgt durch die Einstellung der Durchflüsse durch den Kolben 97 des proportional arbeitenden Druckregelventils 53. Ein solches Ventil lässt sich durch ein 3/3-federvorgespanntes Elektromagnetventil 91 realisieren. Das Druckregelventil 51, 53 ist an eine Zuleitung 141, 143 angeschlossen. Teil des Systems aus Zuleitungen 141, 143 sind Bypass-Leitungen 67, 68, die in der Regel ein Rückschlagsventil 83, 83ᴵ im Sperrzustand 79 aufweisen. Bei einem Anstieg des Drucks in der Zuleitung 141, 143 über den Druck auf der Versorgungsseite 101 der Druckregelventile 51, 53 gelangt das Rückschlagsventil 83, 83ᴵ aus seinem Sperrzustand 79. In der Regel wird die Verbraucherseite 99, an der ein Dämpfer 123, 123ᴵᴵᴵ und jeweils ein Drucksensor 125, 127 angeschlossen ist, über die entsprechende Stellung des Kolbens 97 des Druckregelventils 51, 53 mit bedrucktem Hydraulikmedium 109 beschickt. Von der Verbraucherseite 99 der Druckregelventile 51, 53 führt jeweils eine hydraulische Rückkopplung 95 auf den jeweiligen Kolben 97 zurück. Der Magnet 175 bestimmt durch sein Tastverhältnis bzw. durch das an ihm herrschende Tastverhältnis die Stellung des Kolbens 97. In einer Stellung wird die Zuleitung 141, 143 zur ersten Sumpfrückflussleitung 117 freigeschaltet.

Die Messergebnisse der Drucksensoren 125, 127 wird durch die Dämpfer 123, 123ᴵᴵᴵ vergleichmäßigt.

Der Hydraulikzweig 65 weist mehrere Sumpfrückflussleitungen 117, 119, 119ᴵ an allen Stellgliedern, den Ventilen 51, 53, 103, 103ᴵⱽ in Richtung auf den Tank 149 auf.

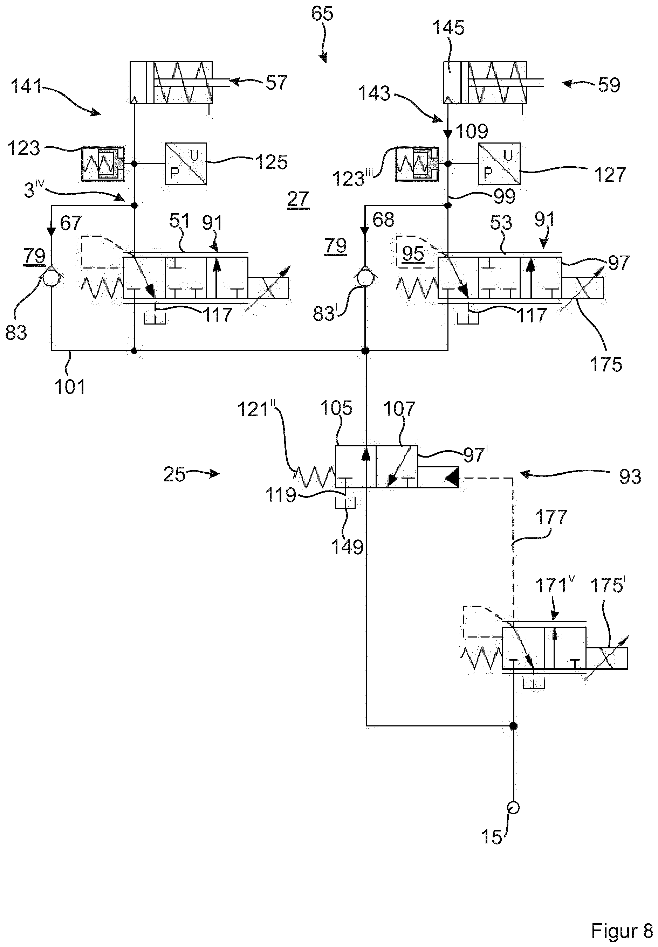

Figur 8 zeigt eine Ansteuerung 3ᴵⱽ, die funktionell den zuvor vorgestellten Ansteuerungen 3, 3ᴵ, 3", 3ᴵᴵᴵ nach den Figuren 2 bis 7 ähnelt, sodass die Erläuterungen zu den Ansteuerungen 3, 3ᴵ, 3", 3ᴵᴵᴵ auf die Ansteuerung 3ᴵⱽ für Kupplungen durch Kupplungsaktuatoren 57, 59 übertragbar sind. Ergo liegt ein Schwerpunkt der Erläuterung der Figur 8 auf Besonderheiten im Vergleich mit den zuvor erläuterten Ansteuerungen 3, 3ᴵ, 3", 3ᴵᴵᴵ des ersten Hydraulikzweigs 65.

Die beiden Druckregelventile 51, 53, die als 3/3-federvorgespannte Elektromagnetventile 91 realisiert sind, sind parallel hydraulisch einem 3/2-federvorgespannten Elektromagnetventil 93 nachgeschaltet. Das 3/2-federvorgespannte Elektromagnetventil 93 setzt sich aus zwei Ventilen zusammen, nämlich dem Vorsteuerventil 171ⱽ und dem Ventil mit dem eigentlichen, hydraulisch betätigten Steuerkolben 97ᴵ. Das Vorsteuerventil 171ⱽ nimmt, wie für einen Hydrauliker anhand der gestrichelten Linie zu erkennen, Einfluss über die Steuerleitung 171. Der als Steuerkolben arbeitende Kolben 97[I] bietet zumindest die beiden Stellungen "Durchflussstellung" 105 und "Ablassstellung" 107. Von diesen beiden Stellungen wird aufgrund einer Federvorspannung der Feder 121" die Durchflussstellung 105 bevorzugt eingenommen. Diese Stellung bleibt eingenommen, solange der Magnet 175[I] des dazugehörigen Vorsteuerventils 171[V] das Vorsteuerventil 171[V] nicht aus der Ablassstellung herausbewegt hat. Das Vorsteuerventil 171[V] ist ein proportional geregeltes Zweistellungsventil, das unterschiedliche Drücke auf den Kolben 97[I] geben kann. Der Kolben 97[I] des Hauptventils gewährt in der Ablaufstellung 107 einen Durchlass in die Sumpfrückflussleitung 119, die auf den Tank 149 geführt ist. Die Cut-Off-Ebene 25 bildet sich somit aus einem zusammengesetzten 3/2-federvorgespannten Elektromagnetventil 93, dessen einer Teil das Vorsteuerventil 171[V] ist. Das Vorsteuerventil 171[V] kann beliebige Zwischenpositionen einnehmen, sodass hierüber der Durchmesser des Kolbens 97[I] der Ablaufbohrung (nicht eingezeichnet) zur Sumpfrückflussleitung 119 veränderlich einstellbar ist. Die Einstellung des Kolbens 97[I] geschieht durch Druck aus der Zentraldruckleitung 15. Der Magnet 175 arbeitet gegen den Druck der hydraulischen Rückkopplung 95 auf den Kolben 97.

Hinter der Cut-Off-Ebene 25 befindet sich die eigentliche Steuerebene 27, die für jeden Kupplungsaktuator 57, 59 ein eigenes Druckregelventil 51, 53 aufweist. Jedes der Druckregelventile 51, 53 hat eine eigene Sumpfrückflussleitung 117. Je nach Einstellung des Kolbens 97 des Druckregelventils 53 (bzw. 51) durch den Magnet 175 lässt sich die Ablaufmenge und damit die Ablaufzeit des Hydraulikmittels 109 aus dem Arbeitsraum 145 des Kupplungsaktuators 57, 59 durch die Zuleitung 141, 143 einstellen. Der Ablauf von der B-Seite 99 zu der Versorgungsseite 101 lässt sich zudem durch das Ansprechverhalten der Rückschlagsventile 83, 83[I] der Bypass-Leitungen 67, 68 einstellen. Bei einem gewünschten Befüllen des Arbeitsraums 145 aufgrund der Kolbenstellung 97 des Druckregelventils 53 verharrt das Rückschlagsventil 83[I] in einem Sperrzustand 79. Soll das Hydraulikmittel 109 von der B-Seite 99 weggeleitet werden, ist das Hydraulikmittel 109 aus dem federvorgespannten Dämpfer 123, 123[III] ebenfalls abzuleiten. Die Rückschlagsventile 83, 83[I] und die Federvorspannung der Dämpfer 123, 123[III] sind in ihren Ansprechpunkten bzw. Kraftpunkten aufeinander abgestimmt. Das Rückschlagsventil 83, 83[I] kann so eingestellt sein, dass die Feder des Dämpfers 123, 123[III] das Hydraulikmittel 109 über die Bypass-Leitung 67, 68 "herausdrücken" kann.

Dank der Drucksensoren 125, 127 kann einem Getriebesteuergerät oder einem Teilgetriebesteuergerät permanent das Druckverhältnis in den Zuleitungen 141, 143 gemeldet werden, sodass die Kupplungsaktuatoren 57, 59 anhand der Drücke in den Zuleitungen 141, 143 untereinander und jeweils individuell überwacht werden können.

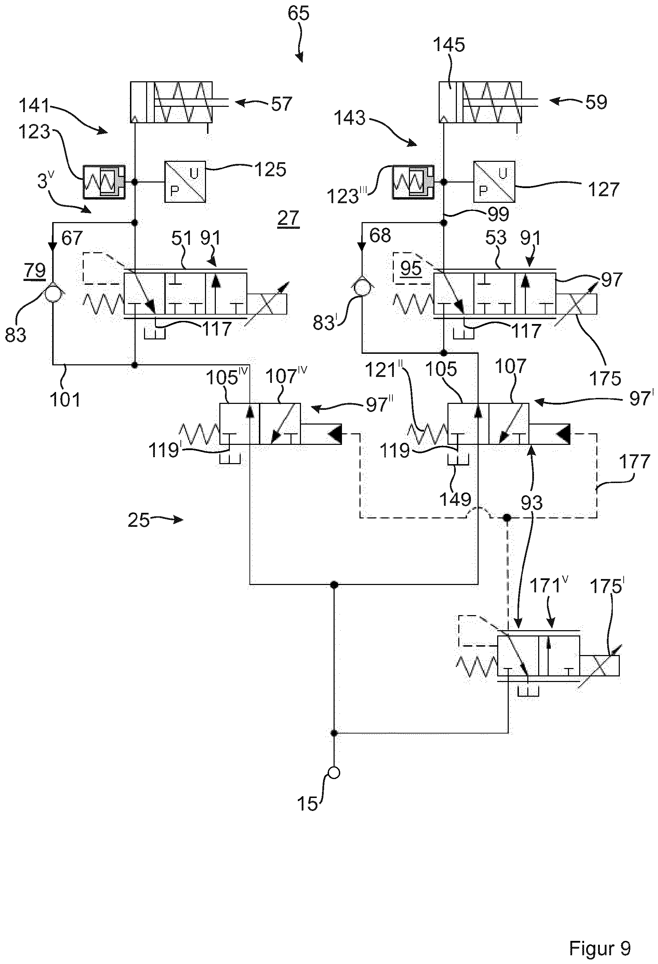

Figur 9 zeigt eine weitere Ausführungsform eines ersten Hydraulikzweiges 65. Die in Figur 9 gezeigte Ansteuerung 3[V] ähnelt - zumindest in funktioneller Hinsicht - in weiten Teilen den zuvor vorgestellten Ansteuerungen 3, 3[I], 3[II], 3[III], 3[IV] für die Kupplungsaktuatoren 57, 59.

Gleichermaßen wie in den Figuren 2, 3, 4, 5, 6, 7 und 8 sind die Kupplungsaktuatoren 57, 59 über Zuleitungen 141, 143 mit den Druckregelventilen 51, 53 verbunden, wobei der Druck in den Zuleitungen 141, 143 über die Drucksensoren 125, 127 (permanent) überwacht werden kann. Zwischen der Versorgungsseite 101 und der Verbraucherseite 99 sind als Steuerelemente in die eine Flussrichtung 3/3-federvorgespannte Elektromagnetventile 91 vorgesehen, bei denen über die Ansteuerung mittels Magnet 175 die Stellung eines Kolbens 97 beeinflusst werden kann.

In der Steuerebene 27 liegen die Bypass-Leitungen 67, 68 mit ihren Rückschlagsventilen 83, 83[I], die im regulären Kupplungsbetrieb in dem Sperrzustand 79 verweilen sollen. Folglich erfolgt die Beeinflussung des Arbeitsraums 145 der Kupplungsaktuatoren 57, 59 durch die Kolbenstellung des Kolbens 97 gegen die Kraft der hydraulischen Rückkopplung 95. Auf der Verbraucherseite 99 sind in jeder Zuleitung 141, 143 ein Drucksensor 125, 127 vorhanden. Der Kolben 97 kann aufgrund seiner Federvorspannung eine solche Stellung einnehmen, dass der Inhalt der Dämpfer 123, 123[III] über die Sumpfrückflussleitungen 117 ausgebracht werden kann.

In der Cut-Off-Ebene 25 ist ein Ventil mit seinem Vorsteuerventil 171[V] vorhanden, das als doppelt ausgeführtes 3/2-federvorgespanntes Elektromagnetventil 93 arbeitet. Das Vorsteuerventil 171[V] steuert zwei Kolben 97[I], 97[II]. Zur Steuerung ist zwischen dem Vorsteuerventil 171[V] und den beiden Kolben 97[I], 97" eine aufgefächerte, in zwei Teile sich aufspaltende Steuerleitung 177 vorhanden. So kann ein Vorsteuerventil 171[V] zwei Kolben 97[I], 97" gleichzeitig steuern. Die Kolben 97[I], 97" arbeiten gleichgerichtet. Nimmt der erste Kolben 97[I] eine Durchflussstellung 105 ein, so nimmt der zweite Kolben 97" eine gleichartige Durchflussstellung 105[IV] ein. Nimmt der zweite Kolben 97" eine Ablaufstellung 107[IV] ein, so nimmt auch aufgrund der Feder 121" der erste Kolben 97[I] eine Ablassstellung 107 ein. In der Ablassstellung 107, 107[IV] wird die jeweilige Sumpfrückflussleitung 119, 119[I], die zum Tank 149 führt, freigeschaltet.

Mit der in Figur 9 dargestellten Cut-Off-Ebene 25 ist es möglich, über einen Magneten 175[I], der Teil des Vorsteuerventils 171[V] ist, zwei Kolben 97[I], 97" gegen ihre jeweiligen Federn 121" zu betätigen. Die jeweils nachgeschalteten Druckregelventile 51, 53 werden jeweils von einem eigenen Kolben 97[I], 97" in einen betriebsbereiten oder in einen abgekoppelten Zustand auf der Versorgungsseite 101 gesetzt. Für den Druck von der Zentraldruckleitung 15 wird sowohl zur Betätigung der Kolben 97[I], 97" als auch zur Versorgung der Kupplungsaktuatoren 57, 59 eine hydraulische Verbindung aufgebaut.

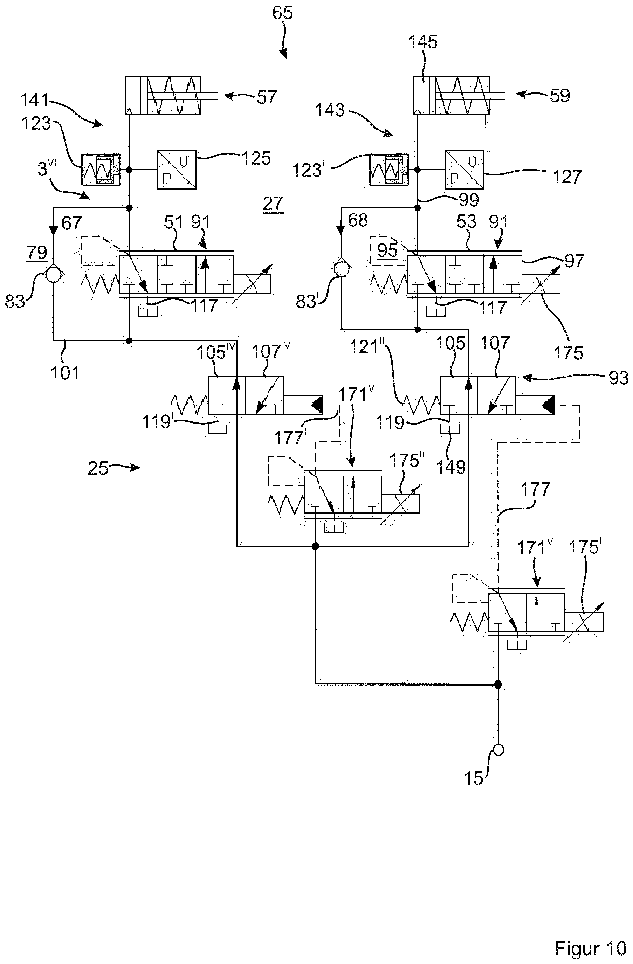

Figur 10 zeigt ein Hydraulikzweig 65, der eine Ansteuerung 3[VI] anhand von vier Ventilen 51, 53, 171[V], 171[VI] realisiert. Die Ansteuerung 3[VI] eines ersten Hydraulikzweigs 65 dient der wahlweisen Befüllung eines Arbeitsraumes 145, der gegen Federn von Kupplungsaktuatoren 57, 59 arbeitet. Genauer, jeder Kupplungsaktuator 57, 59 hat seinen eigenen hydraulischen Arbeitsraum 145, der eine Zuleitung 141, 143 beschließt. Die Steuerebene 27 mit ihren 3/3-federvorgespannten Elektromagnetventilen 91 als Steuerelement zwischen der Versorgungsseite 101 und der Verbraucherseite 99 arbeitet gleichartig zu den Ansteuerungen 3, 3$^I$, 3", 3$^{III}$, 3$^{IV}$, 3$^V$ nach den Figuren 2 bis 9, weil ebenfalls jeweils ein Druckregelventil 51, 53, eine Bypass-Leitung 67, 68 mit einem Rückschlagsventil 83, 83$^I$, ein Dämpfer 123, 123$^{III}$ sowie eine wahlweise ansteuerbare Sumpfrückflussleitung 117 vorhanden sind. Die eingezeichneten Drucksensoren 125, 127, die ebenfalls Teil der Steuerebene 27 sein können, sind fakultative Elemente, die zur Steigerung der Betriebssicherheit der Ansteuerung 3$^{VI}$ in den Zuleitungen 141, 143 vorgehalten werden können.

Die Rückschlagsventile 83, 83$^I$ sind für einen Dauerbetrieb im Sperrzustand 79 konzipiert. Der Sperrzustand 75 der Rückschlagsventile 83, 83$^I$ soll nur dann verlassen werden, wenn die Drucksensoren 125, 127 einen Druckanstieg über den Druck in der Versorgungsseite 101 feststellen. Der von dem Magnet 175 zu betätigende Kolben 97 des Druckregelventils 53 muss gegen die hydraulische Rückkopplung 95 anarbeiten, damit das 3/3-federvorgespannte Elektromagnetventil 91 seine Druckregelfunktion als proportionales Druckregelventil 53 möglichst zuverlässig erfüllt.

In der Cut-Off-Ebene 25 gibt es zwei im Endeffekt als 3/2-federvorgespannte Elektromagnetventile 93 arbeitende Zusammenstellungen aus jeweils einem Vorsteuerventil 171$^V$, 171$^{VI}$ und einer Vorrichtung mit zwei Zuständen. Der eine Zustand ist eine Durchflussstellung 105, 105$^{IV}$. Der andere Zustand ist eine Ablassstellung 107, 107$^{IV}$. In der Ablassstellung 107, 107$^{IV}$ wird die jeweilige zweite Sumpfrückflussleitung 119, 119$^I$ gegenüber einem Tank 149 freigeschaltet. Welche Stellung der beiden Stellungen Durchflussstellung 105, 105$^{IV}$ und Ablassstellung 107, 107$^{IV}$ eingenommen wird, ergibt sich aus dem Zusammenwirken der Federvorspannung der Feder 121$^{II}$ und der entgegengesetzt wirkenden Kraft des jeweiligen Magneten 175$^I$, 175". Jedes Vorsteuerventil 171$^V$, 171$^{VI}$ hat seine eigene Leitung, die als Steuerleitung 177, 177$^I$ operiert. Mithilfe der Steuerleitung 177, 177$^I$ wird die Information des einzunehmenden Schaltzustands von dem Vorsteuerventil 171$^V$, 171$^{VI}$ übertragen. Sowohl die Vorsteuerventile 171$^V$, 171$^{VI}$ als auch die sich aus der Einstellung der Druckregelventile 51, 53 ergebenden Druckverhältnisse auf der Verbraucherseite 99 ergeben sich aufgrund des Druckniveaus in der Zentraldruckleitung 15.

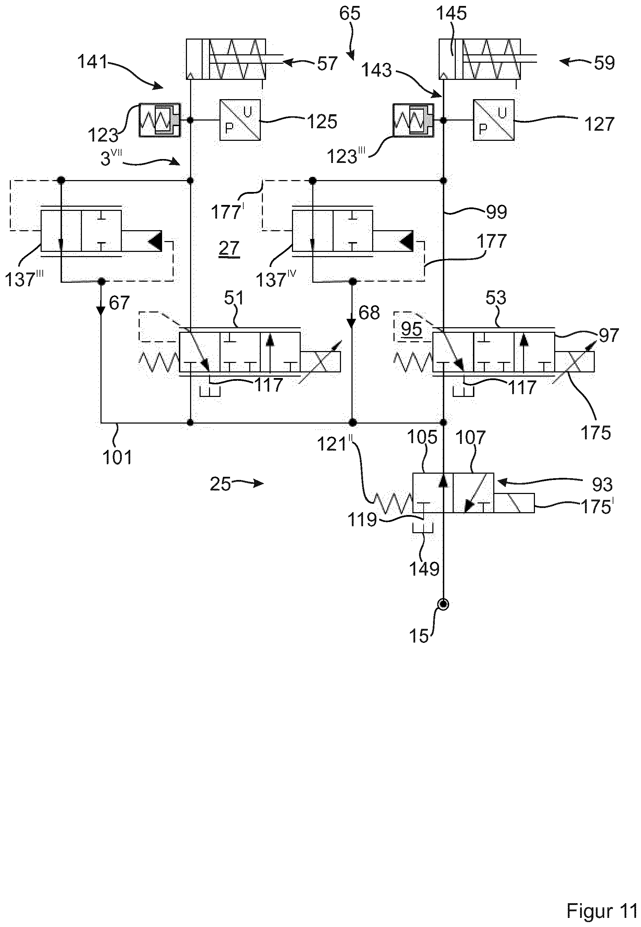

Der erste Hydraulikzweig 65, der in Figur 11 mit seinen beiden Kupplungsaktuatoren 57, 59 gezeigt ist, stellt eine weitere Variante einer Ansteuerung 3$^{VII}$ für diese Kupplungsaktuatoren 57, 59 dar.

Die Cut-Off-Ebene 25 der Ansteuerung 3$^{VII}$ ähnelt mit ihrem 3/2-federvorgespannten Elektromagnetventil 93, das eine erste Stellung, eine Durchflussstellung 105, und eine zweite Stellung, eine Ablassstellung 107 zur Sumpfrückflussleitung 119 aufweist, dem Sperrventil 103 des Hydraulikzweigs 65 nach Figur 2. In beiden Darstellungen, der nach Figur 11 und der nach Figur 2, ist das 3/2-federvorgespannte Elektromagnetventil 93 mit einem Anschluss an der Zentraldruckleitung 15 angeschlossen und mit dem anderen Anschluss an der auf den Tank 149 führenden Sumpfrückflussleitung 119. Das 3/2-federvorgespannte Elektromagnetventil 93 wird elektrisch über den Magneten 175$^I$ angesteuert und wirkt gegen die Feder 121$^{II}$. Die Feder 121$^{II}$ ist Teil des die Cut-Off-Ebene 25 repräsentierenden Ventils 93. Die Cut-Off-Ebene 25 kann die Versorgungsseite 101 der Druckregelventile 51, 53 abschalten.

Die Baugruppe aus Kupplungsaktuator 57, 59, Dämpfer 123, 123$^{III}$ und Drucksensor 125, 127 auf der Verbraucherseite 99 entspricht als Teil der Zuleitung 141, 143 zu dem Arbeitsraum 145 den zuvor erläuterten Darstellungen der Ansteuerungen 3, 3$^I$, 3", 3$^{III}$, 3$^{IV}$, 3$^V$, 3$^{VI}$. Die oben stehenden Beschreibungen der Steuerebene 27 in Bezug auf die genannte Baugruppe Dämpfer 123, 123$^{III}$, Drucksensor 125, 127, Zuleitung 141, 143, Kupplungsaktuator 57, 59 ist daher auch auf die Darlegung der Figur 11 zu übertragen.

In den Bypass-Leitungen 67, 68 sind Druckwaagenventile 137$^{III}$, 137$^{IV}$. Aus den Schaltsymbolen ergibt sich, dass die Druckwaagenventile 137$^{III}$, 137$^{IV}$ nur bei einem Druckunterschied über die Druckwaagenventile 137$^{III}$, 137$^{IV}$ in eine Durchlassstellung gegenüber der Versorgungsseite 101 schalten können. Für die Ermittlung der Druckverhältnisse an den Steuerseiten eines Druckwaagenventiles 137$^{III}$, 137$^{IV}$ sind von einer Bypass-Leitung 67, 68 zwei Steuerleitungen 177, 177$^I$ abgezweigt. Die Bypass-Leitung 67, 68 dient für das Ableiten des Drucks. Zugleich dient die Bypass-Leitung 67, 68 als Quelle für die Steuerleitungen 177, 177$^I$, durch die die Bypass-Leitung 67, 68 entweder durchgeschaltet wird oder gesperrt wird. Zur Betätigung der Kupplungsaktuatoren 57, 59 wird der jeweilige Magnet 175 des jeweiligen Druckregelventils 51, 53 betätigt, damit der Kolben 97, der andernends durch die hydraulische Rückkopplung 95 eingespannt ist, seine Ablassstellung, in der die Verbraucherseite 99 gegenüber der Sumpfrückflussleitung 117 durchgeschaltet ist, verlässt.

Die Steuerebene 27 wird in Bezug auf das Druckniveau durch die Druckregelventile 51, 53 im regulären Betrieb bestimmt. Die Druckverhältnisse werden durch das Druckwaagenventil 137$^{III}$, 137$^{IV}$ bei Überdrücken auf der Verbraucherseite 99 beeinflusst. Das Ansprechverhalten der Druckwaagenventile 137$^{III}$, 137$^{IV}$ kann durch Ringkolbenverhältnisse der Flächen des Schiebers auf einen Druckunterschied von z. B. $\Delta$p von 0,2 bar eingestellt werden.

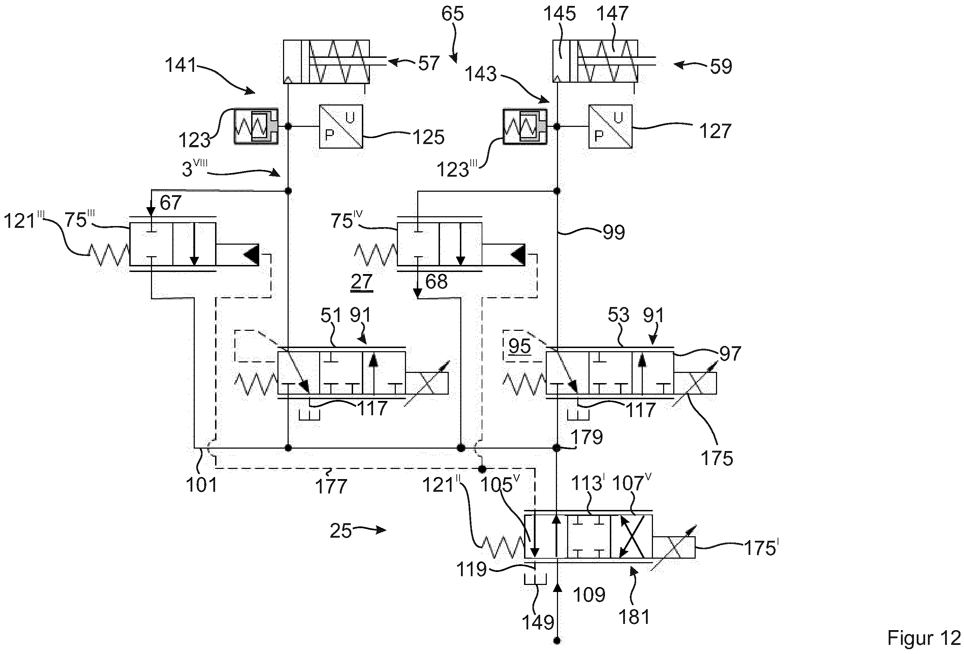

Figur 12 variiert in der in Figur 12 gezeigten Ansteuerung 3$^{VIII}$ die Steuerung der Bypass-Leitung 67, 68. In Figur 11 wird mithilfe von Druckwaageventilen 137$^V$; 137$^{VI}$ um die Druckregelventile 51, 53 herum ein Ansprechen geregelt. Im Vergleich mit der Ansteuerung 3$^{VII}$ nach Figur 11 zeigt die Ansteuerung 3$^{VIII}$ Zweizustandssperrventile 75$^{III}$, 75$^{IV}$, die von einem Ventil 181 der Cut-Off-Ebene 25 betätigbar sind. Hierzu hat das Ventil 181 vier Anschlüsse und drei Zustände. Mit Hilfe der Anschlüsse des Ventils 181 können sowohl eine Arbeitsleitung 179 als auch eine Steuerleitung 177 angesprochen bzw. gesteuert werden. Folglich kann das Ventil 181 der Cut-Off-Ebene 25 auch als Doppelsteuerungsventil bezeichnet werden. Das Ventil 181 steuert sowohl eine Steuerleitung 177 als auch eine Arbeitsleitung 179 aufgrund seiner Schaltstellungen.

Figur 12 zeigt den ersten Hydraulikzweig 65, bei dem statt passiv agierender Rückschlagventile in den Bypass-Leitungen 67, 68 aktiv ansteuerbare Zweistellungsventile 75$^{III}$, 75$^{IV}$, insbesondere Kolbenschieberventile, vorhanden sind. Die Bypass-Leitungen 67, 68 können so über die Cut-Off-Ebene 25 bzw. das Ventil 181 in der Cut-Off-Ebene 25 gesteuert werden.

An der Verbraucherseite 99, d. h. hinter den Regelventilen 51, 53 sind sowohl die Verbraucher, die als Linearzylinder 147 mit einem hydraulischen Arbeitsraum 145 arbeitenden Kupplungsaktuatoren 57, 59 als auch die Zusatzelemente wie die Dämpfer 123, 123$^{III}$ und die Drucksensoren 125, 127 angeordnet. Somit ist jedem Regelventil 51, 53 ein eigener Linearzylinder 147, d. h. ein eigener Kupplungsaktuator 57, 59, ein eigener Dämpfer 123, 123$^{III}$ und ein eigener Drucksensor 125, 127 zugeordnet. Die erste Verbraucherseite 99 des ersten Regelventils 51 bildet sich aus der ersten Zuleitung 141, an der die weiteren Elemente wie Bypass-Leitung 67 angeschlossen sind. Die zweite Verbraucherseite 99 des zweiten Regelventils 53 erstreckt sich entlang der zweiten Zuleitung 143. An der Zuleitung 143 ist der dazugehörige Dämpfer 123$^{III}$ und der dazugehörige Drucksensor 127 angeschlossen. Von der zweiten Zuleitung 143 weicht die zweite Bypass-Leitung 68 ab.

Durch die direkte Kopplung zwischen dem Regelventil 51, 53 und dem Arbeitsraum 145 des Linearzylinders 147 wirkt sich die exakte Stellung des Kolbens 97 auf den Durchfluss oder Abfluss von Hydraulikmittel 109 aus. Der Elektromagnet 175 kann unterschiedliche Kolbenpositionen des Kolbens 91 entgegen der Kraft der Rückkopplung 95, genauer der hydraulischen Rückkopplung 95 einstellen. In einem Kolbenstellbereich wird ein Durchfluss bzw. Abfluss über die Sumpfrückflussleitung 117 freigeschaltet.

Die Steuerebene 27 umfasst die vier Ventile erstes Regelventil 51, zweites Regelventil 53, erstes Zweizustandssperrventil 75$^{III}$, zweites Zweizustandssperrventil 75$^{IV}$. In der Cut-Off-Ebene 25 gibt es das Doppelsteuerungsventil 181.

Das Doppelsteuerungsventil 181 hat einen eigenen Magneten 175$^I$, der ebenfalls das Ventil 181 anhand seiner Kolbenpositionen proportional einstellen kann. Somit bilden sich bei den Stellungen wie der Durchflussstellung 105$^V$, der Mittenstellung 1$^{13I}$ und der Ablassstellung 107$^V$ Steuerbereiche bzw. Stellungsbereiche aus. Der Magnet 175$^I$ wirkt gegen die Feder 121$^{II}$. In der Durchflussstellung 105$^V$ gelangt Hydraulikmittel 109 aus der Steuerleitung 177 in die zweite Sumpfrückflussleitung 119 und somit in den Tank 149. Hydraulikmittel 109, das unter Druck steht, gelangt in der Durchflussstellung 105$^V$ zur Versorgungsseite 101 über die Arbeitsleitung 179. Befindet sich das Ventil 181 in der Ablassstellung 107$^V$, gelangt Hydraulikmittel 109 in die Steuerleitung 177 und das Hydraulikmittel 109 von der Versorgungsseite 101 kann in Richtung auf den Tank 149 über die Sumpfrückflussleitung 119 abströmen.

Das durch das Ventil 181 durchgeströmte Hydraulikmittel 109 wirkt auf die Zweistellungsventile 75$^{III}$, 75$^{IV}$, in denen jeweils eine Feder 121$^{III}$ vorhanden ist, die den Kolben in einer Vorzugssperrstellung hält. Ist der hydraulische Druck über die Steuerleitung 179 höher als der Druck der Feder 121$^{III}$ bzw. die Kraft der Feder 121$^{III}$, so öffnet das jeweilige Zweistellungsventil 75$^{III}$, 75$^{IV}$ in die Durchlassstellung. Auf diese Weise kann aktiv beeinflusst werden, insbesondere über die Ansteuerung des Magneten 175$^I$ des Doppelsteuerungsventils 181, ob beschleunigt Hydraulikmittel 109 aus einer oder beiden Zuleitungen 141, 143 abfließen soll.

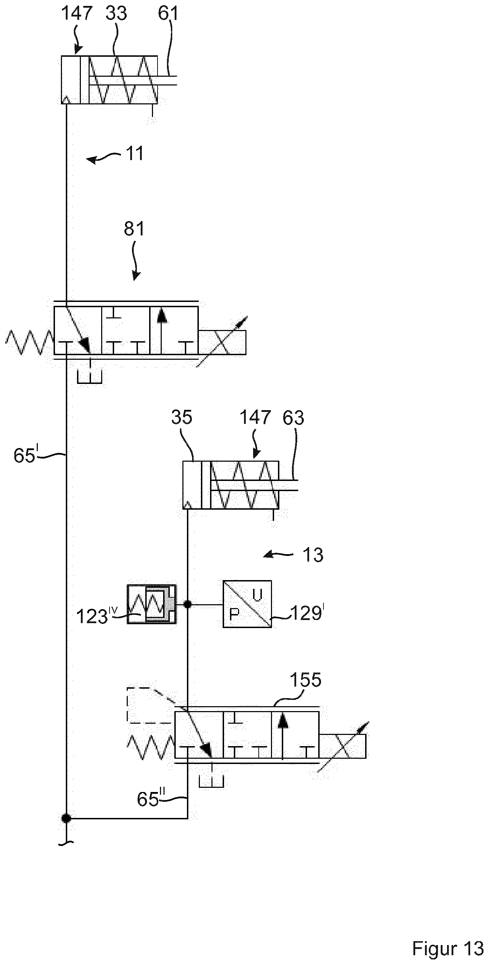

Figur 13 zeigt den, z. B. aus Figur 2 bekannten, zweiten Hydraulikzweig 65$^I$, der eine weitere Kupplungssteuerung und -regelung darstellt. Von dem zweiten Hydraulikzweig 65$^I$ geht ein dritter Hydraulikzweig 65" ab, der ebenfalls mit einem Linearzylinder 147 aufgebaut ist. Mit anderen Worten, sowohl in der Steuerung, die als Kupplungssteuerungsschaltung 11 bezeichenbar ist, als auch in der Steuerung, die als Differentialansteuerung 13 arbeitet, ist ein Linearzylinder 147. Der eine Linearzylinder 147 arbeitet als drittes Stellorgan 33 in einer Hydraulikschaltung, die so aufgebaut sein kann, wie die Hydraulikschaltung 1 nach Figur 2, so wie die Hydraulikschaltung 1$^I$ nach Figur 3, so aufgebaut sein kann wie die Hydraulikschaltung 1" nach Figur 4 oder so aufgebaut sein kann, wie die Hydraulikschaltung 1$^{III}$ nach Figur 5. Zusätzlich ist ein viertes Stellorgan 35 vorhanden, das sich auf Grundlage des zweiten Linearzylinders 147 bildet. Der erste Linearzylinder 147 ist somit der dritte Kupplungsaktuator 61 in einer Schaltung ähnlich zu den zuvor vorgestellten Hydraulikschaltungen, also ähnlich zu den Hydraulikschaltungen 1 (Figur 2), 1$^I$ (Figur 3), 1" (Figur 4) oder 1$^{III}$ (Figur 5). Mit dem fünften Kupplungsaktuator 63 kann ein weiteres, den Kraftfluss steuerndes Element, z. B. ein Getriebedifferential, angesteuert werden, z. B. blockiert werden. Damit keine Schwingungen in der Differentialansteuerung 13 auftreten, ist ein Dämpfer 123$^{IV}$ zwischen einem Steuerventil 155 für die Differentialsteuerung 13 und dem vierten Stellorgan 35 vorhanden. Als zusätzliche Sicherheitsmaßnahme ist ein vierter Drucksensor 129$^I$ in der Verbindungsleitung zwischen Steuerventil 155 und Stellorgan 35.

Wie der Figur 13 zu entnehmen ist, ist es möglich, in den Hydraulikzweigen 65$^I$, 65" sowohl ein proportionales Flussregelventil 81 als auch ein proportionales Druckregelventil als Steuerventil 155 einzusetzen. Geht es simpel nur um die Ansteuerung eines Schließpunktes, mag das proportionale Flussregelventil 81 seine Aufgabe erfüllen. Soll darüber hinaus eine Überblendfunktion möglichst genau geregelt werden, vereinfacht die Verwendung eines Proportionaldruckregelventils, wie das Steuerventil 155, die Steuerung eines Stellorgans wie dem vierten Stellorgan 35.

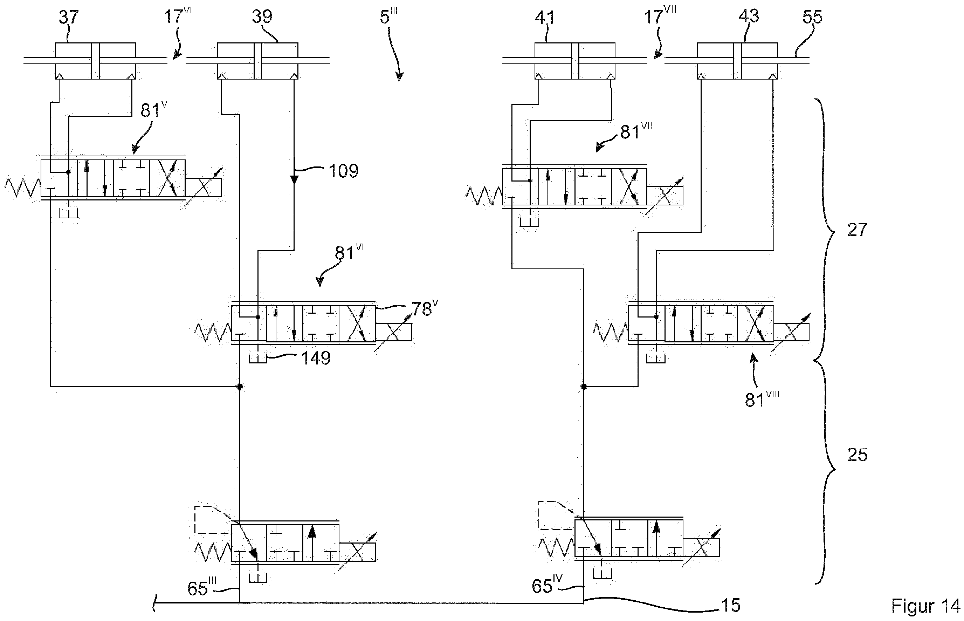

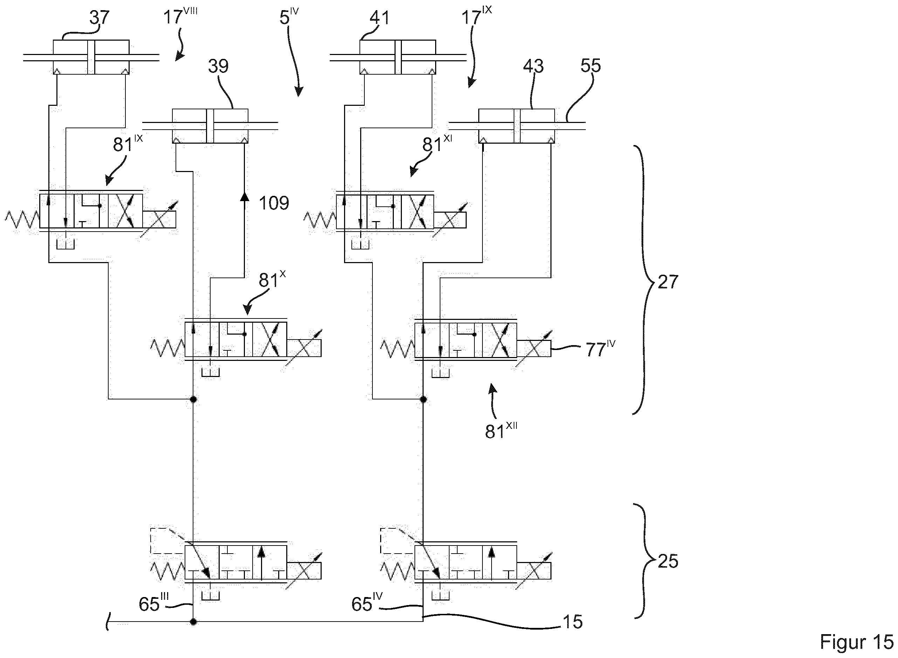

Figur 14 zeigt in größerer Detailschärfe einen Auszug aus dem vierten Hydraulikzweig 65$^{III}$ und dem fünften Hydraulikzweig 65$^{IV}$, die die Stellorgane fünftes Stellorgan 37, sechstes Stellorgan 39, siebtes Stellorgan 41 und achtes Stellorgan 43 umfassen. Jedes der Stellorgane 37, 39, 41, 43 ist für die Ansteuerung einer, vorzugsweise synchronisierten, Gangeinlegestufe mittels Schaltmuffe ausgelegt. Aufgrund der mehreren Teilgetriebe gibt es eine erste Teilgetriebesteuerung $17^{VI}$ und eine zweite Teilgetriebesteuerung $17^{VII}$. Auch in Bezug auf die Teilgetriebesteuerung $17^{VI}$, $17^{VII}$ wird die Aufteilung in Steuerebene 27 und Cut-Off-Ebene 25 verfolgt. Die Cut-Off-Ebene 25 koppelt den jeweiligen Zweig $65^{III}$, $65^{IV}$ der Teilgetriebesteuerung $17^{VI}$, $17^{VII}$ ab. Mittels Flusssteuerungsventile $81^V$, $81^{VI}$, $81^{VII}$, $81^{VIII}$ kann die genaue Lage des Aktuators 55 eines jeden Stellorgans 37, 39, 41, 43 eingestellt werden. Hierdurch lässt sich jeweils in Abhängigkeit des einzelnen Stellorgans 37, 39, 41, 43 ein Gang ein- und auslegen. Soll die Möglichkeit des Gangein- oder -auslegens unterbunden werden, kann mittels der Cut-Off-Ebene 25 die Zentraldruckleitung 15 der Ansteuerung $5^{III}$ für Muffen abgekoppelt werden. Jedes der Flusssteuerungsventile $81^V$, $81^{VI}$, $81^{VII}$, $81^{VIII}$ besitzt vier proportional ansteuerbare Schaltzustände. In jedem Schaltzustand werden bis zu vier Leitungen verbunden. Ein solches Flusssteuerungsventil $81^V$, $81^{VI}$, $81^{VII}$, $81^{VIII}$ ist ein 4/4-Proportionalflussregelventil. Die Federvorspannung drückt den Kolben eines Flusssteuerungsventils $81^V$, $81^{VI}$, $81^{VII}$, $81^{VIII}$ in eine Entlastungsstellung, in der das angeschlossene Stellorgan 37, 39, 41, 43 druckfrei, idealerweise ölfrei geschaltet wird, indem das Hydraulikmittel 109 in den Tank 149 abläuft. Durch die anderen Schaltstellungen des jeweiligen Flusssteuerungsventils $81^V$, $81^{VI}$, $81^{VII}$, $81^{VIII}$ verändert sich die Position des Ringkolbens des Aktuators 55 nach links oder nach rechts oder wird - in einer Stellung - konstant gehalten. Somit handelt es sich bei den Flusssteuerungsventilen $81^V$, $81^{VI}$, $81^{VII}$, $81^{VIII}$ um Vierzustandsventile $78^V$. Es ist verständlich, dass an Stelle von Vierzustandsventilen $78^V$ auch einzelne Ventile durch Dreizustandsventile $77^{IV}$, wie in Figur 15 gezeigt, ersetzt werden können. Die in Figur 14 gezeigte Ansteuerung $5^{III}$ für Muffen kann an Stelle von einer Ansteuerung 5 gem. Figur 2 die Hydraulikzweige $65^{III}$ und $65^{IV}$ bilden.

Figur 15 zeigt eine alternative Ausgestaltung einer Ansteuerung $5^{IV}$, durch die einzelne Gänge mittels Muffen eingelegt werden können. In Teilen oder in Gänze kann die Ansteuerung $5^{IV}$ nach Figur 15 die Ansteuerung $5^{III}$ nach Figur 14 oder die Ansteuerung 5 nach Figur 2 substituieren.

Figur 15 zeigt eine Ansteuerung $5^{IV}$ für Schaltmuffen, wobei vier Gänge in einem Hydraulikzweige $65^{III}$, $65^{IV}$ über das jeweilige Ventil der Cut-Off-Ebene 25 zusammengefasst sind. Mittels einem Cut-Off-Ventil kann ein kompletter Hydraulikzweig $65^{III}$, $65^{IV}$ abgekoppelt werden.

In dem Schaltplan der Figur 15 ist zu sehen, dass vier Ventile $81^{IX}$, $81^X$, $81^{XI}$, $81^{XII}$, die Flusssteuerungsventile sind, die Steuerungsebene 27 ausmachen. Jedes der vier Ventile $81^{IX}$, $81^X$, $81^{XI}$, $81^{XII}$ ist ein Dreizustandsventil $77^{IV}$. Mittels einem Zustand eines Flusssteuerungsventiles $81^{IX}$, $81^X$, $81^{XI}$, $81^{XII}$ kann Hydraulikmittel 109 in die eine Kammer eines Stellorgans 37, 39, 41, 43 geleitet werden, während Hydraulikkammer aus einer gegenüberliegenden Kammer des Stellorgans 37, 39, 41, 43 abgeleitet wird. Jedes der Stellorgane ist ein zylindrisch ausgeführter Aktuator 55 mit zwei gegenläufigen Kammern.

Mit anderen Worten, der erste Hydraulikzweig $65^{III}$ entspricht der ersten Teilgetriebesteuerung $17^{VIII}$, der zweite Hydraulikzweig $65^{IV}$ entspricht der zweiten Teilgetriebesteuerung $17^{IX}$. Die beiden Teilgetriebesteuerungen $17^{VIII}$, $17^{IX}$ bilden zusammen die Ansteuerung $5^{IV}$ für die Gangwahl.

In Figur 16 werden Strömungsquerschnitte einer Bypass-Leitung $67^I$ und um diese herum dargestellt. Figur 16 zeigt einen Ausschnitt aus einem Druckregelventil $51^I$, ein Stück einer Zuleitung $141^I$, eine daran angeschlossene Bypass-Leitung $67^I$, ein Sperrventil $71^I$ und zwei Sumpfrückflussleitungen $117^I$, $119^{II}$.

Der in Figur 16 gezeigte Schaltungsausschnitt kann an jeder der Stellen um die Ventile 51, 53 in den Kupplungssträngen wie dem Kupplungsstrang 365 nach Figur 5 in Schaltungen 1, $1^I$, $1^{II}$, $1^{III}$ nach einem der Figuren 2, 3, 4 und 5 vorhanden sein. Mit anderen Worten, es ist möglich, in jede der vorgestellten Schaltungen Leitungsabschnitte mit leitungsweise unterschiedlichen Querschnitten einzubauen.

Das Druckregelventil $51^I$ ist nur ausschnittsweise dargestellt. In dem Ausschnitt des Druckregelventils $51^I$ ist der Kolben $97^{III}$ in einer Ablaufstellung $111^I$ dargestellt. Durch die Stellung des Kolbens $97^{III}$ ist eine Hydraulikmittelverbindung zwischen einem ersten Port 183, der der Port für den Arbeitsanschluss ist, und einem zweitem Port 185, der der Port für einen Tankanschluss ist, hergestellt. Der Port, wie der Port 183 für den Arbeitsanschluss, ist mit einem ersten Durchmesser 187 ausgestattet. Durch diesen Durchmesser 187 bestimmt sich im Wesentlichen der Hydraulikmittelfluss 195, der durch das Ventil $51^I$ in die Sumpfrückflussleitung $117^I$ ableitbar ist. Die Zuleitung $141^I$ hat zumindest einen Durchmesser $191^I$, der im Bereich der Anbindung an den Port 183 für den Arbeitsanschluss zu messen ist. Der Durchmesser $191^I$ ist auf den Durchmesser 187 des Ports 183 abgestimmt. Der Port 183 für den Arbeitsanschluss hat einen geringeren Durchmesser 187 als den Durchmesser $191^I$, der an einer Stelle der Zuleitung $141^I$ ausgebildet ist. Die Zuleitung $141^I$ ist vorteilhafterweise mit einem Durchmesser 191 jenseits der Bypass-Leitung $67^I$ und mit einem hierzu verringerten Durchmesser $191^I$ unmittelbar vor dem Port 183 ausgestattet. Die Durchmesser 191, $191^I$ bestimmen die Stärke des Hydraulikmittelflusses 195, 197 durch die Zuleitung $141^I$, insbesondere im Falle der Ableitung über die Sumpfrückflussleitung $117^I$.

Im Betrieb befindet sich das Hydraulikmittel 109 in allen Leitungsteilen, also in der Zuleitung $141^I$ und in der Bypass-Leitung $67^I$. Die Bypass-Leitung $67^I$ hat einen Durchmesser 189, der größer ist als der Durchmesser 187 des Ports 183. Die Bypass-Leitung $67^I$ ist über das erste Sperrventil $71^I$ geführt. Das Sperrventil $71^I$ hat einen Kolben $97^{IV}$. Der Kolben $97^{IV}$ findet seine Stellung aufgrund von Druckunterschieden des Hydraulikmittels 109 und gegebenenfalls aufgrund einer Kolbenkraft 199 für eine Vorspannung auf den Kolben $97^{IV}$. Die Durchmesser 187, 189, $189^I$, 191, $191^I$ sind so gestaltet, dass ein wesentlicher Anteil des Hydraulikmittelflusses 197 über das Sperrventil $71^I$ ableitbar ist, wenn der Kolben $97^{IV}$ in einer geöffneten Stellung ist. In diesem Fall gelangt der wesentliche Anteil des Hydraulikmittels 109 über die Sumpfrückflussleitung 119" in Richtung eines Sumpfes oder Tanks. Der Hydraulikmittelfluss, der über ds Sperrventil $71^I$ ausgeleitet wird, ist der Hauptentlastungsfluss 193. Der Hauptentlastungsfluss 193 geht aus dem Gesamthydraulikmittelfluss 197 hervor. Ein geringerer Anteil des Hydraulikmittels 109 wird als zweiter Hydraulikmittelfluss 195 ausgeleitet.

Es ist möglich, auch mehr als vier Kupplungen in einem Getriebestrang anzuordnen. Natürlich kann die Hydraulikschaltung auch für ein Getriebe verwendet werden, das mehr oder weniger als acht Gänge aufweist.

## Bezugszeichenliste

| Bezugszeichen | Bezeichnung |
|---|---|
| 1, $1^I$, $1^{II}$, $1^{III}$ | Hydraulikschaltung |
| 3, $3^I$, $3^{II}$, $3^{III}$, $3^{IV}$, $3^V$, $3^{VI}$, $3^{VII}$, $3^{VIII}$ | Ansteuerung, insbesondere für Kupplungen, vorzugsweise des Doppelkupplungsgetriebes |
| 5, $5^I$, $5^{II}$, $5^{III}$, $5^{IV}$ | Ansteuerung, insbesondere für Muffen |
| 7, $7^I$, $7^{II}$ | Ansteuerung, insbesondere für aerodynamische Kfz-Komponenten |
| 9, $9^I$, $9^{II}$ | Hydraulikmittelaufbereitung |
| 11, $11^I$ | Kupplungssteuerungsschaltung |
| 13 | Differentialansteuerung |
| $13^I$ | Kupplungssteuerungsschaltung |
| 15, $15^I$, $15^{II}$, $15^{III}$ | Zentraldruckleitung bzw. Systemdruckleitung, insbesondere als Druckquelle |
| 17, $17^{II}$, $17^{III}$, $17^{IV}$, $17^V$, $17^{VI}$, $17^{VII}$, $17^{VIII}$, $17^{IX}$ | Teilgetriebesteuerung |
| 19, $19^I$, $19^{II}$ | Pumpengruppe, insbesondere als Druckquelle |
| 21, $21^I$ | erste Pumpe, insbesondere verbrennungsmotorisch angetriebene Pumpe |
| 23 | zweite Pumpe, insbesondere elektromotorisch angetriebene Pumpe |
| 25 | Cut-Off-Ebene |
| 27 | Steuerebene |
| 29 | erstes Stellorgan, insbesondere ein federvorgespannter Differentialzylinder |
| 31 | zweites Stellorgan, insbesondere ein federvorgespannter Differentialzylinder |
| 33, $33^I$ | drittes Stellorgan, insbesondere ein federvorgespannter Differentialzylinder |
| 35 | viertes Stellorgan, insbesondere ein federvorgespannter Differentialzylinder |
| 37 | fünftes Stellorgan, insbesondere ein Gleichlaufzylinder mit wenigstens drei Stellungen |
| 39 | sechstes Stellorgan, insbesondere ein Gleichlaufzylinder mit wenigstens drei Stellungen |
| 41 | siebtes Stellorgan, insbesondere federvorgespannte Kolben-Zylinderanordnung |
| 43 | achtes Stellorgan, insbesondere federvorgespannte Kolben-Zylinderanordnung |

| Bezugszeichen | Bezeichnung |
|---|---|
| 51, 51$^I$ | erstes Druckregelventil |
| 53 | zweites Druckregelventil |
| 55 | Aktuator |
| 57 | erster Kupplungsaktuator |
| 59 | zweiter Kupplungsaktuator |
| 61 | dritter Kupplungsaktuator |
| 61$^I$ | vierter Kupplungsaktuator |
| 63 | fünfter Kupplungsaktuator |
| 63$^I$ | sechster Kupplungsaktuator |
| 65, 65$^I$, 65$^{II}$, 65$^{III}$, 65$^{IV}$, 65$^V$, 165, 165$^I$, 165$^{II}$, 165$^{III}$, 165$^{IV}$, 265$^{III}$, 365, 365$^I$, 365$^{II}$, 365$^{III}$, 365$^{II}$, 365$^V$ | Hydraulikzweig |
| 165-1, 165-2, 165-3, 165$^{II}$-1, 165$^{II}$-2, 165$^{II}$-3 | hydraulischer Teilzweig bzw. hydraulischer Strang |
| 67, 67$^I$ | erste Bypass-Leitung |
| 68 | zweite Bypass-Leitung |
| 69, 69$^I$ | dritte Bypass-Leitung |
| 71, 71$^I$ | erstes Sperrventil |
| 73 | zweites Sperrventil |
| 75, 75$^I$, 75$^{II}$, 75$^{III}$, 75$^{IV}$ | Zweizustandssperrventil |
| 77, 77$^I$, 77$^{II}$, 77$^{III}$, 77$^{IV}$ | Dreizustandsventil |
| 78, 78$^I$, 78$^{II}$, 78$^{IV}$, 78$^V$ | Vierzustandsventil |
| 79 | Sperrzustand |
| 81, 81$^I$, 81$^{II}$, 81$^{III}$, 81$^{IV}$, 81$^{VI}$, 81$^{VII}$, 81$^{VIII}$, 81$^{IX}$, 81$^X$, 81$^{XI}$, 81$^{XII}$ | Flussregelventil |
| 83, 83$^I$ | Rückschlagsventil |
| 85 | Zuleitung |
| 87 | Überdruck bzw. Druckdifferenz |
| 89 | Durchflussrichtung |
| 91 | 3/3-federvorgespanntes Elektromagnetventil |
| 93 | 3/2-federvorgespanntes Elektromagnetventil |
| 95 | Rückkopplung, insbesondere hydraulische Rückkopplung |
| 97, 97$^I$, 97$^{II}$, 97$^{III}$, 97$^{IV}$ | Kolben |
| 99 | B-Seite oder Verbraucherseite |
| 101 | Versorgungsseite |
| 103, 103$^I$, 103$^{II}$, 103$^{III}$, 103$^{IV}$ | Sperrventil, insbesondere federvorgespanntes Sperrventil |
| 105, 105$^I$, 105$^{II}$, 105$^{III}$, 105$^{IV}$, 105$^V$ | Durchflussstellung, insbesondere des Sperrventils |
| 107, 107$^I$, 107$^{IV}$, 107$^V$ | Ablassstellung, insbesondere des Sperrventils |
| 109 | Hydraulikmedium bzw. Hydraulikmittel |

(fortgesetzt)

| Bezugszeichen | Bezeichnung |
|---|---|
| 111, 111$^I$ | Ablaufstellung, insbesondere des 3/3-Ventils |
| 113, 113$^I$ | Mittenstellung, insbesondere Trennstellung, z. B. eines 3/3-Ventils oder eines 4/3-Ventils |
| 115 | Durchflussstellung |
| 117, 117$^I$ | erste Sumpfrückflussleitung |
| 119, 119$^I$, 119$^{II}$ | zweite Sumpfrückflussleitung |
| 121, 121$^I$, 121$^{II}$, 121$^{III}$ | Feder, insbesondere Ventilfeder wie für ein 3/3-Ventil |
| 123, 123$^I$, 123$^{II}$, 123$^{III}$, 123$^{IV}$ | Dämpfer, insbesondere federvorgespannter Dämpfer |
| 125 | erster Drucksensor |
| 127 | zweiter Drucksensor |
| 129, | dritter Drucksensor |
| 129$^I$ | vierter Drucksensor |
| 129$^{II}$ | fünfter Drucksensor |
| 131 | Ablassventil, insbesondere druckgeregeltes Ablassventilbaugruppe |
| 133 | erste Ablassleitung, insbesondere gedrosselte Ablassleitung |
| 134 | zweite Ablassleitung |
| 135 | dritte Ablassleitung, insbesondere Kühlung, z. B. für Kupplungen |
| 137, 137$^I$, 137$^{II}$, 137$^{III}$, 137$^{IV}$ | Druckwaagenventil |
| 139 | Abschnitt, insbesondere der Hydraulikschaltung |
| 141, 141$^I$ | erste Zuleitung |
| 143 | zweite Zuleitung |
| 145 | Arbeitsraum |
| 147 | Linearzylinder |
| 149 | Tank |
| 151 | Rücklaufleitung |
| 153 | Filter |
| 155 | Steuerventil, insbesondere drittes Steuerventil für die Differentialsteuerung |
| 155$^I$ | Steuerventil, insbesondere viertes Steuerventil für eine Kolben-Zylinder Anordnung |
| 15$^{II}$ | Steuerventil, insbesondere fünftes Steuerventil für eine Kolben-Zylinder Anordnung |
| 157 | Steuerventil, insbesondere sechstes Steuerventil für eine Steuerung eines Betätig ungsmechan ism us |
| 157$^I$, 157$^{II}$ | Steuerventil, insbesondere siebtes Steuerventil für eine Steuerung eines Betätig ungsmechan ism us |
| 159 | Vorranghydraulikkreisventil |
| 161 | Druckspeicherbarriere, insbesondere mit einer Rückflusssperre wie einem Rückschlagsventil |
| 163 | Kühler |

(fortgesetzt)

| Bezugszeichen | Bezeichnung |
|---|---|
| 167 | Steuerplatte |
| 169 | Steuerplattenrand |
| 171, 171$^{II}$, 171$^{III}$, 171$^{IV}$, 171$^{V}$, 171$^{VI}$ | Vorsteuerventil |
| 173, 173$^{I}$, 173$^{II}$, 173$^{III}$, 173$^{IV}$, 173$^{V}$, 173$^{VI}$ | Verbindungselement für Leitungen und/oder Hydraulikplatte, z. B. Steckverbindung, insbesondere mit integrierter Drossel |
| 175, 175$^{I}$, 175$^{II}$ | Magnet, insbesondere eines Ventils |
| 177, 177$^{I}$ | Steuerleitung |
| 179 | Arbeitsleitung |
| 181 | Doppelsteuerungsventil |
| 183 | Port, insbesondere Port für einen Arbeitsanschluss |
| 185 | Port, insbesondere Port für einen Tankanschluss |
| 187 | erster Durchmesser, insbesondere der Öffnung eines Ventils, z. B. eines Ports wie dem Port für einen Arbeitsanschluss |
| 189, 189$^{I}$ | zweiter Durchmesser, insbesondere der Bypass-Leitung |
| 191, 191$^{I}$ | dritter Durchmesser |
| 193 | erster Hydraulikmittelfluss, insbesondere Hauptentlastungsfluss |
| 195 | zweiter Hydraulikmittelfluss, insbesondere geringerer als der Hauptentlastungsfluss |
| 197 | dritter Hydraulikmittelfluss, insbesondere Gesamthydraulikmittelfluss |
| 199 | Kraft, insbesondere Kolbenkraft für eine Vorspannung |
|  |  |
| 500 | Antriebsstrang, insbesondere Hybridantriebsstrang |
| 501 | Verbrennungskraftmaschine |
| 503 | Elektromaschine |
| 505 | Doppelkupplungsgetriebe, insbesondere Pkw-Getriebe |
| 507 | erste Kupplung, insbesondere Trennkupplung |
| 509 | zweite Kupplung, insbesondere Trennkupplung |
| 511 | dritte Kupplung, insbesondere Trennkupplung |
| 513 | Kraftflussunterbrechung |
| 515 | Eingangswelle, insbesondere koaxiale Doppelwelle |
| 517 | erste Vorgelegewelle |
| 519 | zweite Vorgelegewelle |
| 521 | Ausgangswelle |
| 523 | Differential, insbesondere in Käfigbauform |
| 525 | erste Schaltmuffe |
| 527 | zweite Schaltmuffe |
| 529 | dritte Schaltmuffe |
| 531 | erster Gangstellzylinder |

(fortgesetzt)

| Bezugszeichen | Bezeichnung |
|---|---|
| 533 | zweiter Gangstellzylinder |
| 535 | erster Kupplungszylinder |
| 537 | zweiter Kupplungszylinder |
| 539 | erstes Zahnradpaar |
| 541 | zweites Zahnradpaar |
| 543 | drittes Zahnradpaar |
| 545 | Getriebegehäuse |
| 547 | Antriebswelle wie eine nach Außen geführte (mehrteilige) Kurbelwelle |

**Patentansprüche**

1. Hydraulikschaltung (1, $1^I$, $1^{II}$, $1^{III}$) eines Doppelkupplungsgetriebes (505), insbesondere eines PKW-Getriebes,

   durch die eine druckregelbare Ansteuerung (3, $3^I$, $3^{II}$, $3^{III}$, $3^{IV}$, $3^V$, $3^{VI}$, $3^{VII}$, $3^{VIII}$) eines ersten, insbesondere einseitig federvorgespannten, Kupplungsaktuators (57) und eines zweiten, insbesondere einseitig federvorgespannten, Kupplungsaktuators (59) mithilfe von einem Druckregelventil (51) strömungsmäßig vor dem ersten Kupplungsaktuator (57) und mithilfe von einem Druckregelventil (53) strömungsmäßig vor dem zweiten Kupplungsaktuator (59) durchführbar ist,
   wobei jedes Druckregelventil (51, 53) in einem eigenständigen Hydraulikzweig (65, 165-1, 165-2) sitzt, dessen Aktuator der Kupplungsaktuator (57, 59) ist,
   wobei wenigstens eines der, insbesondere beiden, Druckregelventile (51, 53) ein Dreizustandsventil (77, $77^I$, $77^{II}$, $77^{III}$, $77^{IV}$) mit einem Port (183) zur Verbindung des Druckregelventils (51, 53) mit seinem Kupplungsaktuator (57, 59) ist,
   wobei ein Zustand ein hydraulischer Sperrzustand (79) ist, und mit einer ersten Bypass-Leitung (67) um das erste Druckregelventil (51) und mit einer zweiten Bypass-Leitung (68) um das zweite Druckregelventil (53), wobei die Druckregelventile (51, 53) proportionale Druckregelventile sind,
   **dadurch gekennzeichnet, dass**
   ein Sperrventil (103, $103^I$, 103", $103^{III}$, $103^{IV}$), das ein wenigstens zwei Zustände umfassendes Sperrventil (105, $105^I$, $105^{II}$, $105^{III}$, $105^{IV}$, 107, $107^I$, $107^{II}$, $107^{III}$, $107^{IV}$, $107^V$) ist, strömungsmäßig vor den Druckregelventilen (51, 53) vorhanden ist,
   wobei der Port (183) wenigstens eines der Druckregelventile (51, 53) einen ersten Durchmesser (187) aufweist, und
   dass in wenigstens einer Bypass-Leitung (67, 68) mit einem zweiten Durchmesser (189, $189^I$) ein Flussregelventil (71, 73, 83, $83^I$) wie ein Rückschlagventil (83, $83^I$) vorhanden ist,
   das bei einer Druckdifferenz in einer Zuleitung (85), die sich von dem Druckregelventil (51, 53) zu dem ihm zugeordneten Kupplungsaktuator (57, 59) erstreckt, in Durchflussrichtung freischaltbar ist,
   wodurch der im Vergleich zum Durchmesser (187) des Ports (183) größere Durchmesser (189, $189^I$) der Bypass-Leitung (67, 68) durchströmbar ist.

2. Hydraulikschaltung (1, $1^I$, $1^{II}$, $1^{III}$) nach Anspruch 1,
   **dadurch gekennzeichnet, dass**
   jede Bypass-Leitung (67, 68, 69) ein Flussregelventil (71, 73, 83, $83^I$), insbesondere ein mechanisch arbeitendes Rückschlagventil (83, $83^I$), aufweist.

3. Hydraulikschaltung (1, $1^I$, $1^{II}$, $1^{III}$) nach einem der vorhergehenden Ansprüche,
   **dadurch gekennzeichnet, dass**

wenigstens zwei der Druckregelventile (51, 53) federvorgespannte 3/3-Elektromagnetventile (91) mit hydraulischer Rückkopplung (95) auf den Kolben (97, 97$^I$, 97") von einer Verbraucherseite (99) des jeweiligen Ventils (51, 53) sind.

4. Hydraulikschaltung (1, 1$^I$, 1$^{II}$, 1$^{III}$) nach einem der vorhergehenden Ansprüche,
**dadurch gekennzeichnet, dass**
das Sperrventil (103, 103$^I$, 103$^{II}$, 103$^{III}$, 103$^{IV}$), das vorzugsweise ein 3/2-federvorgespanntes Elektromagnetventil (93) ist, an einer zentralen Systemdruckleitung (15, 15$^I$, 15$^I$, 15$^{III}$) auf einer Versorgungsseite angeschlossen ist, wobei die Systemdruckleitung (15, 15$^I$, 15$^I$, 15$^{III}$) eine zentrale, leitungsgeführte Druckquelle für Aktuatoren (29, 31, 33, 35, 37, 39, 41, 43, 55, 57, 59, 61, 63) des Doppelkupplungsgetriebes (505) darstellt.

5. Hydraulikschaltung (1, 1$^I$, 1$^{II}$, 1$^{III}$) nach Anspruch 4,
**dadurch gekennzeichnet, dass**

die Systemdruckleitung (15, 15$^I$, 15$^{II}$, 15$^{III}$) eine von wenigstens zwei Pumpen (21, 21$^I$, 23) mit Hydraulikmedium (109) versorgbare Ausgangsdruckleitung ist,
wobei die Pumpen (21, 21$^I$, 23) vorzugsweise hydraulisch durch federvorgespannte Sperrventile (103$^I$, 103$^{II}$, 103$^{IV}$) von der Systemdruckleitung (15, 15$^I$, 15$^{II}$, 15$^{III}$) trennbar sind.

6. Hydraulikschaltung (1, 1$^I$, 1$^{II}$, 1$^{III}$) nach einem der vorhergehenden Ansprüche 3 bis 5,
**dadurch gekennzeichnet, dass**

wenigstens eines der Druckregelventile (51, 53) in seinen Extrempositionen seines Kolbens (97, 97$^I$, 97$^{II}$) hydraulische Durchflussstellungen (115) aufweist und eine Mittenstellung (113, 113$^I$) des Kolbens (97, 97$^I$, 97$^{II}$) eine Trennstellung ist,
die vorzugsweise durch ein Kräftegleichgewicht zwischen einer Federvorspannung und der hydraulischen Rückkopplung (95) einnehmbar ist.

7. Hydraulikschaltung (1, 1$^I$, 1$^{II}$, 1$^{III}$) nach einem der vorhergehenden Ansprüche,
**dadurch gekennzeichnet, dass**
ein federvorgespannter Dämpfer (123, 123$^I$, 123$^{II}$, 123$^{III}$, 123$^{IV}$) in einem Abschnitt, der zu mindestens einem der Kupplungsaktuatoren (57, 59, 61, 63) hinführt, platziert ist, durch den Schwingungen auf einer Leitung zu einem Arbeitsraum (145) des Kupplungsaktuators (57, 59, 61, 63) unterdrückbar sind.

8. Hydraulikschaltung (1, 1$^I$, 1$^{II}$, 1$^{III}$) nach einem der vorhergehenden Ansprüche, **dadurch gekennzeichnet, dass**
sowohl wenigstens eines der Druckregelventile (51, 53) als auch wenigstens das Sperrventil (103, 103$^{III}$, 103$^{IV}$) eine eigenständige Sumpfrückflussleitung (117, 119, 119$^I$) aufweisen.

9. Hydraulikschaltung (1, 1$^I$, 1$^{II}$, 1$^{III}$) nach einem der vorhergehenden Ansprüche 4 bis 8,
**dadurch gekennzeichnet, dass**

in einer ersten Zuleitung (141) zu dem ersten Kupplungsaktuator (57) ein erster Drucksensor (125) vorhanden ist, durch den ein Druck in diesem Kupplungsaktuator (57) messbar ist,
dass in einer zweiten Zuleitung (143) zu dem zweiten Kupplungsaktuator (59) ein zweiter Drucksensor (127) vorhanden ist, durch den ein Druck in diesem Kupplungsaktuator (59) messbar ist,
dass vorzugsweise die Hydraulikzweige (165-1, 165-2, 165-3) zu den Kupplungsaktuatoren (57, 59, 61, 63) stromabwärts ab dem Sperrventil (103, 103$^{III}$, 103$^{IV}$) gleich aufgebaut sind, und
dass in der Systemdruckleitung (15, 15$^I$, 15$^I$, 15$^{III}$) ein dritter Drucksensor (129) vorhanden ist.

10. Notreaktionsverfahren eines Doppelkupplungsgetriebes (505),

insbesondere nach einem der vorhergehenden Ansprüche,
durch das eine Kraftflussunterbrechung (513) durch eine Entlastung eines Arbeitsraums (145) eines Linearzylinders (147), der ein Kupplungsaktuator (57, 59, 61, 63) von wenigstens zwei Kupplungsaktuatoren (57, 59, 61, 63) ist, hergestellt wird,
**dadurch gekennzeichnet, dass**
ein Sperrventil (103, 103$^{III}$, 103$^{IV}$),
das strömungsmäßig vor Druckregelventilen (51, 53) für die Kupplungsaktuatoren (57, 59, 61, 63) vorhanden ist und als "Cut-Off-Ventil" mindestens zwei eindeutige Zustände anbietet,

aktiv in eine Ablaufstellung (107, 107$^I$, 107$^{IV}$, 107$^V$) gefahren wird,
wodurch ein Flussregelventil (71, 73, 83, 83$^I$) in einer parallel zu einem der Druckregelventile (51, 53, 77$^I$) vorhandenen Bypass-Leitung (67, 68, 69), insbesondere mit einem größeren Durchmesser (189, 189$^I$) als ein Durchmesser (187) an einem Port (183) zu dem Druckregelventil (51, 53), in Durchflussstellung gezogen wird, wobei vorzugsweise zwei Flussregelventile, jedes parallel in einer eigenen Bypass-Leitung um jeweils ein einziges Druckregelventil in Durchflussstellung gezogen werden, und wodurch die Kraftflussunterbrechung (513), insbesondere innerhalb eines Zeitraums von nicht mehr als 200 ms, hergestellt wird.

**Claims**

1. Hydraulic circuit (1, 1$^I$, 1$^{II}$, 1$^{III}$) of a dual clutch transmission (505),

    in particular of a car transmission,
    by which a pressure-controllable actuation (3, 3$^I$, 3$^{II}$, 3$^{III}$, 3$^{IV}$, 3$^V$, 3$^{VI}$, 3$^{VII}$, 3$^{VIII}$) of a first clutch actuator (57), which in particular is spring-loaded on one side,
    and of a second clutch actuator (59),
    which in particular is spring-loaded on one side,
    can be carried out by means of a pressure control valve (51) upstream of the first clutch actuator (57) and
    by means of a pressure control valve (53) upstream of the second clutch actuator (59), wherein each pressure control valve (51, 53) is seated in a separate hydraulic branch (65, 165-1, 165-2), the actuator of which is the clutch actuator (57, 59),
    wherein at least one, in particular both, of the pressure control valves (51, 53) is a three-state valve (77, 77$^I$, 77$^{II}$, 77$^{III}$, 77$^{IV}$) having a port (183) for connecting the pressure control valve (51, 53) to its clutch actuator (57, 59),
    wherein one state is a hydraulic cut-off state (79), and
    having a first bypass line (67) around the first pressure control valve (51) and
    having a second bypass line (68) around the second pressure control valve (53),
    wherein the pressure control valves (51, 53) are proportional pressure control valves,
    **characterized in that**
    a cut-off valve (103, 103$^I$, 103$^{II}$, 103$^{III}$, 103$^{IV}$) is provided upstream of the pressure control valves (51, 53), said cut-off valve being an at least two-state cut-off valve (105, 105$^I$, 105$^{II}$, 105$^{III}$, 105$^{IV}$, 107, 107$^I$, 107$^{II}$, 107$^{III}$, 107$^{IV}$, 107$^V$),
    wherein the port (183) of at least one of the pressure control valves (51, 53) has a first diameter (187), and
    **in that** a flow control valve (71, 73, 83, 83$^I$), such as a check valve (83, 83$^I$), is provided in at least one bypass line (67, 68) that has a second diameter (189, 189$^I$),
    which flow control valve can be opened in a throughflow direction when there is a pressure difference in a supply line (85) extending from the pressure control valve (51, 52) to the associated clutch actuator (57, 59),
    as a result of which a flow can be permitted to pass through the diameter (189, 189$^I$) of the bypass line (67, 68), which is larger in comparison with the diameter (187) of the port (183).

2. Hydraulic circuit (1, 1$^I$, 1$^{II}$, 1$^{III}$) according to claim 1,
    **characterized in that**
    each bypass line (67, 68, 69) has a flow control valve (71, 73, 83, 83$^I$), in particular a mechanical check valve (83, 83$^I$).

3. Hydraulic circuit (1, 1$^I$, 1$^{II}$, 1$^{III}$) according to any one of the preceding claims,
    **characterized in that**
    at least two of the pressure control valves (51, 53) are spring-loaded 3/3-way solenoid valves (91) with hydraulic feedback (95) to the piston (97, 97', 97") from a load side (99) of the respective valve (51, 53).

4. Hydraulic circuit (1, 1$^I$, 1$^{II}$, 1$^{III}$) according to any one of the preceding claims,
    **characterized in that**

    the cut-off valve (103, 103$^I$, 103$^{II}$, 103$^{III}$, 103$^{IV}$), which is preferably a 3/2-way spring-loaded solenoid valve (93), is connected to a central system pressure line (15, 15$^I$, 15", 15$^{III}$) on a supply side,
    wherein the system pressure line (15, 15$^I$, 15$^{II}$, 15$^{III}$) constitutes a central, line-guided pressure source for actuators (29, 31, 33, 35, 37, 39, 41, 43, 55, 57, 59, 61, 63) of the dual clutch transmission (505).

5. Hydraulic circuit (1, 1$^I$, 1$^{II}$, 1$^{III}$) according to claim 4,
   **characterized in that**

   the system pressure line (15, 15$^I$, 15$^{II}$, 15$^{III}$) is an output pressure line that can be supplied with hydraulic medium (109) by at least two pumps (21, 21$^I$, 23),
   wherein the pumps (21, 21$^I$, 23) can preferably be hydraulically disconnected from the system pressure line (15, 15$^I$, 15$^{II}$, 15$^{III}$) by spring-loaded cut-off valves (103$^I$, 103$^{II}$, 103$^{IV}$).

6. Hydraulic circuit (1, 1$^I$, 1$^{II}$, 1$^{III}$) according to any one of the preceding claims 3 to 5,
   **characterized in that**

   at least one of the pressure control valves (51, 53) has hydraulic throughflow positions (115) in the extreme positions of its piston (97, 97$^I$, 97$^{II}$), and a middle position (113, 113$^I$) of the piston (97, 97$^I$, 97$^{II}$) is a disconnected position,
   which can preferably be assumed as a result of force equilibrium between a spring load and the hydraulic feedback (95).

7. Hydraulic circuit (1, 1$^I$, 1$^{II}$, 1$^{III}$) according to any one of the preceding claims,
   **characterized in that**
   a spring-loaded damper (123, 123$^I$, 123$^{II}$, 123$^{III}$, 123$^{IV}$) is placed in a section that leads to at least one of the clutch actuators (57, 59, 61, 63), by means of which the vibrations on a line to a working space (145) of the clutch actuator (57, 59, 61, 63) can be suppressed.

8. Hydraulic circuit (1, 1$^I$, 1$^{II}$, 1$^{III}$) according to any one of the preceding claims,
   **characterized in that**
   both at least one of the pressure control valves (51, 53) and also at least the cut-off valve (103, 103$^{III}$, 103$^{IV}$) have a separate sump return line (117, 119, 119$^I$).

9. Hydraulic circuit (1, 1$^I$, 1$^{II}$, 1$^{III}$) according to any one of the preceding claims 4 to 8,
   **characterized in that**

   a first pressure sensor (125) is provided in a first supply line (141) to the first clutch actuator (57), by means of which a pressure in this clutch actuator (57) can be measured,
   **in that** a second pressure sensor (127) is provided in a second supply line (143) to the second clutch actuator (59), by means of which a pressure in this clutch actuator (59) can be measured,
   **in that** preferably the hydraulic branches (165-1, 165-2, 165-3) to the clutch actuators (57, 59, 61, 63) are of equivalent construction downstream of the cut-off valve (103, 103$^{III}$, 103$^{IV}$), and
   **in that** a third pressure sensor (129) is provided in the system pressure line (15, 15$^I$, 15$^{II}$ 15$^{III}$).

10. Emergency response method for a dual clutch transmission (505),

    in particular according to any one of the preceding claims,
    by which a power flow interruption (513) is brought about by relieving the pressure in a working space (145) of a linear cylinder (147), which is one clutch actuator (57, 59, 61, 63) out of at least two clutch actuators (57, 59, 61, 63),
    **characterized in that**
    a cut-off valve (103, 103$^{III}$, 103$^{IV}$),
    which is provided upstream of pressure control valves (51, 53) for the clutch actuators (57, 59, 61, 63) and as a cut-off valve offers at least two unequivocal states,
    is actively moved into a drain position (107, 107$^I$, 107$^{IV}$, 107$^V$),
    as a result of which a flow control valve (71, 73, 83, 83$^I$) in a bypass line (67, 68, 69) parallel to one of the pressure control valves (51, 53, 77$^I$), which bypass line in particular has a diameter (189, 189$^I$) larger than a diameter (187) at a port (183) to the pressure control valve (51, 53), is drawn into a throughflow position,
    wherein preferably two flow control valves, each parallel in a separate bypass line around a respective single pressure control valve, are drawn into a throughflow position, and as a result of which the power flow interruption (513) is brought about, in particular within a period of time of no more than 200 ms.

**Revendications**

1.  Circuit hydraulique (1, 1', 1″, 1‴) d'une transmission à double embrayage (505), en particulier d'une transmission automobile, par lequel une commande réglable en pression (3, 3', 3″, 3‴, 3$^{IV}$, 3$^{V}$, 3$^{VI}$, 3$^{VII}$, 3$^{VIII}$) d'un premier actionneur d'embrayage (57), en particulier précontraint par un ressort d'un côté, et d'un second actionneur d'embrayage (59), en particulier précontraint par un ressort d'un côté, peut être exécutée à l'aide d'une soupape de régulation de pression (51) pour ce qui est de l'écoulement devant le premier actionneur d'embrayage (57) et à l'aide d'une soupape de régulation de pression (53) pour ce qui est de l'écoulement devant le second actionneur d'embrayage (59), cependant que chaque soupape de régulation de pression (51, 53) se trouve dans un branchement hydraulique autonome (65, 165-1, 165-2) dont l'actionneur est l'actionneur d'embrayage (57, 59), cependant qu'au moins l'une des soupapes de régulation de pression (51, 53), en particulier les deux, est une soupape à trois états (77, 77$^{I}$, 77$^{II}$, 77$^{III}$, 77$^{IV}$) avec un orifice (183) pour la connexion de la soupape de régulation de pression (51, 53) avec son actionneur d'embrayage (57, 59), cependant qu'un état est un état de blocage hydraulique (79), et avec une première conduite de dérivation (67) qui contourne la première soupape de régulation de pression (51) et avec une seconde conduite de dérivation (68) qui contourne la seconde soupape de régulation de pression (53), les soupapes de régulation de pression (51, 53) étant des soupapes de régulation de pression proportionnelles, **caractérisé en ce**

    **qu'**il existe une soupape de coupure (103, 103$^{I}$, 103$^{II}$, 103$^{III}$, 103$^{IV}$), qui est une soupape de coupure qui comprend au moins deux états (105, 105$^{I}$, 105″, 105$^{II}$, 105$^{IV}$, 107, 107$^{I}$, 107$^{II}$, 107$^{III}$, 107$^{IV}$, 107$^{V}$) pour ce qui est de l'écoulement devant les soupapes de régulation de pression (51, 53), cependant que l'orifice (183) d'au moins l'une des soupapes de régulation de pression (51, 53) présente un premier diamètre (187) et
    **qu'**il existe une soupape de réglage de débit (71, 73, 83, 83$^{I}$) comme un clapet anti-retour (83, 83$^{I}$) dans au moins une conduite de dérivation (67, 68) avec un second diamètre (189, 189$^{I}$), soupape de réglage de débit qui peut être débloquée dans le sens de l'écoulement en présence d'une différence de pression dans une conduite d'amenée (85) qui s'étend de la soupape de régulation de pression (51, 53) vers l'actionneur d'embrayage qui lui est associé (57, 59) si bien que le plus grand diamètre (189, 189$^{I}$) de la conduite de dérivation (67, 68) en comparaison avec le diamètre (187) de l'orifice (183) peut être traversé par l'écoulement.

2.  Circuit hydraulique (1, 1', 1″, 1‴) selon la revendication 1, **caractérisé en ce que** chaque conduite de dérivation (67, 68, 69) présente une soupape de réglage de débit (71, 73, 83, 83$^{I}$), en particulier un clapet anti-retour (83, 83$^{I}$) qui fonctionne mécaniquement.

3.  Circuit hydraulique (1, 1', 1″, 1‴) selon l'une des revendications précédentes, **caractérisé en ce qu'**au moins deux des soupapes de régulation de pression (51, 53) sont des soupapes électromagnétiques à 3/3 voies précontraintes par ressort (91) avec rétroaction hydraulique (95) sur le piston (97, 97$^{I}$, 97$^{II}$) d'un côté consommateur (99) de la soupape respective (51, 53).

4.  Circuit hydraulique (1, 1', 1″, 1‴) selon l'une des revendications précédentes, **caractérisé en ce que** la soupape de coupure (103, 103$^{I}$, 103$^{II}$, 103$^{III}$, 103$^{IV}$), qui est de préférence une soupape électromagnétique à 3/2 voies précontrainte par ressort (93) est raccordée à une conduite de pression système centrale (15, 15$^{I}$, 15$^{II}$, 15$^{III}$) sur un côté consommateur, la conduite de pression système (15, 15$^{I}$, 15$^{II}$, 15$^{III}$) constituant une source de pression centrale par conduction pour des actionneurs (29, 31, 33, 35, 37, 39, 41, 43, 55, 57, 59, 61, 63) de la transmission à double embrayage (505).

5.  Circuit hydraulique (1, 1', 1″, 1‴) selon la revendication 4, **caractérisé en ce que** la conduite de pression système centrale (15, 15$^{I}$, 15$^{II}$, 15$^{III}$) est une conduite de pression de sortie qui peut être alimentée en fluide hydraulique (109) par au moins deux pompes (21, 21$^{I}$, 23), de préférence les pompes (21, 21$^{I}$, 23) pouvant être séparées de la conduite de pression système (15, 15$^{I}$, 15$^{II}$ 15$^{III}$) hydrauliquement par des soupapes de coupure précontraintes par ressort (103$^{I}$, 103$^{II}$, 103$^{IV}$).

6.  Circuit hydraulique (1, 1', 1″, 1‴) selon l'une des revendications précédentes 3 à 5, **caractérisé en ce qu'**au moins l'une des soupapes de régulation de pression (51, 53) présente, dans ses positions extrêmes de son piston (97, 97$^{I}$, 97$^{II}$), des positions de débit hydraulique (115) et une position médiane (113, 113$^{I}$) du piston (97, 97$^{I}$, 97$^{II}$) est une position de séparation qui peut être prise de préférence par un équilibre des forces entre une précontrainte par ressort et la rétroaction hydraulique (95).

**7.** Circuit hydraulique (1, 1', 1", 1''') selon l'une des revendications précédentes, **caractérisé en ce qu'**un amortisseur précontraint par ressort (123, 123$^I$, 123$^{II}$, 123$^{III}$, 123$^{IV}$) est placé dans un tronçon qui mène vers au moins l'un des actionneurs d'embrayage (57, 59, 61, 63), amortisseur par lequel des oscillations sur une conduite vers une chambre de travail (145) de l'actionneur d'embrayage (57, 59, 61, 63) peuvent être supprimées.

**8.** Circuit hydraulique (1, 1', 1", 1''') selon l'une des revendications précédentes, **caractérisé en ce qu'**aussi bien au moins l'une des soupapes de régulation de pression (51, 53) qu'au moins la soupape de coupure (103, 103$^{III}$, 103$^{IV}$) présentent une conduite autonome de reflux puisard (117, 119, 119$^I$).

**9.** Circuit hydraulique (1, 1', 1", 1''') selon l'une des revendications précédentes 4 à 8, **caractérisé en ce qu'**il existe un premier capteur de pression (125) dans une première conduite d'amenée (141) vers le premier actionneur d'embrayage (57), capteur par lequel une pression peut être mesurée dans cet actionneur d'embrayage (57), qu'il existe un second capteur de pression (127) dans une seconde conduite d'amenée (143) vers le second actionneur d'embrayage (59), capteur par lequel une pression peut être mesurée dans cet actionneur d'embrayage (59), que de préférence les branchements hydrauliques (165-1, 165-2, 165-3) vers les actionneurs d'embrayage (57, 59, 61, 63) sont constitués de manière similaire en aval à partir de la soupape de coupure (103, 103$^{II}$, 103$^{IV}$) et qu'il existe un troisième capteur de pression (129) dans la conduite de pression système (15, 15$^I$, 15$^{II}$, 15$^{III}$).

**10.** Procédé de réaction d'urgence d'une transmission à double embrayage (505), en particulier selon l'une des revendications précédentes, par lequel une interruption du flux de force (513) est établie par un délestage de la chambre de travail (145) d'un vérin linéaire (147) qui est un actionneur d'embrayage (57, 59, 61, 63) d'au moins deux actionneurs d'embrayage (57, 59, 61, 63),
**caractérisé en ce qu'**une soupape de coupure (103, 103$^{II}$, 103$^{IV}$) qui existe pour ce qui est de l'écoulement devant les soupapes de régulation de pression (51, 53) pour les actionneurs d'embrayage (57, 59, 61, 63) et qui offre, en tant que soupape de coupure, au moins deux états univoques, est déplacée activement dans une position de sortie (107, 107$^I$, 107$^{II}$, 107$^{IV}$, 107$^V$), si bien qu'une soupape de réglage de débit (71, 73, 83, 83$^I$) est tirée en position de passage dans une conduite de dérivation (67, 68, 69) qui existe parallèlement à l'une des soupapes de régulation de pression (51, 53, 77$^I$), en particulier avec un diamètre plus grand (189, 189$^I$) qu'un diamètre (187) à un orifice (183) vers la soupape de régulation de pression (51, 53), cependant que de préférence deux soupapes de réglage de débit sont tirées en position de passage, chacune parallèlement dans une conduite de dérivation propre qui contourne respectivement une soupape de régulation de pression unique et si bien que l'interruption du flux de force (513) est établie, en particulier pendant une période de temps inférieure à 200 ms.

Figur 1

Figur 2

Figur 3

EP 3 516 269 B1

Figur 4

Figur 5

Figur 6

Figur 7

Figur 8

Figur 9

Figur 10

Figur 11

Figur 12

EP 3 516 269 B1

Figur 13

Figur 14

Figur 15

Figur 16

EP 3 516 269 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10134115 A1
- DE 102005015911 A1
- DE 102011100857 A1
- WO 2011015182 A2
- DE 102007023072 A1
- DE 102013224244 A1
- WO 2004097265 A1
- DE 102011100799 A1
- US 7695388 B2

- EP 1450076 A2
- EP 26112003 A2
- DE 102010032657 A1
- DE 26112009 A1
- DE 102010037243 A1
- EP 2410212 B1
- DE 102009005753 A1
- DE 102013219386
- DE A1